# EUROPEAN PATENT APPLICATION

(11) **EP 3 882 757 A1**
(43) Date of publication of application: **22.09.2021**
(21) Application number: 21158741.5
(22) Date of filing: 23.02.2021
(51) Int. Cl.: G06F 3/0488, G06F 40/171, G06F 40/274

(54) **DISPLAY DEVICE, DISPLAY METHOD, AND PROGRAM**

(30) Priority: 20.03.2020 JP 2020051373; 10.02.2021 JP 2021019705
(71) Applicant: Ricoh Company, Ltd., Tokyo 143-8555 (JP)
(72) Inventor: TSUJI, Shigekazu, Tokyo, 143-8555 (JP)
(74) Representative: Watkin, Timothy Lawrence Harvey

(57) **Abstract**

A display device for displaying a character string, includes a display configured to display one or more characters converted from handwritten data, and a handwritten input display control part configured to display a display element or tag indicating a position of the one or more characters with respect to the character string.

## Description

### BACKGROUND OF THE INVENTION

### 1. Field of the Invention

The present disclosure relates to display devices, display methods, and programs.

### 2. Description of the Related Art

In an example of related art, a display device converts handwritten data into characters or the like using handwriting recognition technology, and displays the characters or the like, is known. When a user makes the handwriting in a predetermined vertical or horizontal direction, the display device can convert the handwritten data into the characters or the like with a high precision.

A technique for converting the handwritten data into the character string or the like without restricting the direction of the handwriting is proposed in Japanese Patent No. 3599927, for example. Japanese Patent No. 3599927 proposes a technique for identifying the direction of the handwriting, and performing a kana-kanji conversion or a predictive conversion based on the identified direction.

However, there is a problem in the related art in that there is no display of a display element or tag which indicates the position of one or more characters with respect to a character string. For example, the user may wish to insert one or more characters into the character string. In word processor software, the user can easily insert the characters or the like by moving a cursor to an inserting position, and inputting the characters or the like from a keyboard. However, in the case of the display device to which one or more characters are input through handwriting recognition, the display device does not display the position of the one or more characters with respect to the character string.

### SUMMARY

According to one aspect of the embodiments, a display device for displaying a first character string, includes a display configured to display one or more characters converted from handwritten data; and a handwritten input display control part configured to display a display element or tag indicating a position of the one or more characters with respect to the first character string.

According to another aspect of the embodiments, a display method to be implemented by a display device which displays a character string, includes displaying, on a display, one or more characters converted from handwritten data; and displaying, on the display, a display element or tag indicating a position of the one or more characters with respect to the character string.

According to a further aspect of the embodiments, a program which, when executed by a computer, causes the computer to perform a process including displaying, on a display, one or more characters converted from handwritten data; and displaying, on the display, a display element or tag indicating a position of the one or more characters with respect to the character string.

Other features of the embodiments will be apparent from the following detailed description when read in conjunction with the accompanying drawings.

### BRIEF DESCRIPTION OF THE DRAWINGS

FIG. 1 is a diagram for explaining a comparative example related to insertion of a character into a character string.
FIG. 2 is a diagram for explaining a method of inserting a character into a character string according to one embodiment.
FIG. 3A, FIG. 3B, FIG. 3C, and FIG. 3D are diagrams illustrating examples of an overall configuration of a display device.
FIG. 4 is a perspective view illustrating an example of a pen.
FIG. 5 is a diagram illustrating an example of a hardware configuration of the display device.
FIG. 6 is a functional block diagram illustrating an example of functional blocks related to user authentication included in the display device.
FIG. 7 is a diagram illustrating an example of defined control data.
FIG. 8 is a diagram illustrating an example of dictionary data of a handwriting recognition dictionary part.
FIG. 9 is a diagram illustrating an example of dictionary data of a character string conversion dictionary part.
FIG. 10 is a diagram illustrating an example of dictionary data of a predicted conversion dictionary part.
FIG. 11A and FIG. 11B are diagrams illustrating an example of operation command definition data and system definition data stored in an operation command definition part.
FIG. 12 is a diagram illustrating an example of the operation command definition data when a selected data selected by handwritten data are present.
FIG. 13 is a diagram illustrating an example of an operation guide and selectable candidates displayed by the operation guide.
FIG. 14A, FIG. 14B, FIG. 14C, and FIG. 14D are diagrams for explaining an example of specifying the selected data.
FIG. 15A and FIG. 15B are diagrams illustrating display examples of candidates of operation commands based on the operation command definition data when the handwritten data are present.
FIG. 16A and FIG. 16B are diagram illustrating display examples of the candidates of the operation commands based on the operation command definition data when the handwritten data are present.
FIG. 17 is a diagram illustrating an example of decided data selected by a long press of the pen.
FIG. 18 is a diagram for explaining an example of an inserting destination of a character.
FIG. 19 is a diagram illustrating an example of the decided data and the handwritten data.
FIG. 20 is a diagram illustrating an example of the operation guide displayed with respect to "regular".
FIG. 21 is a diagram illustrating a state where accepted selection of "regular" is displayed.
FIG. 22 is a diagram illustrating an example of an arrow displayed in a state where selected data "regular" is selected by a user.
FIG. 23A and FIG. 23B are diagrams illustrating examples of the position of the arrow.
FIG. 24 is a diagram illustrating the character string inserted with "regular" as the decided data.
FIG. 25 is a diagram illustrating an example of horizontally written decided data and a vertically written selected data.
FIG. 26 is a diagram illustrating an example of an operation guide when the user writes vertically.
FIG. 27 is a diagram illustrating an example of an insertion symbol indicating the inserting destination, displayed beside the decided data.
FIG. 28 is a sequence diagram (part 1) for explaining an example of a process in which the display device displays character string candidates and operation command candidates.
FIG. 29 is a sequence diagram (part 2) for explaining the example of the process in which the display device displays the character string candidates and the operation command candidates.
FIG. 30 is a sequence diagram (part 3) for explaining the example of the process in which the display device displays the character string candidates and the operation command candidates.
FIG. 31 is a sequence diagram (part 4) for explaining the example of the process in which the display device displays the character string candidates and the operation command candidates.
FIG. 32 is a sequence diagram (part 5) for explaining the example of the process in which the display device displays the character string candidates and the operation command candidates.
FIG. 33 is a sequence diagram (part 6) for explaining the example of the process in which the display device displays the character string candidates and the operation command candidates.
FIG. 34 is a flowchart for explaining an example of a process of the handwritten input display control part which displays the arrow indicating the inserting destination.
FIG. 35 is a diagram explaining the method of inserting characters into the character string when performing an English conversion.
FIG. 36 is a diagram illustrating an example of defined control data used for the English conversion.
FIG. 37 is a diagram illustrating an example of dictionary data of the handwriting recognition dictionary part used for the English conversion.
FIG. 38 is a diagram illustrating an example of the dictionary data of the character string conversion dictionary part used for the English conversion.
FIG. 39 illustrates an example of the dictionary data of the predicted conversion dictionary part used for the English conversion.
FIG. 40A and FIG. 40B are diagrams illustrating an example of the operation command definition data for a case where no selected data is present when performing the English conversion.
FIG. 41 is a diagram illustrating an example of the operation command definition data for a case where a selected data are present when performing the English conversion.
FIG. 42 is a diagram illustrating an example of the operation guide and the selectable candidates displayed by the operation guide when performing the English conversion.
FIG. 43A and FIG. 43B are diagrams for explaining a specifying example of the selected data when performing the English conversion.
FIG. 44A and FIG. 44B are diagrams illustrating display examples of the operation command candidates based on the operation command definition data for the case where the handwritten data illustrated in FIG. 43A and FIG. 43B are present when performing the English conversion, respectively.
FIG. 45 is a diagram illustrating an example of the decided data selected by the long press of the pen when performing the English conversion.
FIG. 46 is a diagram for explaining an example of the inserting destination of the characters when performing the English conversion.
FIG. 47 is a diagram illustrating an example of the decided data and the handwritten data.
FIG. 48 is a diagram illustrating an example of the operation guide displayed with respect to "reg".
FIG. 49 is a diagram illustrating a state where the accepted selection of "regular" is displayed.
FIG. 50 is a diagram illustrating an example of the arrow displayed in a state where the selected data "regular" is selected by the user.
FIG. 51A and FIG. 51B are diagrams illustrating examples of the position of the arrow.
FIG. 52 is a diagram illustrating the character string inserted with "regular" as the decided data.
FIG. 53 is a diagram illustrating an example of the insertion symbol indicating the inserting destination, displayed beside the decided data when performing the English conversion.
FIG. 54 is a diagram explaining the method of inserting characters into the character string when performing a Chinese conversion.
FIG. 55 is a diagram illustrating an example of defined control data used for the Chinese conversion.
FIG. 56 is a diagram illustrating an example of dictionary data of the handwriting recognition dictionary part used for the Chinese conversion.
FIG. 57 is a diagram illustrating an example of the dictionary data of the character string conversion dictionary part used for the Chinese conversion.
FIG. 58 illustrates an example of the dictionary data of the predicted conversion dictionary part used for the Chinese conversion.
FIG. 59A and FIG. 59B are diagrams illustrating an example of the operation command definition data for the case where no selected data is present when performing the Chinese conversion.
FIG. 60 is a diagram illustrating an example of the operation command definition data for a case where the selected data are present when performing the Chinese conversion.
FIG. 61 is a diagram illustrating an example of the operation guide and the selectable candidates displayed by the operation guide when performing the Chinese conversion.
FIG. 62A and FIG. 62B are diagrams for explaining a specifying example of the selected data when performing the Chinese conversion.
FIG. 63A and FIG. 63B are diagrams illustrating display examples of the operation command candidates based on the operation command definition data doe the case where the handwritten data illustrated in FIG. 62A and FIG. 62B are present when performing the Chinese conversion, respectively.
FIG. 64 is a diagram illustrating an example of the decided data selected by the long press of the pen when performing the Chinese conversion.
FIG. 65 is a diagram for explaining an example of the inserting destination of the characters when performing the Chinese conversion.
FIG. 66 is a diagram illustrating an example of the decided data and the handwritten data.
FIG. 67 is a diagram illustrating an example of the operation guide displayed with respect to "regular".
FIG. 68 is a diagram illustrating a state where the accepted selection of "regular" is displayed.
FIG. 69 is a diagram illustrating an example of the arrow displayed in a state where the selected data "regular" is selected by the user.
FIG. 70A and FIG. 70B are diagrams illustrating examples of the position of the arrow.
FIG. 71 is a diagram illustrating the character string inserted with "regular" as the decided data.
FIG. 72 is a diagram illustrating an example of the insertion symbol indicating the inserting destination, displayed beside the decided data.
FIG. 73 is a diagram illustrating another configuration example of the display device.
FIG. 74 is a diagram illustrating still another configuration example of the display device.
FIG. 75 is a diagram illustrating a further configuration example of the display device.
FIG. 76 is a diagram illustrating another configuration example of the display device.

### DESCRIPTION OF THE EMBODIMENTS

Embodiments will hereinafter be described with reference to the drawings. In drawings, the same constituent elements are designated by the same reference numerals, and a repeated description of the same constituent elements may be omitted.

One data of the embodiments is to provide a display device capable of displaying a display element or tag which indicates the position of one or more characters with respect to a character string.

Hereinafter, a display device, a display method employed by the display device, and a program according to the embodiments of the present invention will be described with reference to the drawings.

### [First Embodiment]

### <Overview of Character Insertion>

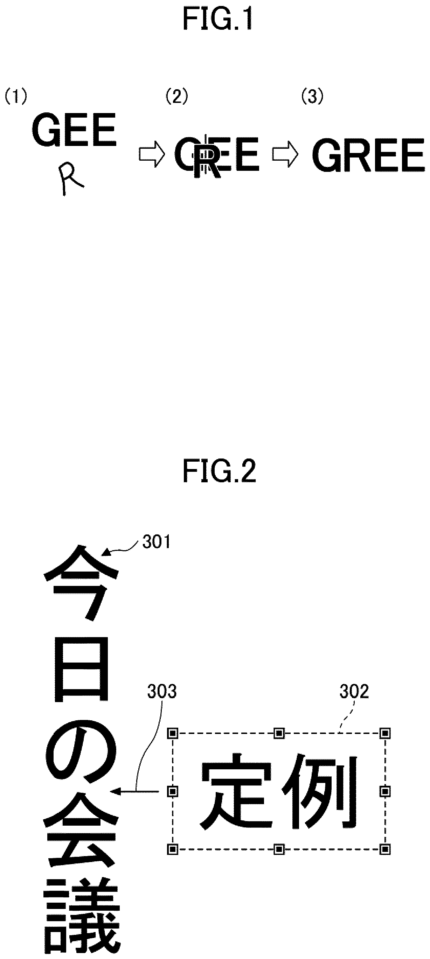

First, a comparative example will be described for reference will be described before describing the embodiments. It should be noted that the comparative example is related art, and not necessarily known in the art or prior art. FIG. 1 is a diagram for explaining the comparative example related to inserting a character into a character string.

FIG. 1 illustrates the following states (1), (2), and (3).
(1): The state where a user inputs handwritten data to the display device, and the display device converts the handwritten data into a character string "GEE" to display the same.
(2): The state where the user notices that a character "R" is missing between "G" and "E", handwrites "R" to be recognized, and drags and drops the recognized "R" between "G" and "E".
(3): The state where the display device determines that "R" is to be inserted between "G" and "E" based on the dropped coordinates of "R", erases all, and displays "GREE".

Hence, in the comparative example, the user may insert the horizontally written character which is recognized by character recognition by performing a drag-and-drop operation, but if a plurality of characters are to be inserted, for example, the user may become confused about which of the plurality of characters is to be inserted at the inserting position.

According to one embodiment, the display device displays a display element or tag which indicates the position of one or more characters with respect to a character string, to clarify the inserting position of one or more characters with respect to the character string.

FIG. 2 is a diagram for explaining a method of inserting the character into the character string according to one embodiment. FIG. 2 illustrates an example where the user inputs vertically handwritten data to the display device, and the display device converts the handwritten data into a character string " 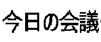 " 301 which is a combination of Kanji and Hiragana characters pronounced "kyo no kaigi" and means "today's meeting". The user notices that a word " 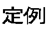 ", pronounced "teirei no" and meaning "regular", is missing between " 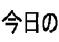 " (today's) and " 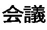 " (meeting), and handwrites " 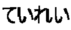 " in Hiragana characters, and causes the display device to convert the handwritten characters into Kanji characters " 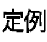 " 302. When the user selects or begins to drag the Kanji characters " 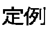 " 302, the display device displays an arrow 303 indicating an inserting destination (or inserting position). The arrow 303 has a base end facing the Kanji characters " 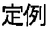 " 302, and a pointing end pointing toward the character string to which the Kanji characters " 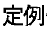 " 302 are to be inserted, to clarify the position of the Kanji characters " 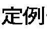 " 302 with respect to the character string " 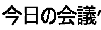 " 301. In addition, the arrow 303 enables the user to easily comprehend the inserting position. The user drags the Kanji characters " 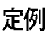 " 302, and drops the pointing end of the arrow 303 to a position aligned to a desired inserting position.

As described above, the display device according to this embodiment displays the arrow 303 (an example of the display element or tag) indicating the position of one or more characters with respect to the character string, thereby facilitating the user to insert the characters or the like into the desired inserting position. Hence, it is possible to clarify the relative position of the character string and the one or more characters.

### <Terminologies>

In the Japanese language, there are Hiragana characters, Katakana characters, and Kanji characters, instead of alphabets. A Japanese word or term may be spelled by one or more Hiragana characters, Katakana characters, Kanji characters, or a combination of at least two of such Japanese characters (hereinafter also simply referred to as "characters" or "character string" unless otherwise indicated). Further, Japanese text data may have one of two orientations, and the Japanese characters may be written in a horizontal direction from left to right, or in a vertical direction from top to bottom.

"Decided data" refer to data in which a sequence of coordinate points is converted into information, such as character codes or the like, that can be processed on a computer, through character recognition. For the decided data, it does not matter whether or not a correct conversion is performed. This embodiment will be described mainly using characters, however, numerical values, symbols, alphabets, or the like may be used for the insertion process.

"Handwritten data" refer to data displaying the sequence of coordinate points as a locus when the user continuously moves an input device or means on the display device. A series of operations in which the user presses the input device or means against the display device, continuously moves the input device or means, and thereafter separates the input device or means away from the display device, will be referred to as a stroke, and the data handwritten by the stroke will be referred to as stroke data. The handwritten data includes one or more stroke data.

"Insertion" not only refers to the insertion of one or more characters in a character string or text at a position between two characters, but also to the insertion one or more characters at the beginning or the end of the character string.

"Selected data" refer to one or more characters selected by the user according to an operation method determined by the display device.

"Dragging" refers to an operation of moving a character while the character is selected, such as an operation of moving a mouse while pressing a mouse button, for example. "Dropping" refers to an operation of releasing the dragged character at a target position, such as an operation of releasing the mouse button at the target position, for example. The data selected by the dragging is moved. The dropping stops the display device from detecting the coordinates.

The "display element or tag" refers to a symbol, graphics, or image displayed on a screen. It is sufficient for the display element or tag to clarify the position (hereinafter also referred to as "inserting destination") of one or more characters to be the inserted with respect to the character string. The display element or tag may be related to the character inserting position with respect to the character string, related to the position of one or more characters in the character string, or for supporting or assisting the character insertion.

The "position of one or more characters with respect to the character string" refers to the relative position of the character string and one or more characters. This position may be the inserting position of one or more characters with respect to the character string, a replacing position, or the like.

"Performing a process using one or more characters with respect to the character string" includes inserting, replacing, reconversion after the inserting or replacing, or the like of one or more characters with respect to the character string, for example. It is sufficient for the process to use one or more characters and the character string. In addition, the display device may display the character string by highlighting or blinking display. In the case of replacing, the characters in the character string may be selected.

### <Overall Configuration of Display Device>

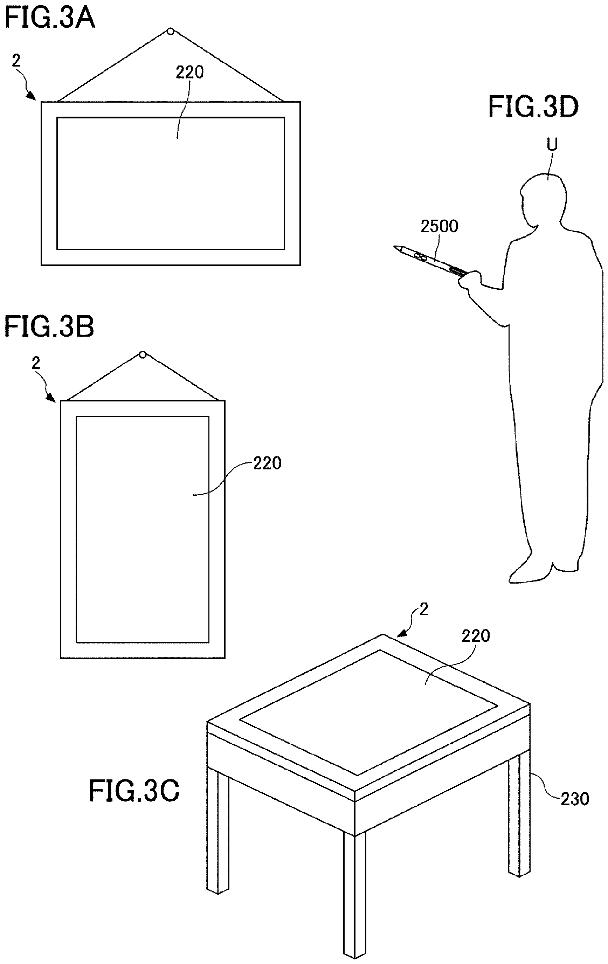

An overall configuration of the display device 2 according to this embodiment will be described with reference to FIG. 3A through FIG. 3D. FIG. 3A through FIG. 3C are diagrams illustrating the overall configurations of the display device 2, and FIG. 3D is a diagram illustrating a user U holding the pen 2500. FIG. 3A illustrates an example of the display device 2 which is used as an electronic whiteboard having a horizontally elongated shape and hanging on a wall.

The display device 2 displays handwritten data of the handwriting, based on the position of the input device or means making contact with a display which is integral with a touchscreen panel. The display device 2 is may also be referred to as a handwriting input device because the display device 2 can input the handwritten data of the handwriting that is input (handwritten) by the user.

As illustrated in FIG. 3A, a display 220 is provided at an upper portion of the display device 2. The user U, illustrated in FIG. 3D, can handwrite (also referred to as input or draw) characters or the like on the display 220 using the pen 2500.

FIG. 3B illustrates an example of the display device 2 which is used as an electronic whiteboard having a vertically elongated shape and hanging on the wall.

FIG. 3C illustrates an example of the display device 2 which is placed flat on a desk 230. Because the display device 2 has a thickness of approximately 1 cm, it is unnecessary to adjust the height of the desk 230 even if the display device 2 is placed flat on the desk 230, which may be an ordinary or general-purpose desk. In this example, the user U can easily move around the desk 230.

### <Example of Appearance of Pen>

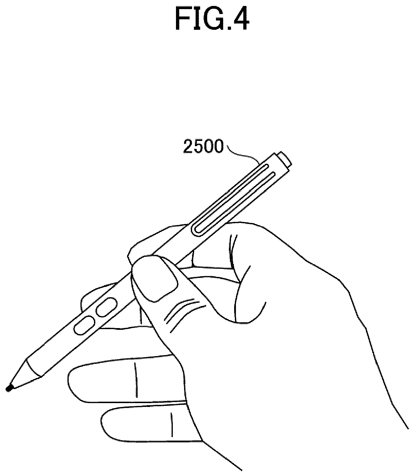

FIG. 4 illustrates a perspective view of an example of a pen 2500. In the example illustrated in FIG. 4, the pen 2500 is a multi-function pen. The pen 2500, which has a built-in power supply and is capable of transmitting commands to the display device 2, may be referred to as an active pen, as opposite to a pen having no built-in power supply, which may be referred to as a passive pen. The pen 2500 illustrated in FIG. 4 has one physical switch on a pen tip (or working end) thereof, one physical switch on a pen tail thereof, and two physical switches on a side surface thereof. The pen tip of the pen 2500 is allocated for writing, the pen tail of the pen 2500 is allocated for deleting, and the side surface of the pen 2500 is allocated for user functions. In this embodiment, the pen 2500 further includes a non-volatile memory that stores a pen ID that is unique to the pen 2500 and different from the pen IDs of other pens.

Operating procedures of the display device 2 to be performed by the user can be reduced by using the pen with switches. The pen with switches mainly refer to the active pens. However, passive pens having no built-in power supply can generate power using only an LC circuit according to electromagnetic induction, and thus, the active pens may encompass the electromagnetic induction type passive pens. Other examples of the pen with switches, other than the electromagnetic induction type passive pens, include optical type pens, infrared type pens, electrostatic capacitance type pens, or the like.

A hardware configuration of the pen 2500 may be similar to that of a pen which includes a communication function and a microcomputer and employs a general control method. The pen 2500 may be an electromagnetic induction type, an active electrostatic coupling type, or the like. In addition, the pen 2500 may include functions such as a pen pressure detection function, a pen tilt detection function, a pen hover function that displays a cursor before the pen touches the touchscreen panel, or the like.

### <Hardware Configuration of Display Device>

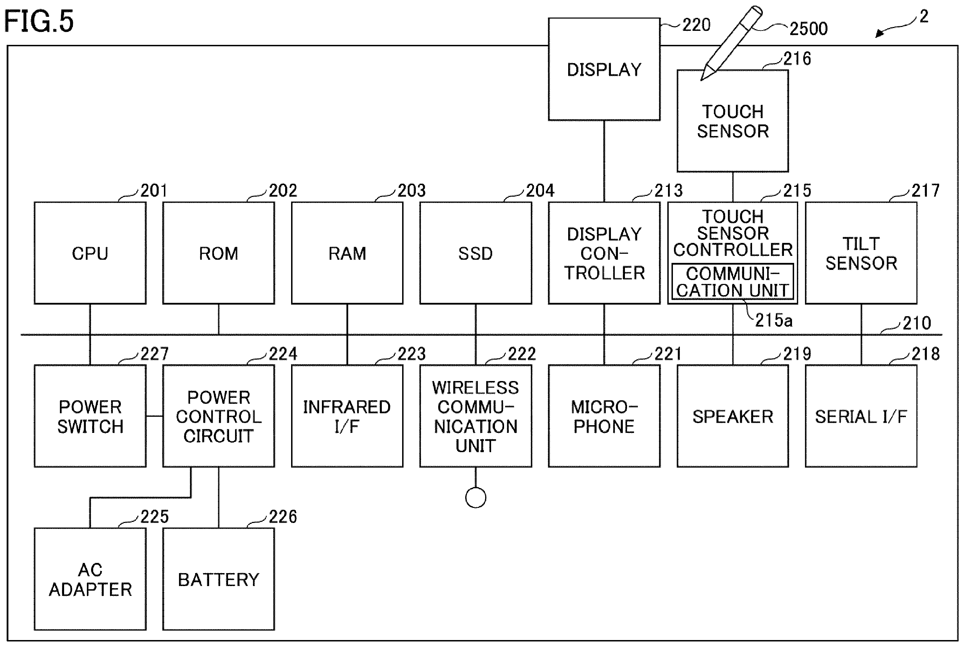

Next, a hardware configuration of the display device 2 will be described with reference to FIG. 5. The display device 2 may have the configuration of an information processing device or a computer, as illustrated in FIG. 5. FIG. 5 is a diagram illustrating an example of the hardware configuration of the display device 2. As illustrated in FIG. 5, the display device 2 includes a Central Processing Unit (CPU) 201, a Read Only Memory (ROM) 202, a Random Access Memory (RAM) 203, and a Solid State Drive (SSD) 204.

The CPU 201 of the display device 2 controls the overall operation of the display device 2. The ROM 202 stores one or more programs used to drive the CPU 201, such as an Initial Program Loader (IPL) or the like. The RAM 203 is used as a work area of the CPU 201. The SSD 204 stores various data, and one or more programs for the display device 2. Of course, the ROM 202 and the RAM 203 may store various data.

The one or more programs may be stored in a suitable non-transitory computer-readable recording medium. A recording medium forming the non-transitory computer-readable recording medium is not particularly limited, and may include the ROM 202, the RAM 203, the SSD 204, or the like described above.

The display device 2 further includes a display controller 213, a touch sensor controller 215, a touch sensor 216, the display 220, a power switch 227, a tilt sensor 217, a serial interface 218, a speaker 219, a microphone 221, a wireless communication device 222, an infrared interface (I/F) 223, a power control circuit 224, an AC adapter 225, and a battery 226.

The display controller 213 controls and manages screen display for outputting an output image to the display 220 or the like. The touch sensor 216 detects a touch of an data, such as the pen 2500, the user's hand, or the like (that is, the input device) on the display 220, that is, the contact between the input device and the display 220. The touch sensor 216 also receives the pen ID from the pen 2500 upon detecting the touch of the pen 2500.

The touch sensor controller 215 controls processes of the touch sensor 216. The processes of the touch sensor 216 include inputting coordinates and detecting the coordinates. The method of inputting the coordinates and detecting the coordinates may be an optical method, for example, in the case of the optical type touch sensor 216. According to the optical method, two light emitting and receiving devices provided located at both ends on an upper side of the display 220 emit a plurality of infrared rays parallel to the display 220 from respective light emitting elements, and receive, by respective light receiving elements, the infrared rays reflected by a reflecting member provided in a periphery of the display 220 and returned via optical paths identical to those of the infrared rays emitted by the respective light emitting elements.

The touch sensor 216 outputs position information of the infrared rays emitted by the two light emitting and receiving devices and blocked by the data, to the touch sensor controller 215, and the touch sensor controller 215 identifies the coordinate position, that is, a contact position where the data makes contact with the display 220. In addition, the touch sensor controller 215 includes a communication part 215a, and is capable of making wireless communication with the pen 2500. A commercial pen may be used as the pen 2500 when making the communication according to a standard such as Bluetooth (registered trademark), for example. When one or more pens 2500 are preregistered in the communication part 215a, the communication can be performed without requiring the user to make the connection setting for enabling the pen 2500 to communicate with the display device 2.

The power switch 227 turns the power of the display device 2 ON or OFF. The tilt sensor 217 detects a tilt angle of the display device 2. The tilt sensor 217 is mainly used to detect whether the display device 2 is used in the set-up state illustrated in FIG. 3A, FIG. 3B, or FIG. 3C, and a thickness of the characters or the like may be changed automatically according to the set-up state.

The serial interface 218 forms a communication interface with respect to an external Universal Serial Bus (USB) or the like. The serial interface 218 is used to input external information, for example. The speaker 219 is used for audio output, and the microphone 221 is used for audio input. The wireless communication device 222 communicates with a terminal carried by the user, and relays a connection to the Internet, for example. The wireless communication device 222 may communicate via a standard such as Wi-Fi (registered trademark), Bluetooth (registered trademark), or the like, but the communication standard employed by the wireless communication device 222 is not particularly limited. The wireless communication device 222 forms an access point, and a connection can be made to the access point when the user sets a Service Set Identifier (SSID) and a password that are acquired to the terminal carried by the user.

The following two access points (a) and (b) can be prepared for the wireless communication device 222.
Access point (a) → Internet
Access point (b) → Company network → Internet
The access point (a) may be for external users who cannot access the internal network, but can utilize the Internet. The access point (b) is for company users who can utilize the company (or internal) network and the Internet.

The infrared I/F 223 detects a display device 2 arranged adjacent thereto. The infrared I/F 223 can detect only the display device 2 arranged adjacent thereto by taking advantage of the linearity of the infrared ray. One infrared I/F 223 can be provided on each side of the display device 2, so that it is possible to detect the directions in which other display devices 2 are arranged adjacent to the display device 2. The adjacent display device 2 may display handwritten information (handwritten information of another page when an area of one display 220 is regarded as one page) that is handwritten in the past.

The power control circuit 224 controls the AC adapter 225 and the battery 226, which are power supplies for the display device 2. The AC adapter 225 converts the alternating current (AC) shared by the commercial power supply into direct current (DC).

In a case where the display 220 is the so-called electronic paper, the display 220 consumes little or no power to maintain the image after the image is rendered, and thus, the display 220 may be driven by the battery 226. Accordingly, it is possible to use the display device 2 for an application such as digital signage even at a location, such as outdoors, where a connection to the power supply is difficult.

The display device 2 further includes a bus line 210. The bus line 210 may be an address bus, a data bus, or the like for electrically connecting each of the constituent elements of the display device 2, such as the CPU 201 or the like illustrated in FIG. 5.

The touch sensor 216 is not limited to the optical type, but may be formed by an electrostatic capacitance type touchscreen panel which identifies the contact position by detecting a change in electrostatic capacitance. The touch sensor 216 may be a resistive film type touchscreen panel which identifies the contact position by detecting a voltage change across two opposing resistive films. The touch sensor 216 may be an electromagnetic induction type touchscreen panel which identifies the contact position by detecting an electromagnetic induction that is generated when the data contacts the touchscreen panel (or display). Thus, the touch sensor 216 may use various detection means. The touch sensor 216 may be of a type that does not require an electronic pen to detect the presence or absence of the touch with the pen tip. In this case, the user's fingertips, pen-shaped bars, or the like may be used for the touch operations. The pen 2500 does not necessarily need to have the elongated pen shape.

### <Functions of Display Device>

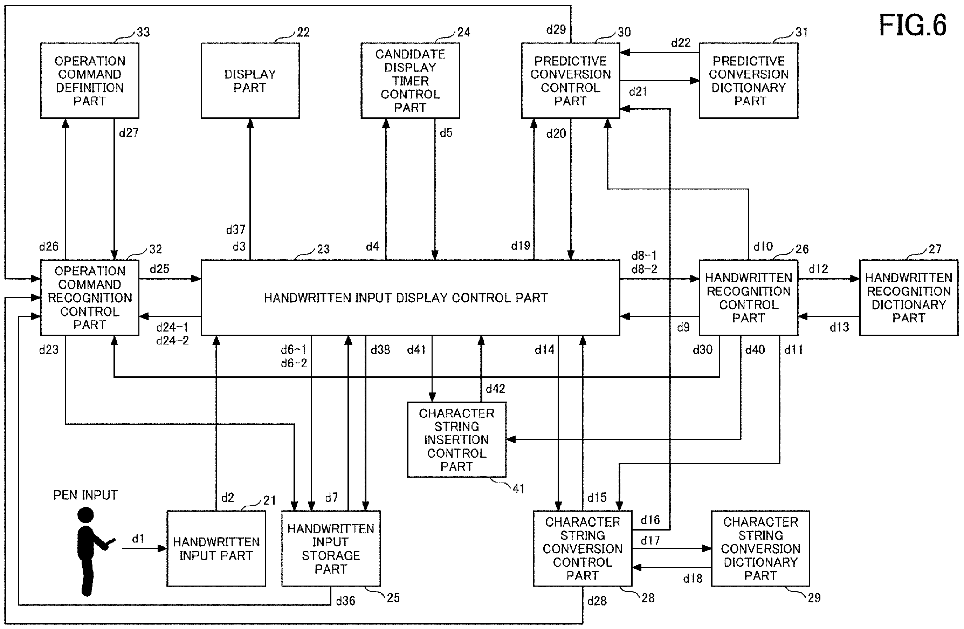

Next, functions of the display device 2 will be described, with reference to FIG. 6. FIG. 6 is a functional block diagram illustrating an example of the functions of the display device 2. The display device 2 includes a handwritten input part 21, a display part (or display) 22, a handwritten input display control part 23, a candidate display timer control part 24, a handwritten input storage part 25, a handwriting recognition control part 26, a handwriting recognition dictionary part 27, a character string conversion control part 28, a character string conversion dictionary part 29, a predictive conversion control part 30, a predictive conversion dictionary part 31, an operation command recognition control part 32, an operation command definition part 33, and a character string insertion control part 41. Each function of the display device 2 is a function or means implemented in one of the constituent elements illustrated in FIG. 5 when the constituent elements perform an operation in response to the command from the CPU 201 according to the program loaded from the SSD 204 to the RAM 203 and executed by the CPU 201.

The handwritten input part 21 is implemented by the touch sensor 216 or the like, and accepts the handwritten input from the user. The handwritten input part 21 converts a user's pen input d1 into pen operation data d2 (pen up, pen down, or pen coordinate data), and transmits the pen operation data d2 to the handwritten input display control part 23. The pen coordinate data are transmitted periodically as discrete values, and the coordinates between the discrete values are calculated and complemented.

The display part 22 is implemented by the display 220 or the like, and displays the handwritten data or an operation menu. The display part 22 converts rendered data d3 written into a video memory by the handwritten input display control part 23, into data according to the characteristics of the display 220, and transmits the converted data to the display 220.

The handwritten input display control part 23 performs an overall control of the handwritten input and display. The handwritten input display control part 23 processes the pen operation data d2 from the handwritten input part 21, and displays the processed pen operation data d2 by transmitting the same to the display part 22.

The candidate display timer control part 24 includes a display control timer for the selectable candidates. The candidate display timer control part 24 starts or stops the timer, and generates a timing for starting the display of the selectable candidates, and a timing for deleting the display. The candidate display timer control part 24 receives a timer start request d4 (or a timer stop request, as the case may be) from the handwritten input display control part 23, and transmits a time out event d5 to the handwritten input display control part 23.

The handwritten input storage part 25 includes a storage function that stores user data (handwritten data/character string data). The handwritten input storage part 25 receives user data d6-1 from the handwritten input display control part 23, and stores the user data d6-1 in the handwritten input storage part 25. The handwritten input storage part 25 receives an acquisition request d6-2 from the handwritten input display control part 23, and transmits user data d7 stored in the handwritten input storage part 25 to the handwritten input display control part 23. The handwritten input storage part 25 transmits position information d36 of a decided data to the operation command recognition control part 32.

The handwriting recognition control part 26 includes an identification engine for performing on-line handwriting recognition. Unlike the general Optical Character Reader (OCR), characters (not only in Japanese characters but also characters of other languages, such as alphabets in the case of the English language, for example), numbers, symbols (%, $, &, or the like), and graphics (lines, circles, triangles, or the like) are recognized in parallel with the user's pen operation. Various algorithms have been devised for the recognition technique, but a detailed description thereof will be omitted because this embodiment can utilize a conventional recognition technique that is appropriate.

The handwriting recognition control part 26 receives pen operation data d8-1 from the handwritten input display control part 23, performs a handwriting recognition, and stores a handwriting recognition character string candidate. The handwriting recognition control part 26 stores a language character string candidate, converted from a handwriting recognition character string candidate d12 using the handwriting recognition dictionary part 27. In a case where an acquisition request d8-2 is received separately from the handwritten input display control part 23, the handwriting recognition control part 26 transmits stored handwriting recognition character string candidate and language character string candidate d9 to the handwritten input display control part 23.

The handwriting recognition dictionary part 27 includes dictionary data for the language conversion of the handwriting recognition. The handwriting recognition dictionary part 27 receives a handwriting recognition character string candidate d12 from the handwriting recognition control part 26, converts the handwriting recognition character string candidate d12 into a language character string candidate d13 that is linguistically probable, and transmits the converted language character string candidate d13 to the handwriting recognition control part 26. For example, in the case of the Japanese language, Hiragana characters are converted into Kanji characters or Katakana characters.

The character string conversion control part 28 controls the conversion of the converted character string candidate into a character string. The converted character string is likely generated to include the handwriting recognition character string or the language character string. The character string conversion control part 28 receives handwriting recognition character string and language character string candidate d11 from the handwriting recognition control part 26, converts the handwriting recognition character string and language character string candidate d11 into a converted character string candidate using the character string conversion dictionary part 29, and stores the converted character string candidate. In a case where an acquisition request d14 is received separately from the handwritten input display control part 23, the character string conversion control part 28 transmits a stored converted character string candidate d15 to the handwritten input display control part 23.

The character string conversion dictionary part 29 includes dictionary data for the character string conversion. The character string conversion dictionary part 29 receives handwriting recognition character string and language character string candidate d17 from the character string conversion control part 28, and transmits a converted character string candidate d18 to the character string conversion control part 28.

The predictive conversion control part 30 receives handwriting recognition character string and language character string candidate d10 from the handwriting recognition control part 26. The predictive conversion control part 30 receives a converted character string candidate d16 from the character string conversion control part 28. The predictive conversion control part 30 converts the handwriting recognition character string and language character string candidate d10, and the converted character string candidate d16, into predicted character string candidates using the predictive conversion dictionary part 31, respectively. A predictive conversion character string is likely generated to include the handwriting recognition character string, the language character string, or the converted character string. In a case where an acquisition request d19 is received separately from the handwritten input display control part 23, the predictive conversion control part 30 transmits a predicted character string candidate d20 to the handwritten input display control part 23.

The predictive conversion dictionary part 31 includes dictionary data for the predictive conversion. The predictive conversion dictionary part 31 receives the handwriting recognition character string and language character string candidate, and converted character string candidate d21 from the predictive conversion control part 30, and transmits a predicted character string candidate d22 to the predictive conversion control part 30.

The operation command recognition control part 32 receives handwriting recognition character string and language character string candidate d30 from the handwriting recognition control part 26. The operation command recognition control part 32 receives a converted character string candidate d28 from the character string conversion control part 28, and receives a predicted character string candidate d29 from the predictive conversion control part 30. The operation command recognition control part 32 transmits an operation command conversion request d26 to the operation command definition part 33 for the handwriting recognition character string and language character string candidate d30, the converted character string candidate d28, and the predicted character string candidate d29, respectively, and receives an operation command candidate d27 from the operation command definition part 33. The operation command recognition control part 32 stores the operation command candidate d27.

In a case where the operation command conversion request d26 partially matches the operation command definition, the operation command definition part 33 transmits the operation command candidate d27 to the operation command recognition control part 32.

In addition, the operation command recognition control part 32 receives pen operation data d24-1 from the handwritten input display control part 23, and transmits a position information acquisition request d23 of the decided data that is input and decided in the past, to the handwritten input storage part 25. The operation command recognition control part 32 stores the decided data specified by the pen operation data, as a selected data (including position information). The operation command recognition control part 32 identifies the selected data that satisfies a predetermined criteria with the position of the pen operation data d24-1. In a case where a acquisition request d24-2 is received separately from the handwritten input display control part 23, the operation command recognition control part 32 transmits stored operation command candidate and identified selected data d25 to the handwritten input display control part 23.

While the selected data is being dragged, the handwritten input display control part 23 displays the arrow 303 indicating the inserting destination, based on positions of the selected data and the decided data. In other words, the handwritten input display control part 23 displays the inserting designation, according to the positional relationship between one or more characters and the character string, caused by the moving of the one or more characters accepted by the handwritten input part 21. When the selected data is dropped, the handwritten input display control part 23 transmits coordinates of the pointing end of arrow, selected data, and decided data d41 to the character string insertion control part 41. Hence, the handwritten input display control part 23 is an example of a first circuitry configured to display a display element or tag indicating a position of one or more characters with respect to a first character string. Further, the character string insertion control part 41 is an example of a second circuitry configured to insert the one or more characters to a position between two characters where a distance between the first character string and the display element or tag becomes nearest, to generate a second character string which may be displayed by the first circuitry.

The character string insertion control part 41 performs a process with respect to the character string, using the one or more characters based on the position of the pointing end of the arrow 303. For example, the selected data is inserted to the position between two characters, nearest to the coordinates of the pointing end of the arrow 303, in the decided data. The character string insertion control part 41 transmits decided data d42 (one example of a second character string), inserted with the selected data, to the handwritten input display control part 23. The handwritten input display control part 23 displays decided data d37, inserted with the selected data, on the display part 22, and stores decided data d38, inserted with the selected data, in the handwritten input storage part 25.

### <Defined Control Data>

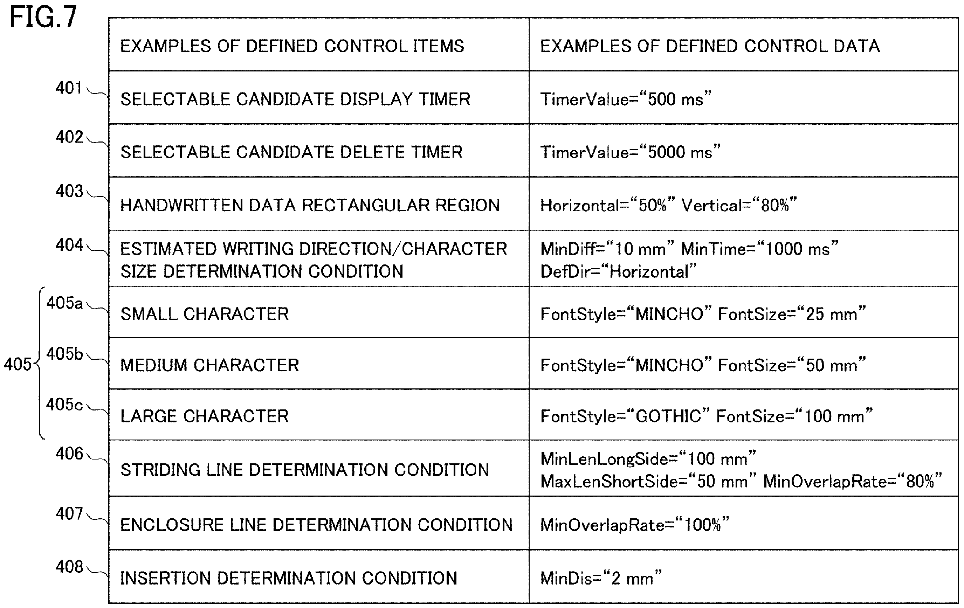

Next, defined control data, used by the display device 2 for various processes, will be described with reference to FIG. 7. FIG. 7 illustrates an example of the defined control data. The example illustrated in FIG. 7 illustrates the control data for each control item.

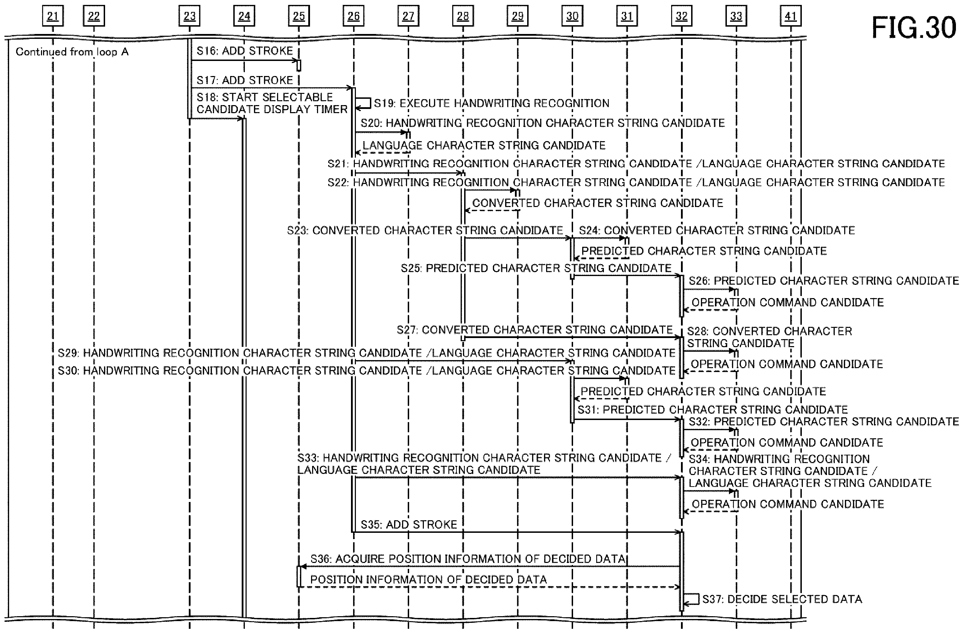

A selectable candidate display timer 401 defines the time (one example of a first time) until the selectable candidate is displayed, so that the display device 2 does not display the selectable candidate while the handwriting is being made. FIG. 7 illustrates that the selectable candidate is displayed unless a pen down occurs within a TimerValue = 500 [ms] from a pen up. The selectable candidate display timer 401 is stored by the candidate display timer control part 24. The selectable candidate display timer 401 is used at the start of the selectable candidate display timer in step S18 illustrated in FIG. 30 which will be described later.

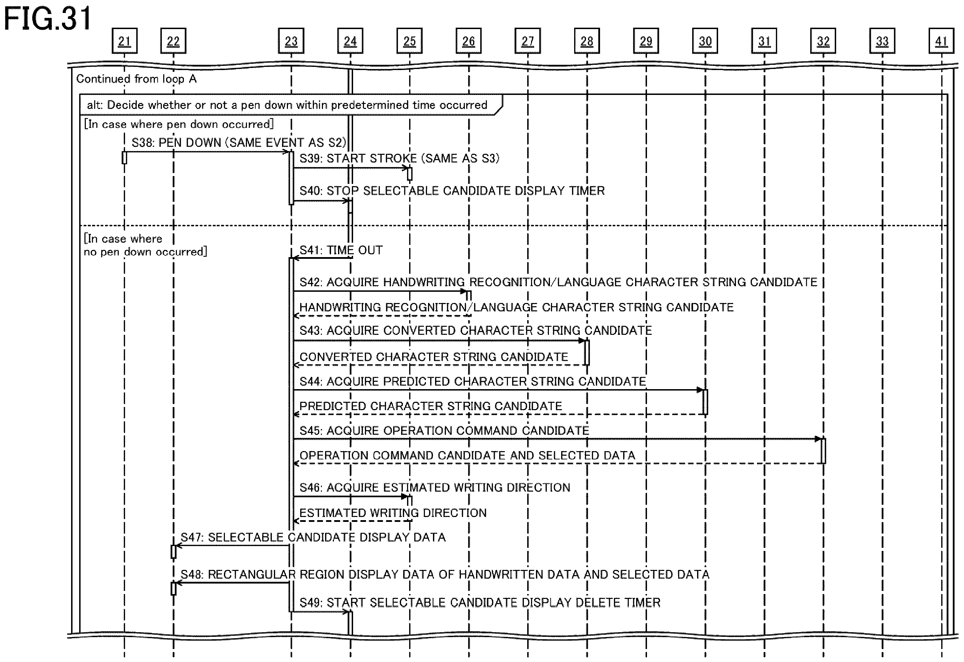

A selectable candidate delete timer 402 defines the time (one example of a second time) until the displayed selectable candidate is deleted, so that the selectable candidate is deleted if the user does not select the selectable candidate. FIG. 7 illustrates that the selectable candidate display is deleted unless the selectable candidate is selected within a TimerValue = 5000 [ms] from the display of the selectable candidate. The selectable candidate delete timer 402 is stored by the candidate display timer control part 24. The selectable candidate delete timer 402 is used at the start of the selectable candidate display delete timer in step S49 illustrated in FIG. 31 which will be described later.

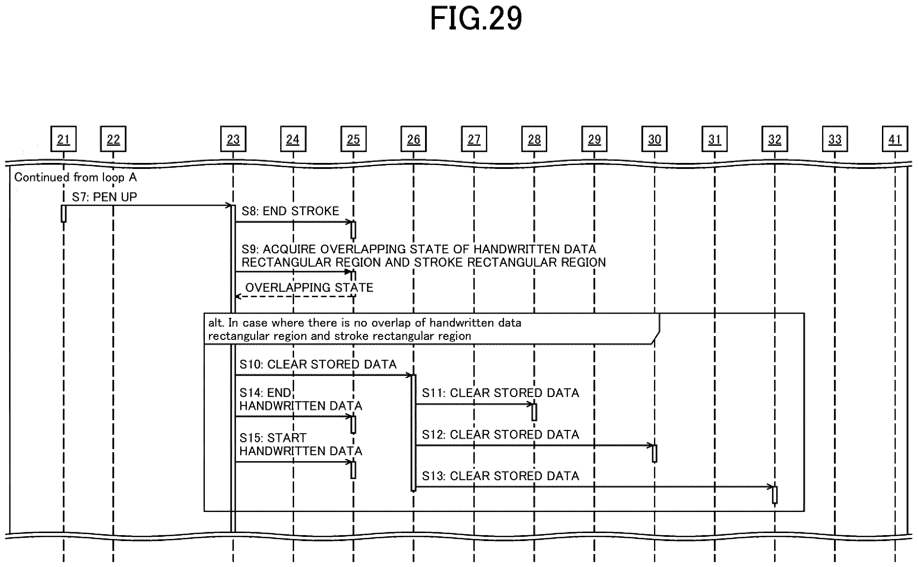

A handwritten data rectangular region 403 defines a rectangular region which may be regarded as being near the handwritten data. In the example illustrated in FIG. 7, the handwritten data rectangular region 403 expands the rectangular region of the handwritten data in the horizontal direction by 50% of the estimated character size, and expands the rectangular region of the handwritten data in the vertical direction by 80% of the estimated character size. In the example illustrated in FIG. 7, the estimated character size is indicated by a percentage (specified %). However, if the unit is specified as "mm" or the like, the estimated character size may have a fixed length. The handwritten data rectangular region 403 is stored by the handwritten input storage part 25. An estimated character size 405 is used in step S9 illustrated in FIG. 29 which will be described later, to determine an overlapping state of the handwritten data rectangular region and a stroke rectangular region.

An estimated writing direction/character size determination condition 404 defines constants for determining the writing direction and character size measuring direction. In the example illustrated in FIG. 7, the estimated writing direction is determined to be "horizontal writing", and the estimated character size is determined to be the vertical distance, in a case where:
· A difference MinTime between a time when the stroke is first added and a time when the stroke is last added to the handwritten data rectangular region is MinTime = 1000 [ms] or greater;
· A difference MinDiff between the horizontal distance (width) and the vertical distance (height) of the handwritten data rectangular region is MinDiff = 10 [mm] or greater; and
· The horizontal distance is longer than the vertical distance.

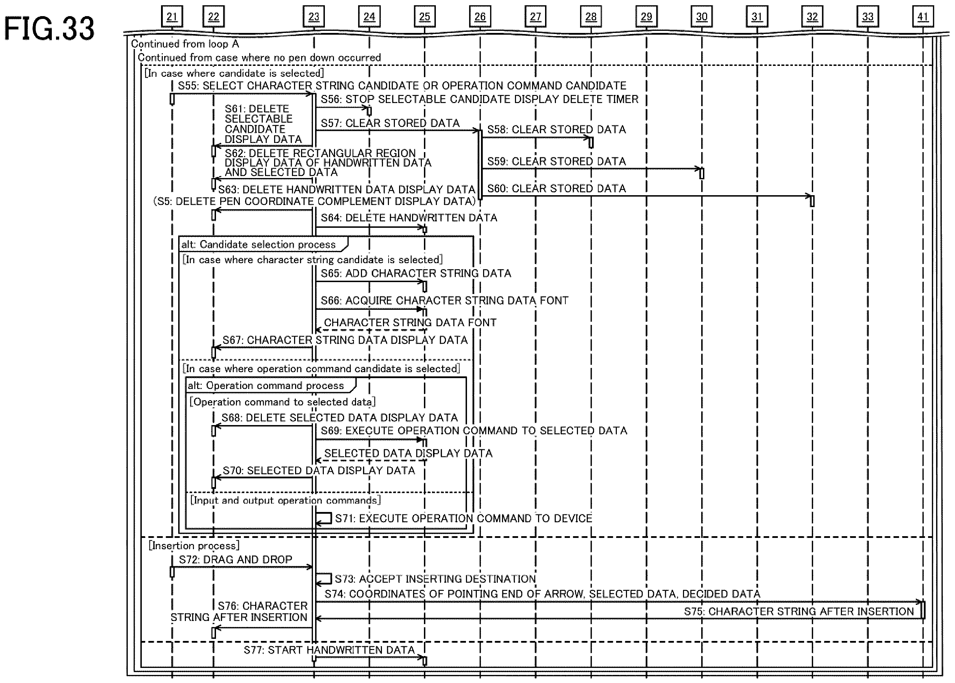

In the case where the horizontal distance is shorter than the vertical distance, the estimated writing direction is determined to be "vertical writing" and the estimated character size is determined to be the horizontal distance. In a case where the above conditions are not satisfied, the estimated writing direction is determined to be "horizontal writing" (DefaultDir = "Horizontal"), and the estimated character size is determined to be the longer distance between the horizontal distance and the vertical distance. The estimated writing direction/character size determination condition 404 is stored by the handwritten input storage part 25. The estimated writing direction/character size determination condition 404 is used for acquiring the estimated writing direction in step S46 illustrated in FIG. 31, and for acquiring the character string data font acquisition in step S66 illustrated in FIG. 33, which will be described later.

An estimated character size 405 defines data for estimating the size of the characters or the like. In the example illustrated in FIG. 7, the estimated character size determined by the estimated writing direction/character size determination condition 404 is compared to a small character 405a (hereinafter referred to as a minimum font size) of the estimated character size 405 and a large character 405c (hereinafter referred to as a maximum font size). In a case where the estimated character size is smaller than the minimum font size, the estimated character size is determined to be the minimum font size. In a case where the estimated character size is larger than the maximum font size, the estimated character size is determined to be the maximum font size. Otherwise, the estimated character size is determined to be the character size of a medium character 405b. The estimated character size 405 is stored by the handwritten input storage part 25. The estimated character size 405 is used for acquiring the character string data font in step S66 illustrated in FIG. 33, which will be described later.

More particularly, the handwritten input storage part 25 compares the estimated character size determined by the estimated writing direction/character size determination condition 404 with FontSize of the estimated character size 405, and uses the font having the FontSize closest to the estimated character size. For example, the handwritten input storage part 25 determines the estimated character size to be the "small character" when the estimated character size is 25 [mm] or less (FontSize of the small character), to be the "medium character" when the estimated character size is greater than 25 [mm] and 50 [mm] or less (FontSize of the medium character), and to be the "large character" when the estimated character size is greater than 100 mm (FontSize of the large character). The small character 405a uses the 25 mm Ming font (FontStyle = "Ming", FontSize = "25 mm"), the medium character 405b uses the 50 mm Ming font (FontStyle = "Ming", FontSize = "50 mm"), and the large character 405c uses the 100 mm Gothic font (FontStyle = "Gothic", FontSize = "100 mm"). The number of kinds of font sizes and styles can be increased, by increasing the number of kinds of the estimated character size 405.

A striding line determination condition 406 defines the data used for determining whether or not a plurality of decided data are selected. It is assumed that the handwritten data is a single stroke. In the example illustrated in FIG. 7, it is determined that the decided data is the selected data, in a case where:
- The length of the longer side of the handwritten data is 100 [mm] (MinLenLongSide = "100 mm") or greater;
- The length of the shorter side of the handwritten data is 50 [mm] (MaxLenShortSide = "50 mm") or less; and
- There is a decided data which overlaps the handwritten data with an overlap ratio of 80 [%] (MinOverLapRate = "80 %") or higher along the direction of the longer side and the direction of the shorter side. The striding line determination condition 406 is stored by the operation command recognition control part 32. The striding line determination condition 406 is used for determining the striding line when determining the selected data in step S37 illustrated in FIG. 30, which will be described later.

An enclosure line determination condition 407 defines the data used for determining whether or not the handwritten data is an enclosure line. In the example illustrated in FIG. 7, the operation command recognition control part 32 determines the decided data, that overlaps the handwritten data and is determined to have the overlap ratio of 100% (MinOverLapRate = "100 %") or higher along the direction of the longer side and the direction of the shorter side of the handwritten data, as the selected data. The enclosure line determination condition 407 is stored by the operation command recognition control part 32. The enclosure line determination condition 407 is used for determining the enclosure line when determining the selected data in step S37 illustrated in FIG. 30, which will be described later.

The priority may be placed on the determination of either one of the striding line determination condition 406 and the enclosure line determination condition 407. For example, in a case where the striding line determination condition 406 is relaxed (set to a value so as to facilitate selection of the striding line) and the enclosure line determination condition 407 is strict (set to a value so as to enable selection of only the enclosure line), the operation command recognition control part 32 may place the priority on the determination of the enclosure line determination condition 407.

An insertion determination condition 408 defines a threshold value that is used to determine whether or not the selected data is inserted into the decided data. In the example illustrated in FIG. 7, the character string insertion control part 41 decides that the selected data is to be inserted into the decided data when a distance between the pointing end of the arrow 303 and the decided data is "2 mm" at the time the selected data is dropped. This just one example of the threshold value of the distance, because the user may simply move the selected data without intending to make the insertion.

### <Example of Dictionary Data>

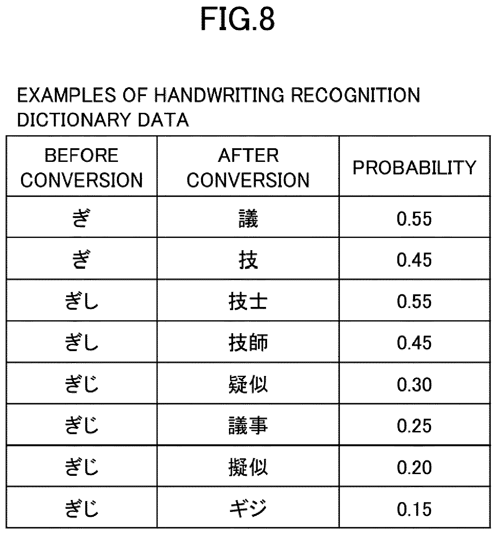

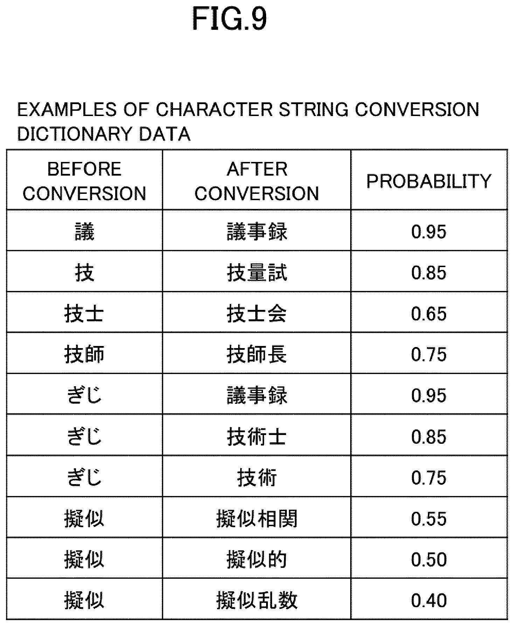

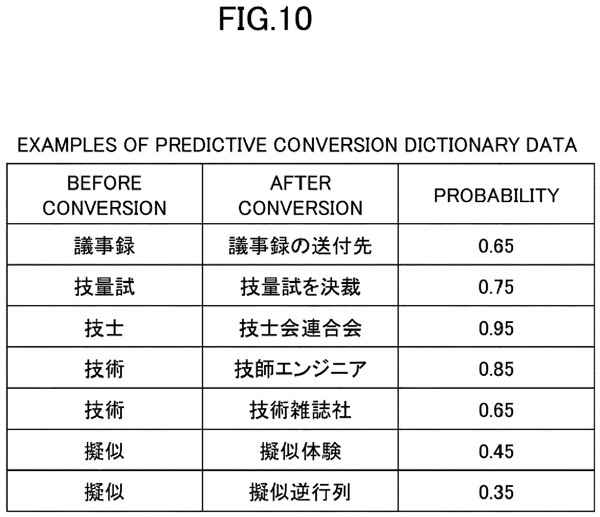

The dictionary data will be described with reference to FIG. 8 through FIG. 10. FIG. 8 illustrates an example of the dictionary data of the handwriting recognition dictionary part 27. FIG. 9 illustrates an example of the dictionary data of the character string conversion dictionary part 29. FIG. 10 illustrates an example of the dictionary data of the predictive conversion dictionary part 31. Each of these dictionary data illustrated in FIG. 8 through FIG. 10 is used in steps S21 through S34 illustrated in FIG. 30, which will be described later.

In this embodiment, the conversion result of the dictionary data of the handwriting recognition dictionary part 27 illustrated in FIG. 8 will be referred to as a language character string candidate, the conversion result of the dictionary data of the character string conversion dictionary part 29 illustrated in FIG. 9 will be referred to as a converted character string candidate, and the conversion result of the dictionary data of the predictive conversion dictionary part 31 illustrated in FIG. 10 will be referred to as a predicted character string candidate. In addition, each dictionary data "before conversion" refers to the character string used for the search in the dictionary data, each dictionary data "after conversion" refers to the character string after conversion and corresponding to the character string used for the search, and "probability" refers to the probability of the selection that will be made by the user. The probability may be calculated from the result of the user's selection of each character string made in the past. Accordingly, the probability may be calculated for each user. Various algorithms have been devised for the probability calculation technique, but a detailed description thereof will be omitted because this embodiment can utilize a conventional probability calculation technique that is appropriate. This embodiment may display the character string candidates in a descending order of the selected probability according to the estimated writing direction.

The dictionary data of the handwriting recognition dictionary part 27 illustrated in FIG. 8 indicates that the handwritten Hiragana character " 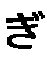 " before the conversion and pronounced "gi" has a 0.55 probability of being converted into a Kanji character " 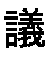 " (which may mean "talk" or "consult" in English) after the conversion and also pronounced "gi" as indicated in the first line, and has a 0.45 probability of being converted into another Kanji character " 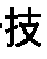 " (which may mean "technical" in English) after the conversion and also pronounced "gi" as indicated in the second line. The handwritten Hiragana characters " 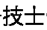 " before the conversion and pronounced "gishi" has a 0.55 probability of being converted into a character string of two Kanji characters " 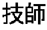 " and also pronounced "gishi" after the conversion as indicated in the third line, and has a 0.45 probability of being converted into another character string of two Kanji characters and also pronounced "gishi" after the conversion as indicated in the fourth line. The probabilities for other handwritten Hiragana characters before the conversion, after the conversion, are indicated similarly in the fifth through eighth lines. Although FIG. 8 illustrates an example in which the handwritten character string before the conversion are made up of Hiragana characters, characters other than the Hiragana characters may be registered as the handwritten character string before the conversion.

The dictionary data of the character string conversion dictionary part 29 illustrated in FIG. 9 indicates that the character string made up of a Kanji character " 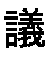 " before the conversion and pronounced "gi" has a 0.95 probability of being converted into a character string made up of a character string of three Kanji characters " 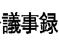 " after the conversion and pronounced "gijiroku" (which may mean "agenda" in English) as indicated in the first line, and another character string made up of another Kanji character " 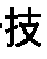 " before the conversion and pronounced "gi" has a 0.85 probability of being converted into another character string made up of three Kanji characters " 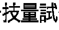 " after the conversion and pronounced "giryoushi" (which may mean "qualification trial" in English) as indicated in the second line. The probabilities for other character strings before the conversion, after the conversion, are indicated similarly in the third through tenth lines.

The dictionary data of the predictive conversion dictionary part 31 illustrated in FIG. 10 indicates that the character string made up of three Kanji characters " 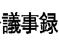 " before the conversion and pronounced "gijiroku" (which may mean "agenda" in English") has a 0.65 probability of being converted into a character string made up of seven Kanji and Hiragana characters " 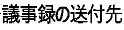 " after the conversion and pronounced "gijiroku no soufusaki" (which may mean "sending destination of agenda" in English) as indicated in the first line, and another character string made up of three Kanji characters " 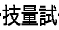 " before the conversion and pronounced "giryoushi" (which may mean "qualification trial" in English) has a 0.75 probability of being converted into a character string made up of six Kanji and Hiragana characters " 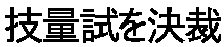 " after the conversion and pronounced "giryoushi wo kessai" (which may mean "qualification trial approval" in English) as indicated in the second line. The probabilities for other character strings before the conversion, after the conversion, are indicated similarly in the third through eighth lines. Although FIG. 10 illustrates an example in which all of the character strings before the conversion are made up of Kanji characters, characters other than Kanji characters may be registered as the character string before the conversion.

The dictionary data requires no language dependency, and any character string may be registered before and after the conversion.

### <Operation Command Definition Data Stored in Operation Command Definition Part>

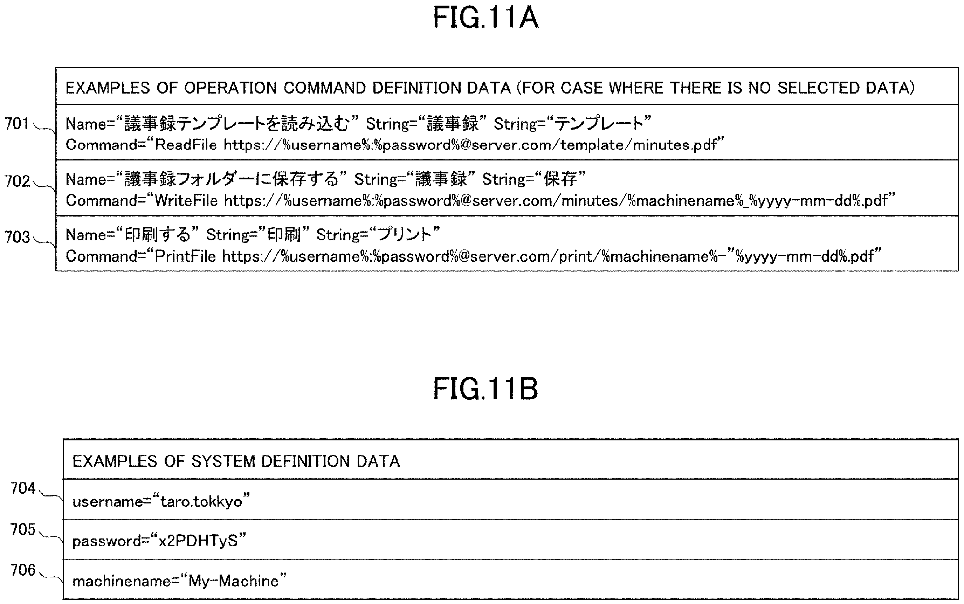

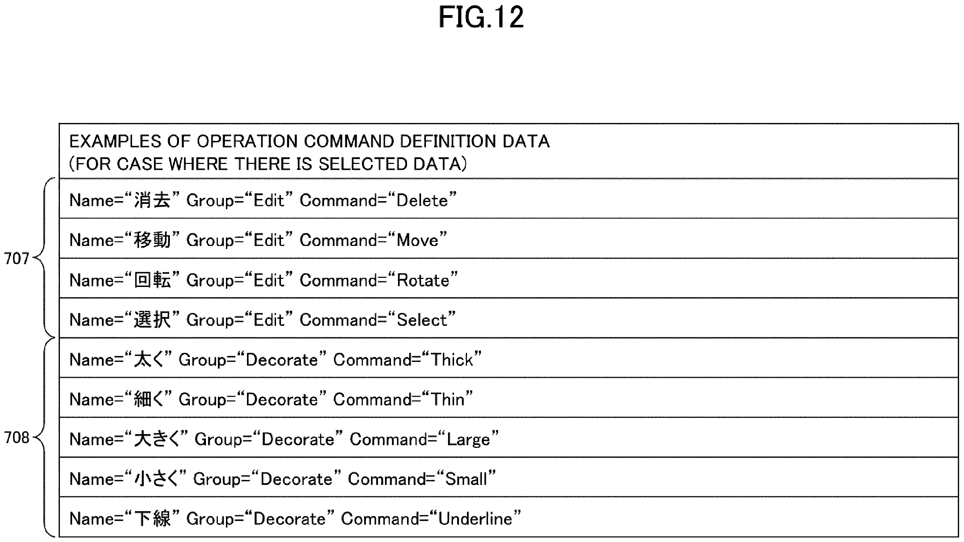

Next, operation command definition data used by the operation command recognition control part 32 will be described, with reference to FIG. 11A, FIG. 11B, and FIG. 12. FIG. 11A and FIG. 11B illustrate an example of the operation command definition data and system definition data stored in the operation command definition part 33.

FIG. 11A illustrates an example of the operation command definition data. The operation command definition data illustrated in FIG. 11A is an example of the operation command definition data for a case where there is no selected data selected by the handwritten data, and all operation commands that operate the display device 2 are targets. The operation command illustrated in FIG. 11A includes an operation command name (Name), a character string (String) that partially matches the character string candidate, and an operation command character string (Command) to be executed. "%-%" in the operation command character string is a variable, and corresponds to the system definition data as illustrated in FIG. 11B. In other words, "%∼%" is replaced by the system definition data illustrated in FIG. 11B.

First, in operation command definition data 701 illustrated in FIG. 11A, the operation command name is a character string made up of fourteen Kanji, Katakana, and Hiragana characters " 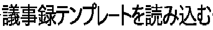 " pronounced "gijiroku tenpureito wo yomikomu" ("load agenda template" in English), the character string that partially matches the character string candidate is made up of three Kanji characters " 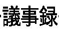 " pronounced "gijiroku" ("agenda" in English) or a character string made up of six Katakana characters " 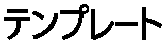 " pronounced "tenpureito" ("template" in English), and the operation command character string to be executed is "ReadFile https://%username%:%password%@ server.com/template/minutes.pdf". In this example, the system definition data "%∼%" is included in the operation command character string to be executed, and "%username%" and "%password%" are replaced by system definition data 704 and 705, respectively. Accordingly, the final operation command character string is "ReadFile https:// taro.tokkyo: x2PDHTyS@server.com/template/minutes.pdf", indicating a read file (ReadFile) "https://taro.tokkyo: x2PDHTyS@ server.com/template/minutes.pdf".

In operation command definition data 702, the operation command name is a character string made up of thirteen Kanji, Katakana, and Hiragana characters " 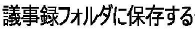 " pronounced "gijiroku foruda ni hozonsuru" ("store agenda folder" in English), the character string that partially matches the character string candidate is three Kanji characters " 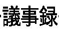 " pronounced "gijiroku" ("agenda" in English) or two Kanji characters " 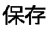 " pronounced "hozon" ("store" in English), and the operation command character string to be executed is "WriteFile https:/%username%:%password%@server.com/minutes/%machine name%_%yyyyy-mm-dd%.pdf". Similar to the operation command definition data 701, "%username%", "%password%", and "%machinename%" in the operation command character string are replaced by the system definition data 704, 705, and 706 illustrated in FIG. 11B, respectively. "%yyyy-mm-dd%" is replaced by the current year, month, and date. For example, if the current date is September 26, 2018, "%yyyy-mm-dd%" is replaced by "2018-09-26". The final operation command is "WriteFile https://taro.tokkyo: x2PDHTyS@server.com/minutes/%My-Machine_2018-09-26.pdf", indicating storing (writing) "gijiroku" ("agenda" in English) in a write file (WriteFile) "https://taro.tokkyo: x2PDHTyS@server.com/%minutes/%My-Machine_2018-09-26.pdf".

In operation command definition data 703, the operation command name is a character string made up of four Kanji and Hiragana characters " 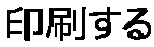 " pronounced "insatsu suru" ("print" in English)", the character string that partially matches the character string candidate is made up of two Kanji characters " 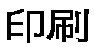 " pronounced "insatsu ("print" in English)" or a character string made up of four Katakana characters " 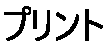 " pronounced "purinto" ("print" in English)", and the operation command character string to be executed is "PrintFile https:/%username%: %password%@server.com/print/%machiname%-%yyyy-mm-dd%.pdf". When the operation command character strings are replaced as in the operation command definition data 702, the final operation command is "PrintFile https://taro.tokkyo: x2PDHTyS@server.com/print/%My-Machine_2018-09-26.pdf", indicating that the file (PrintFile) "https://taro.tokkyo: x2PDHTyS@server.com/print/%My-Machine_2018-09-26.pdf" is printed (PrintFile), that is, the file is transmitted to a server. The printer prints the contents of the file on paper when the user causes the printer to communicate with the server and specifies the file.

As described above, because the operation command definition data 701 through 703 can be identified from the character string candidates, the operation command can be displayed when the user handwrites the operation command. Further, in a case where the user authentication is successful, "%username%", "%password%", or the like of the operation command definition data are replaced by the user information, and thus, the input and output of the file, in correspondence with the user, becomes possible.

In a case where the user authentication is not performed (including a case where the user authentication fails but the user is able to use the display device 2), the display device 2 is replaced by "%username%", "%password%", or the like of the display device 2 that is preset. Accordingly, even without the user authentication, the input and output of the file in correspondence with the display device 2 becomes possible.

Next, the operation command definition data when the handwritten data are present, that is, the operation command definition data for an editing system and a decorating system, will be described. FIG. 12 illustrates an example of the operation command definition data when the selected data selected by the handwritten data are present. The operation command definition data illustrated in FIG. 12 includes an operation command name (Name), a group name (Group) of the operation command candidates, and an operation command character string (Command) to be executed.

Operation command definition data 707 defines the operation commands for the editing system (Group = "Edit"), and is an example of the definition data of the operation command names for the editing system, including a character string made up of two Kanji characters " 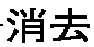 " pronounced "shoukyo" ("delete" in English), a character string made up of two Kanji characters " 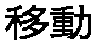 " pronounced "idou" ("move" in English), a character string made up of two Kanji characters " 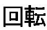 " pronounced "kaiten" ("rotate" in English), and a character string made up of two Kanji characters " 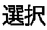 " pronounced "sentaku" ("select" in English). In other words, these operation commands are displayed with respect to the selected data, so that the user can select a desired operation command.

Operation command definition data 708 defines the operation commands for the decorating system (Group = "Decorate"), and is an example of the definition data for the operation command names for the decorating system, including a character string made up of two Kanji and Hiragana characters " 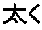 " pronounced "futoku" ("thick" in English), a character string made up of two Kanji and Hiragana characters " 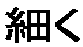 " pronounced "hosoku" ("thin" in English), a character string made up of three Kanji and Hiragana characters " 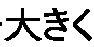 " pronounced "ookiku" ("large" in English), a character string made up of three Kanji and Hiragana characters " 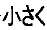 " pronounced "chiisaku" ("small" in English), and a character string made up of two Kanji characters " 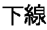 " pronounced "kasen" ("underline" in English). These operation commands are displayed with respect to the selected data, so that the user can select a desired operation command. Other operation command, such as operation commands related to color, may also be displayed.

Accordingly, the operation command definition data 707 and 708 are identified when the user specifies the selected data by the handwritten data, so that the user can cause the operation command to be displayed by making the handwriting.

### <Example of Displaying Operation Guide>

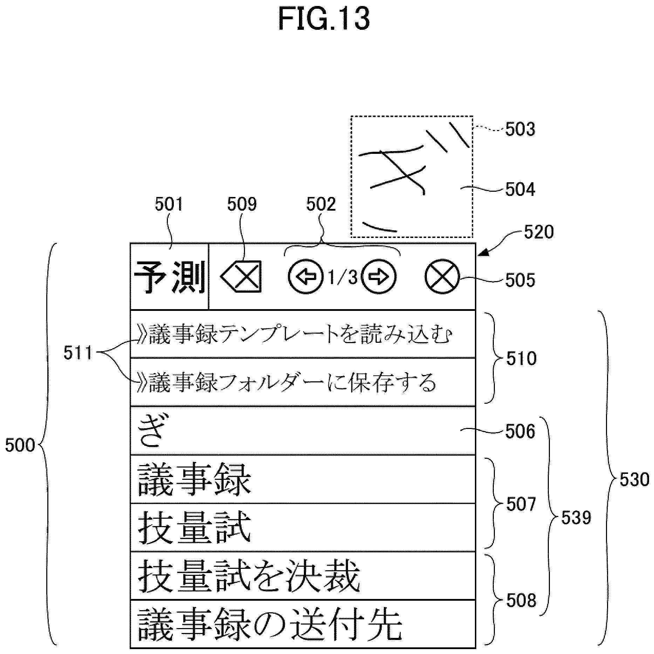

FIG. 13 illustrates an example of an operation guide 500, and a selectable candidate 530 displayed by the operation guide 500. When the user handwrites the handwritten data 504 and a time out of the selectable candidate display timer occurs, the operation guide 500 is displayed. The operation guide 500 includes an operation header 520, an operation command candidate 510, a handwriting recognition character string candidate 506, a converted character string candidate 507, a character string/predictive conversion candidate 508, and a handwritten data rectangular area display 503. The selectable candidate 530 includes an operation command candidate 510, a handwriting recognition character string candidate 506, a converted character string candidate 507, and a character string/predictive conversion candidate 508. A language character string candidate is not displayed in this example, however, the language character string candidate may be displayed, as appropriate. The selectable candidate 530, excluding the operation command candidate 510, will be referred to as a character string candidate 539.

The operation header 520 includes buttons 501, 509, 502, and 505. The button 501 accepts a switching operation between the predictive conversion and the Kana conversion. In the example illustrated in FIG. 13, when the user presses the button 509 indicating a character string made up of two Kanji characters " 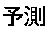 " pronounced "yosoku" ("predictive" in English) to select the predictive conversion, the handwritten input part 21 accepts the selected predictive conversion and notifies the same to the handwritten input display control part 23, and the display part 22 changes the display of the button 509 to indicate a character string made up of two Hiragana characters " 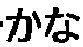 " pronounced "kana" to enable selection of the Kana conversion. After this change, the character string candidate 539 arranges the candidates in a descending probability order of the Kana conversion which converts the Hiragana characters into the Kanji and/or Katakana characters.

The button 502 accepts a page operation on the candidate display. In the example illustrated in FIG. 13, there are three candidate display pages, and the first page is currently displayed. The button 505 accepts deletion of the operation guide 500. When the user presses the button 505, the handwritten input part 21 accepts the deletion and notifies the same to the handwritten input display control part 23, and the display part 22 deletes the display other than the handwritten data. The button 509 accepts collective display deletion. When the user presses the button 509, the handwritten input part 21 accepts the collective display deletion and notifies the same to the handwritten input display control part 23, and the display part 22 deletes all of the display illustrated in FIG. 13, including the handwritten data. Accordingly, the user can redo the handwriting from the start.

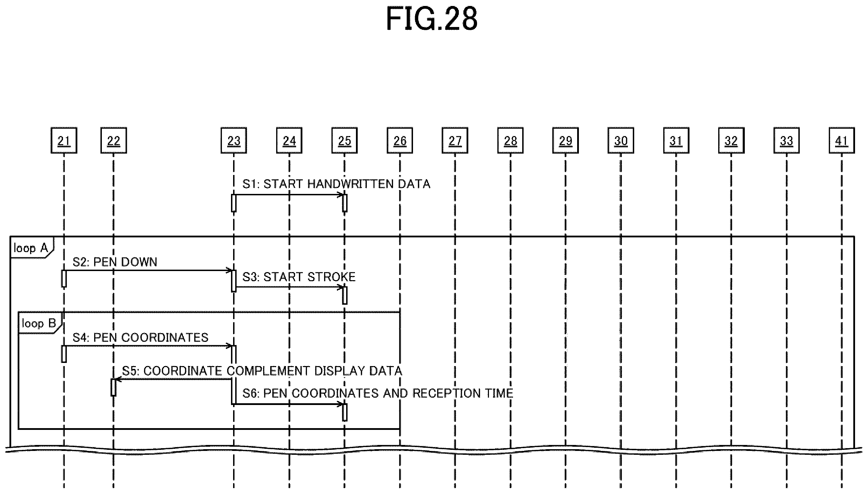

The handwritten data 504 in this example is a Hiragana character " 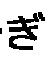 " pronounced "gi". The handwritten data rectangular area display 503, surrounding the handwritten data 504, is displayed. The display procedure may be performed in the sequence described later in conjunction with FIG. 28 through FIG. 33. In the example illustrated in FIG. 13, the handwritten data rectangular area display 503 is displayed as a rectangular frame indicated by dots.

The handwriting recognition character string candidate 506, the converted character string candidate 507, and the character string/predictive conversion candidate 508 respectively include character string candidates arranged in the descending probability order. The Hiragana character " 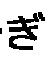 " pronounced "gi" of the handwriting recognition character string candidate 506 is the candidate of the recognition result. In this example, the display device 2 correctly recognizes the Hiragana character " 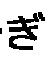 " pronounced "gi".

The converted character string candidate 507 is the converted character string candidate converted from the language character string candidate. In this example, the converted character string candidate 507 displays the upper character string made up of three Kanji characters " 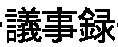 " pronounced "gijiroku" (which may mean "agenda" in English), and the lower character string made up of three Kanji characters " 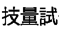 " pronounced "giryoushi" (which may mean "qualification trial" in English), which is an abbreviation for a character string made up of six Kanji characters " 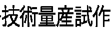 " pronounced "gijutsu ryousan shisaku" (which may mean "technical mass production trial" in English). The character string/predictive conversion candidate 508 is the predicted character string candidate converted from the language character string candidate or the converted character string candidate. In this example, the character string/predictive conversion candidate 508 displays the upper character string made up of six Kanji and Hiragana characters " 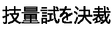 " pronounced "giryoushi wo kessai" (which may mean "qualification trial approval" in English), and the lower character string made up of seven Kanji and Hiragana characters " 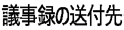 " after the conversion and pronounced "gijiroku no soufusaki" (which may mean "sending destination of agenda" in English).

The operation command candidate 510 is the operation command candidate selected based on the operation command definition data 701 through 703. In the example illustrated in FIG. 13, a bullet character "»" 511 indicates the operation command candidate. In FIG. 13, there is no decided data that can be selected by the handwritten data 504 that is a Hiragana character " 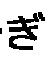 " pronounced "gi", and because the character string candidate (upper character string) made up of three Kanji characters " 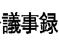 " pronounced "gijiroku" (which may mean "agenda" in English) displayed in the converted character string candidate 507, which is the character string candidate of the handwritten data 504, partially matches the operation command definition data 701 and 702, the character string candidate (upper character string) made up of three Kanji characters " 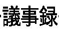 " pronounced "gijiroku" (which may mean "agenda" in English), displayed in the converted character string candidate 507, is displayed as the operation command candidate 510 of the operation command.

The operation command candidate 510 includes an upper candidate (upper character string) made up of fourteen Kanji, Katakana, and Hiragana characters " 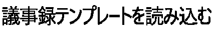 " pronounced "gijiroku tenpureto wo yomikomu" ("load agenda template" in English), and a lower candidate (lower character string) made up of thirteen Kanji, Katakana, and Hiragana characters " 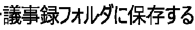 " pronounced "gijiroku foruda ni hozonsuru" ("store agenda folder" in English). When the user selects the upper candidate following the upper bullet character "»" 511 displayed in the operation command candidate 510, the operation command defined by the operation command definition data 701 is executed. When the user selects the lower candidate following the lower bullet character ">>" 511 displayed in the operation command candidate 510, the operation command defined by the operation command definition data 702 is executed. Because the operation command candidate is displayed when the operation command definition data including the converted character string is found, the operation command candidate is not always displayed.

As illustrated in FIG. 13, the character string candidates and the operation command candidates are displayed together at the same time, and thus, the user can arbitrarily select each of the character string candidate and the operation command candidate intended by the user.

### <Example of Specifying Selected Object>

The display device 2 according to this embodiment can specify the selected data when the user selects the decided data by handwriting. The selected data (or decided data) may be subject to editing or decorating.

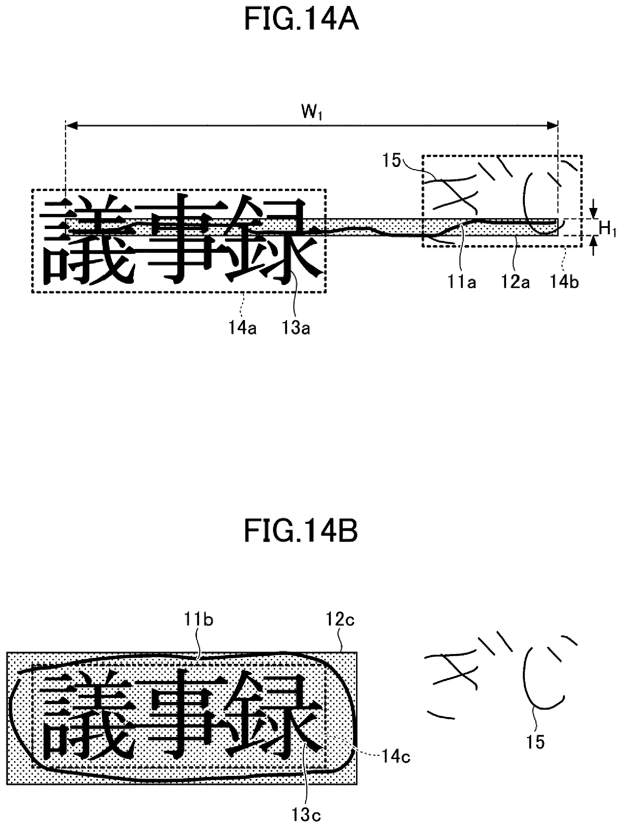

FIG. 14A through FIG. 14D are diagrams illustrating an example of specifying the selected data. In FIG. 14A through FIG. 14D, a handwritten data 11 is displayed by a black solid line, a handwritten data rectangular region 12 is displayed by a gray halftone dot pattern, a decided data 13 is displayed by a black line, and a selected data rectangular region 14 is displayed by a dotted line. These data and regions can be distinguished from one another by a lowercase letter appended to the reference numeral designated thereto. Further, the striding line determination condition 406 or the enclosure line determination condition 407 of the defined control data illustrated in FIG. 7 can be used as a determination condition (whether or not a predetermined relationship is satisfied) for determining a decided data as the selected data.

FIG. 14A illustrates an example in which two decided data 13a and 13b written horizontally are specified by the user using the striding line (handwritten data 11a). In this example, a length H1 of the shorter side and a length W1 of the longer side of a handwritten data rectangular region 12a satisfy the conditions of the striding line determination condition 406, and the overlap ratio of the handwritten data rectangular region 12a with respect to the decided data 13a and 13b, respectively, satisfies the conditions of the striding line determination condition 406. For this reason, both the decided data 13a and 13b that are the character string made up of three Kanji characters " 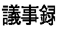 " pronounced "gijiroku" and the character string made up of two Hiragana characters " 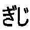 " pronounced "giji", respectively, are specified as the selected data.

FIG. 14B illustrates an example in which a decided data 13c written horizontally is specified by the user using the enclosure line (handwritten data 11b). In this example, only the decided data 13c that is the character string made up of three Kanji characters " 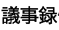 " pronounced "gijiroku", is specified as the selected data, because the overlap ratio of the handwritten data rectangular region 12c with respect to the decided data 13c satisfies the conditions of the enclosure line determination condition 407.

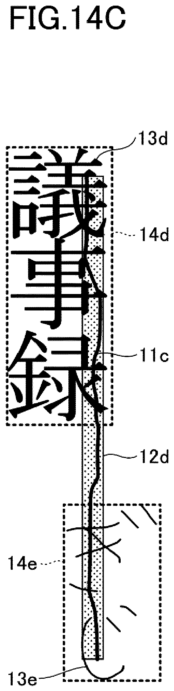

FIG. 14C illustrates an example in which a plurality of decided data 13d and 13e written vertically are specified by the user using the striding line (handwritten data 11c). In this example, similar to FIG. 14A, the length H1 of the shorter side and the length W1 of the longer side of a handwritten data rectangular region 12d satisfy the conditions of the striding line determination condition 406, and the overlap ratio of the handwritten data rectangular region 12c with respect to the decided data 13d that is the character string made up of three Kanji characters " 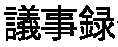 " pronounced "gijiroku", and the decided data 13e that is the character string made up of two Hiragana characters " 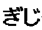 " pronounced "giji", respectively, satisfies the conditions of the striding line determination condition 406. For this reason, the decided data 13d and 13e of both the character string made up of three Kanji characters " 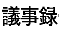 " pronounced "gijiroku" and the character string made up of two Hiragana characters " 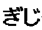 " pronounced "giji", are specified as the selected data.

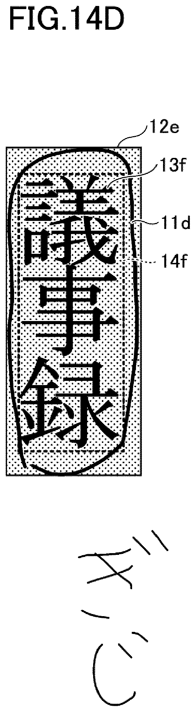

FIG. 14D illustrates an example in which a decided data 13f is specified by the user using the enclosure line (handwritten data 11d). In this example, similar to FIG. 14B, only the decided data 13f that is the character string made up of three Kanji characters " 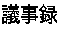 " pronounced "gijiroku" is specified as the selected data.

### <Example of Displaying Operation Command Candidate>

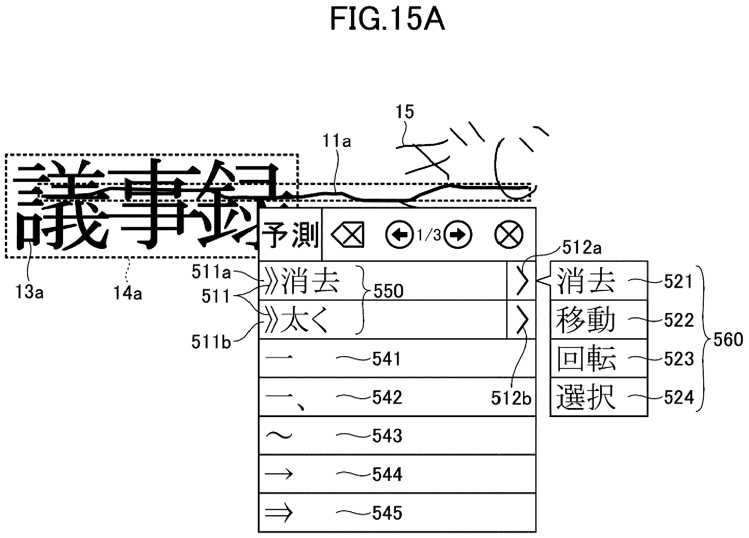

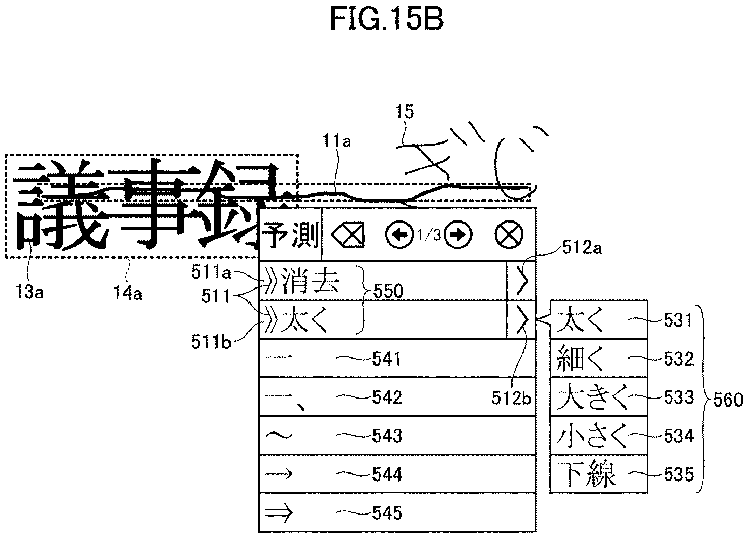

FIG. 15A and FIG. 15B illustrate a display example of the operation command candidate based on the operation command definition data in a case where the handwritten data illustrated in FIG. 14A are present. FIG. 15A illustrates the operation command candidate for the editing system, and FIG. 15B illustrates the operation command candidate for the decorating system. Further, FIG. 15A illustrates the example in which the selected data is specified by the handwritten data 11a illustrated in FIG. 14A.

As illustrated in FIG. 15A and FIG. 15B, a main menu 550 displays the operation command candidates after the bullet character "»" 511. The main menu 550 displays the last executed operation command name, or the first operation command name in the operation command definition data. A bullet character ">>" 511a of the first line displays the operation command candidate for the editing system, and a bullet character ">>" 511b of the second line displays the operation command candidate for the decorating system.

An end-of-line character ">" (an example of a sub menu button) in the operation command 512 indicates that there is a sub menu. In the first line, an end-of-line character ">" 512a causes the (last selected) sub menu to be displayed with respect to the operation command candidates for the editing system. In the second line, an end-of-line character ">" 512b causes remaining sub menus to be displayed with respect to the operation command candidates for the decorating system. When the user presses the end-of-line character ">" in the operation command 512, a sub menu 560 is displayed on the right side thereof. The sub menu 560 displays all operation commands defined in the operation command definition data. In the display example illustrated in FIG. 15A, the sub menu 560 corresponding to the end-of-line character ">" 512a of the first line is also displayed from the time when the main menu 550 is displayed. The sub menu 560 may be displayed when the user presses the end-of-line character ">" 512a of the first line.

When the user presses one of the operation command names by using the pen, the handwritten input display control part 23 executes the "Command" of the operation command definition data (refer to FIG. 12) corresponding to the operation command name, with respect to the selected data. In other words, "Delete" is executed when a "Delete" button 521 is selected, "Move" is executed when a "Move" button 522 is selected, "Rotate" is executed when a "Rotate" button 523 is selected, and "Select" is executed when a "Select" button 524 is selected.

For example, if the user presses the "Delete" button 521 with the pen, the character string made up of three Kanji characters " 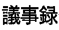 " pronounced "gijiroku" and the character string made up of the two Hiragana characters " 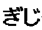 " pronounced "giji" can be deleted. Pressing the "Move" button 522, the "Rotate" button 523, and the "Select" button 524 causes a bounding box (circumscribed rectangle of the selected data). The "Move" button 522 and the "Rotate" button 523 allows the user to move or rotate the characters by a drag operation of the pen. Pressing the "Select" button 524 allows the user to perform other bounding box operations.

Character string candidates other than the operation command candidates, such as "_" 541, "-" 542, "-" 543, "→" 544, and "⇒" 545, are the recognition results of the striding line (handwritten data 11a). Hence, if the user intends to input the character string and not the operation command, the character string candidate can be selected.

In FIG. 15B, when the user presses the end-of-line character ">" 512b of the second line, the sub menu 560 is displayed on the right side thereof. Similar to FIG. 15A, FIG. 15B illustrates the example in which both the main menu 550 and the sub menu 560 are displayed. When a "Thick" button 531a is selected based on the operation command definition data illustrated in FIG. 12, the handwritten input display control part 23 executes "Thick" on the selected data to make the selected data thick. When a "Thin" button 532a is selected, the handwritten input display control part 23 executes "Thin" with respect to the selected data to make the selected data thin. When a "Large" button 533a is selected, the handwritten input display control part 23 executes "Large" with respect to the selected data to make the selected data large. When a "Small" button 534a is selected, the handwritten input display control part 23 executes "Small" with respect to the selected data to make the selected data small. When an "Underline" button 535a is selected, the handwritten input display control part 23 executes "Underline" with respect to the selected data to underline the selected data.

Fixed or default values may be defined separately with respect to the extent to which the selected data is to be thickened when the "Thick" button 531a is selected, the extent to which the selected data is to be thinned when the "Thin" button 532a is selected, the extent to which the selected data is to be enlarged when the "Large" button 533a is selected, the extent to which the selected data is to be reduced when the "Small" button 534a is selected, and the line type to be used when the "Underline" button 535a is selected, or the like. Alternatively, when the sub menu illustrated in FIG. 15B is selected, a separate selection menu can be opened to allow the user to make adjustments to the selected data.

When the user presses the "Thick" button 531a with the pen, the handwritten input display control part 23 thickens the lines forming the decided data 13a and 13b that are the character string made up of three Kanji characters " 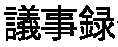 " pronounced "gijiroku" and the character string made up of two Hiragana characters " 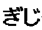 " pronounced "giji", respectively. When the user presses the "Thin" button 532a with the pen, the handwritten input display control part 23 thins the lines forming the decided data 13a and 13b that are the character string made up of three Kanji characters " 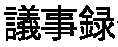 " pronounced "gijiroku" and the character string made up of two Hiragana characters " 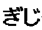 " pronounced "giji", respectively. When the user presses the "large" button 533a with the pen, the handwritten input display control part 23 can enlarge the decided data 13a and 13b, respectively. When the user presses the "Small" button 534a with the pen, the handwritten input display control part 23 can reduce the decided data 13a and 13b, respectively. When the user presses the "Underline" button 535a with the pen, the handwritten input display control part 23 can add the underline to the decided data 13a and 13b, respectively.

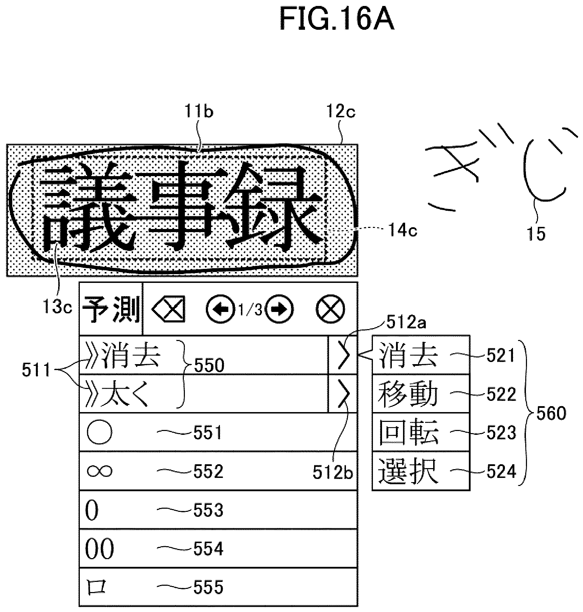

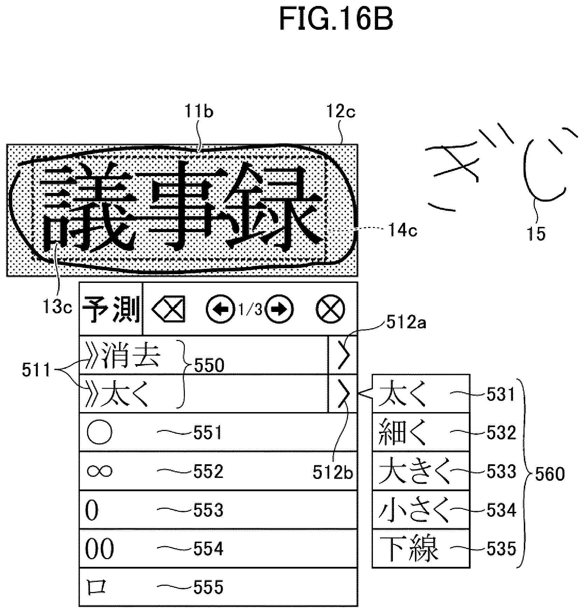

FIG. 16A and FIG. 16B illustrate a display example of the operation command candidate based on the operation command definition data when the handwritten data illustrated in FIG. 14B are present. The difference from FIG. 15A and FIG. 15B is that FIG. 16A and FIG. 16B illustrate the example in which the selected data is specified by the handwritten data 11b (enclosure line) illustrated in FIG. 14B. As may be seen by comparing FIG. 15A and FIG. 15B with FIG. 16A and FIG. 16B, there is no difference in the operation command candidates that are displayed, regardless of whether the handwritten data is the line or the enclosure line, so to enable the handwritten input display control part 23 to display the operation command candidate on the display part 22 when the selected data is specified. However, the handwritten input display control part 23 may recognize the handwritten data and change the operation command candidates according to the handwritten data. In this case, a developer or the like associates the operation command definition data such as that illustrated in FIG. 13 with the recognized handwritten data ("-", "o", or the like), so as to provide correspondence between the recognized handwritten data and the operation command definition data.

In FIG. 16A and FIG. 16B, character string candidates other than the operation command candidates, namely, "o" 551, "∞" 552, "0" 553, "00" 554, and "□" 555, are the recognition results of the enclosure line (handwritten data 11b), and the character string candidate can be selected if the user intends to input the character string and not the operation command. "□" 555 is a Katakana character pronounced "ro".

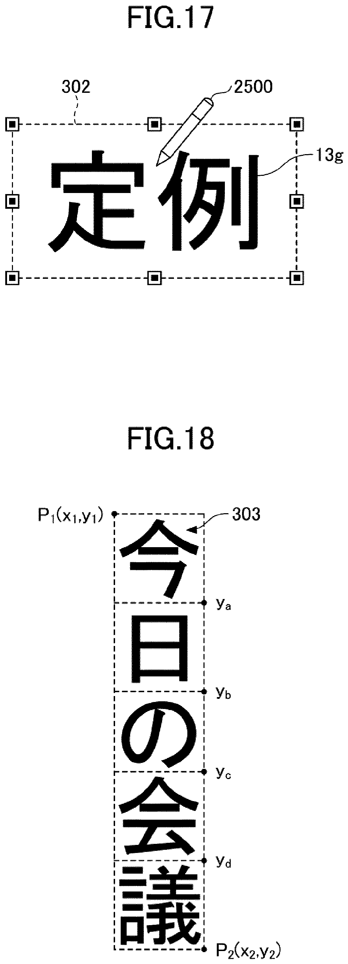

As described above in conjunction with FIG. 14A through FIG. 14D or the like, this embodiment can accept the selection of the decided data by the enclosure line, bar (or straight line), or the like. Further, as illustrated in FIG. 17, the user can select decided data 13g by a long press of the decided data 13g with the pen 2500.

FIG. 17 illustrates an example of the decided data 13g selected by the long press of the pen 2500. As will be described with reference to FIG. 18, the display device 2 manages the coordinates of the character strings in conversion units. Accordingly, the coordinates of a circumscribing rectangle 302 of the decided data 13g are also known. In the example illustrated in FIG. 17, because the coordinates of the pen tip of the pen 2500 are inside the circumscribing rectangle 302 of the decided data 13g, and the coordinates of the pen tip do not move for a predetermined time or longer, the handwritten input display control part 23 detects the selection of the decided data 13g. The decided data 13g becomes the selected data. In the case of the long press, the operation guide 500 is not displayed because no pen up is generated, and there is no corresponding operation command. Hence, the selected data is accepted according to one of three methods using the enclosure line, the bar (or straight line), and the long press, respectively. However, the handwritten input display control part 23 may detect the long press and display the operation guide 500.

### <Method of Determining Character Inserting Destination>

A method determining the character inserting destination will be described, with reference to FIG. 18. FIG. 18 is a diagram for explaining an example of the character inserting destination. FIG. 18 displays the character string " 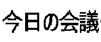 " as the decided data. The handwritten input storage part 25 stores coordinates P1 of the upper left corner of the decided data, and coordinates P2 of the lower right corner of the decided data. It is assumed that the font and the character size being used are known. If the font is known, the character size of each character is also known. For example, the handwritten input storage part 25 includes a table in which the vertical and horizontal sizes are registered in correspondence with the general Kanji, Hiragana, numerals, or the like. Accordingly, the handwritten input display control part 23 can calculate the coordinates of each character (for example, the coordinates of the upper left corner and the lower right corner of one square for accommodating one character), using such registered information.

FIG. 18 illustrates the coordinates ya through yd (x-coordinate is x1 or x2) of the lower right corner of each character. The handwritten input display control part 23 can easily calculate the coordinates ya through yd. Accordingly, the handwritten input display control part 23 can compare the coordinates ya through yd with the coordinates of the pointing end of the arrow 303, and determine the nearest one of the coordinates ya through yd near the coordinates of the pointing end of the arrow 303, as being the inserting destination between two characters.

The insertion is not limited to the insertion of the character between two characters, and the user may insert the character at the beginning or the end of the character string. Hence, the handwritten input display control part 23 compares the coordinates including the coordinates y1 and y2 with the coordinates of the pointing end of the arrow 303, and determines that the nearest one of the coordinates is the inserting destination between two characters. However, at the time of the dropping after the dragging in the case of the insertion of the character, a distance between the coordinates of the pointing end of the arrow 303 and the nearest coordinates between two characters must satisfy the insertion determination condition 408.

### <Process Flow of Character Insertion>

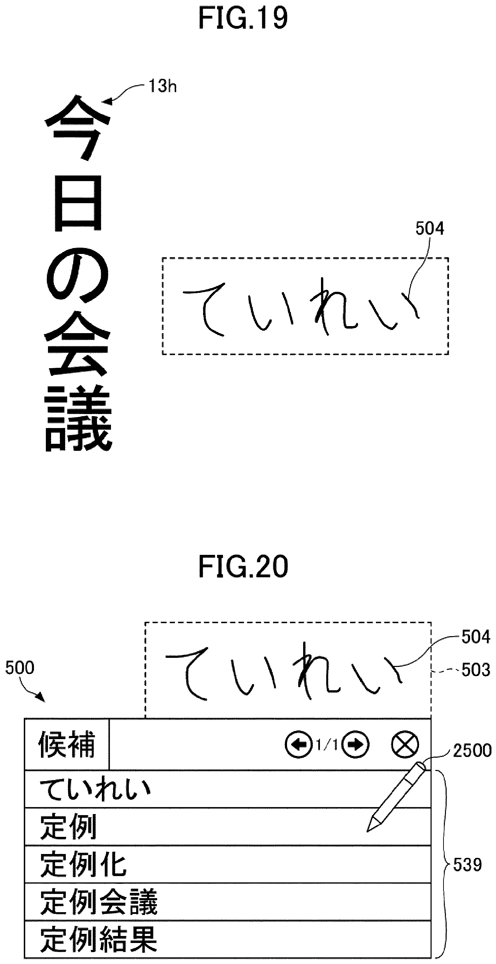

Next, a process flow in which the display device 2 accepts the insertion of the character will be described, with reference to FIG. 19 through FIG. 24. FIG. 19 illustrates an example of decided data 13h and the handwritten data 504. In this example, the character string " 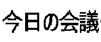 ", as in FIG. 2, is displayed as the decided data 13h. In addition, users handwrites a Hiragana character string " 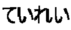 " so as to insert a Kanji character string " 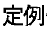 " which is obtained by converting the Hiragana character string. The character string to be inserted with the Kanji character string " 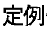 " at the inserting destination is not limited to the decided data, and may be a character string read from a file or the like. The same holds true with respect to the character string which is inserted to the inserting destination.

FIG. 20 illustrates an example of the operation guide 500 displayed with respect to the Hiragana character string " 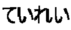 ". The character string candidates 539 that are displayed in this example include " 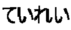 ", " 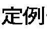 ", " 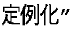 ", " 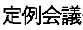 ", and " 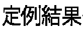 ". The user can select " 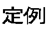 " by pressing the same with the pen 2500. The handwritten input display control part 23 accepts the selection of " 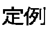 ".

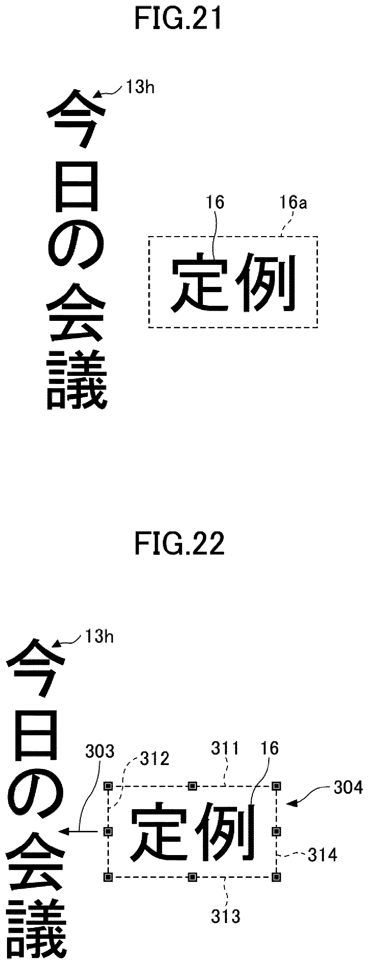

FIG. 21 illustrates a state where the selected character string " 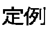 ", which is accepted, is displayed. The character string " 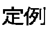 ". which is the selected data 16 (also the decided data), is displayed at the position where the character string " 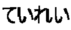 " is handwritten by the user. A frame 16a indicated by a dotted line and surrounding the selected data 16 may be displayed for a predetermined time after the conversion, or may not be displayed at all.

FIG. 22 illustrates an example of the arrow 303 that is displayed when the user selects " 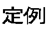 " as the selected data 16. In other words, when the user selects " 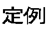 " by the enclosure line or bar, the operation guide 500 is once displayed. When the user starts to drag the selected data 16, the operation guide 500 is erased. The handwritten input display control part 23 starts the display of the arrow 303, or starts the display of the arrow 303 according to the distance from the decided data 13h.

FIG. 22 illustrates an insertion target frame 304 that is displayed to indicate that " 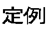 " is being inserted, however, the insertion target frame 304 may or may not be displayed. In the case where the insertion target frame 304 is displayed, the insertion target frame 304 may be displayed at the same timing as the arrow 303, or may always be displayed when the decided data 13h becomes the selected data.

The handwritten input display control part 23 may determine the position where the arrow 303 is displayed to any of the following positions (a1) through (a3).
(a1): Among sides 311 through 314 of the circumscribing rectangle (which may be invisible because the circumscribing rectangle is used for an internal process, but described in FIG. 22 using the insertion target frame 304) surrounding " 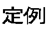 ", a position on the side 312 nearest to the circumscribing rectangle surrounding the decided data 13h. The distance between the circumscribing rectangle surrounding the decided data 13h and the nearest side of the circumscribing rectangle surrounding " 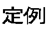 ", is the length of a straight line passing through the center of the side and extending perpendicularly to the side. The handwritten input display control part 23 displays the arrow 303 perpendicularly to the side 312 and toward the decided data 13h. The arrow 303 indicates the position of one or more characters with respect to the character string. The based end of the arrow 303 may be located on the side 312, but may be inside or outside the insertion target frame 304. The position of the arrow 303 on the side 312 may be at any position on the side 312. In FIG. 22, the base end of the arrow 303 is located at a center of the side 312.
(a2): If more than one decided data are present (that is, exist), among the sides 311 through 314 of the circumscribing rectangle (insertion target frame 304) surrounding " 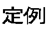 ", a position on the side nearest to the circumscribing rectangle surrounding the decided data 13h, determined similar to (a1) above. The distance between the circumscribing rectangle surrounding the decided data 13h and the nearest side of the circumscribing rectangle surrounding " 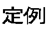 ", is the length of the straight line passing through the center of the side and extending perpendicularly to the side. The display device 2 may display the arrow 303 for each of a plurality of decided data. The distance between the center of each side and the decided data may be the distance until the straight line passing through the center and extending perpendicularly to the side reaches the circumscribing rectangle of the decided data, for example.
(a3): A position on the side in a moving direction of the selected data. For example, when dragging the selected data in the left direction, the handwritten input display control part 23 displays the arrow 303 on the side 312. When the selected data is dragged in an oblique direction, the arrow 303 may be displayed in the direction having a largest component among the four directions (left, right, up, and down directions).

The handwritten input display control part 23 may employ any of the following timings (b1) through (b3) as a timing for displaying the arrow 303.
(b1): A timing immediately after the start of the dragging (immediately after starting to move).
(b2): A timing when the distance between " 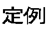 " and decided data 13h is less than a threshold value. This threshold value is different from the threshold value of the insertion determination condition 408, and determines whether or not the arrow 303 is to be displayed. If the insertion determination condition 408 is 2 mm, the threshold value may be 10 mm or the like greater than 2 mm. When a plurality of decided data are present in the periphery of " 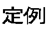 ", the handwritten input display control part 23 compares the distance between each of the sides 311 through 314 and the nearest decided data, with a threshold value, to determine whether or not to display for each of the sides 311 through 314.
(b3): A timing immediately after the selected data is selected (mainly when selected by the long press).

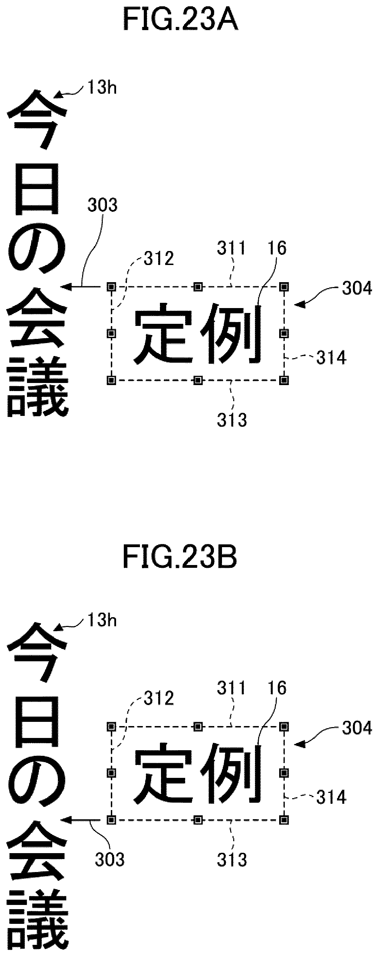

As illustrated in FIG. 23A and FIG. 23B, the position of the arrow 303 is not limited to the center on the side surrounding " 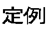 ". FIG. 23A and FIG. 23B are diagrams illustrating examples of the position of the arrow 303. In FIG. 23A, the arrow 303 is displayed at the upper end of the side 312. In FIG. 23B, the arrow 303 is displayed at the lower end of the side 312. The arrow 303 may be displayed anywhere on the side.

The display of the arrow 303 is hidden and the arrow 303 is not displayed when the user ends the dragging (dropping occurs). In other words, the display of the arrow 303 is hidden when the coordinates of the pen 2500 can no longer be detected. If the distance between the decided data 13h and the coordinates of the pointing end of the arrow 303 is less than the threshold value of the insertion determination condition 408, the character string insertion control part 41 inserts the selected data 16 (" 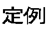 ") to the position between two characters, included in the decided data 13h, and having the coordinates nearest to the coordinates of the pointing end of the arrow 303. Alternatively, the selected data 16 (" 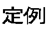 ") may be inserted to the position between the two characters, included in the decided data 13h, and having the coordinates nearest to the coordinates of the pointing end of the arrow 303, regardless of or without considering the insertion determination condition 408.

In the examples illustrated in FIG. 22, FIG. 23A, and FIG. 23B, because the position between the two characters, having the coordinates nearest to the coordinates of the pointing end of the arrow 303, is the position between the Hiragana character " 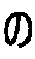 " and the Kanji character " 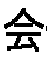 " in the decided data 13h, the character string insertion control part 41 inserts the character string " 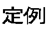 " to the position between the Hiragana character " 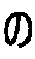 " and the Kanji character " 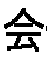 ".

In the embodiment described above, the display element or tag is specified by the arrow, however, the display element or tag may have an arbitrary shape. The shape of the display element or tag may be a triangle, a finger-shaped icon, a diamond, a line segment, or the like, for example.

In addition, under the precondition that the decided data is written vertically or horizontally, the arrow extends in the horizontal or vertical direction, but in a case where the decided data is written obliquely, the arrow may preferably extend in an oblique direction. In other words, the arrow preferably extends in a direction perpendicular with respect to one of the sides of the circumscribed rectangle of the decided data.

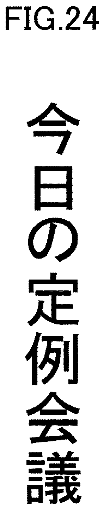

FIG. 24 illustrates the character string in which the character string " 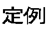 " is inserted into the decided data. By the insertion of " 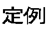 " (regular), the decided data " 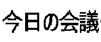 " " (today's meeting) is displayed as the character string " 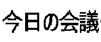 " (today's regular meeting). At the time of insertion, the character string insertion control part 41 acquires the first coordinates (P1 in FIG. 18) at the beginning of the original decided data, and deletes " 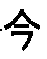 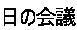 " and " 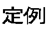 ". Then, the character string insertion control part 41 displays " 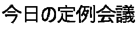 " from the first coordinates at the beginning of the original decided data. The character string insertion control part 41 may additionally display " 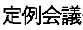 " next to " 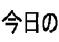 ", without deleting " 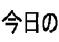 .

Regarding the character size, if the character sizes of the decided data and the selected data are different, the handwritten input display control part 23 matches the character size of the selected data to the character size of the decided data. In this case, the handwritten input display control part 23 can display a character string that is easily recognizable or readable. The handwritten input display control part 23 may display the character string inserted with the selected data using the original sizes of the decided data and the selected data, according to the user's instruction, setting, or the like.

### <Handwriting Direction of Decided Data and Handwriting Direction of Selected Data>

In FIG. 19 through FIG. 24, the handwriting direction of the decided data is the vertical direction, and the handwriting direction of the selected data (" 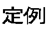 ") is the horizontal direction. In this case, the height of the selected data 16 does not exceed the height of one character, thereby facilitating the user's understanding of the position (inserting destination) of the selected data with respect to the decided data. Accordingly, the user may write the character string to be inserted in a handwriting direction different from the handwriting direction of the decided data. On the other hand, the handwritten input display control part 23 changes the display direction of the selected data 16 (" 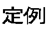 ") from horizontal writing direction into the vertical writing direction, before inserting the selected data 16 into the decided data 15h. More particularly, because the handwritten input display control part 23 processes the character string " 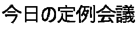 " in character codes, the display direction of the character string " 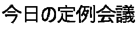 " may be set to the vertical direction.

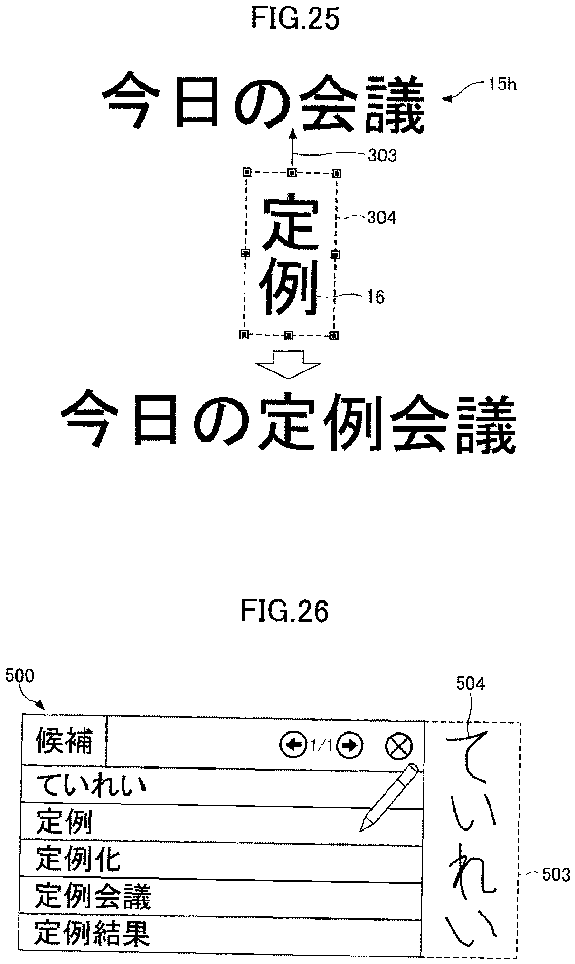

In addition, as illustrated in FIG. 25, the handwriting direction of the decided data 15h may be the horizontal direction, and handwriting direction of the selected data 16 (" 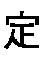 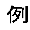 ") may be the vertical direction. FIG. 25 illustrates an example of the horizontally written decided data 15h, and the vertically written selected data 16. In this case, the width of the selected data 16 does not exceed the width of one character, thereby facilitating the user's understanding of the position (inserting destination) of the selected data with respect to the decided data.

According to this embodiment, because the position of the selected data with respect to the decided data is displayed by the arrow 303, the handwriting direction of the decided data 15h may be the vertical direction, and the handwriting direction of the selected data 16 (" 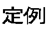 ") may be the vertical direction. Similarly, the handwriting direction of the decided data 15h may be the horizontal direction, and the handwriting direction of the selected data 16 (" 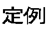 ") may be the horizontal direction.

FIG. 26 illustrates an example of the display of the operation guide 500 when the user writes vertically. The user handwrites the handwritten data 504 " 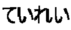 " in the vertical direction. In this case, the operation guide 500 is displayed on the left side of the handwritten data rectangular area display 503, for example. The operation guide 500 may be displayed on the right side of the handwritten data rectangular area display 503, or below the handwritten data rectangular area display 503 as in the case of horizontal writing. In addition, the operation guide 500 may be displayed above the handwritten data rectangular area display 503.

### <Other Display Example of Inserting Destination>

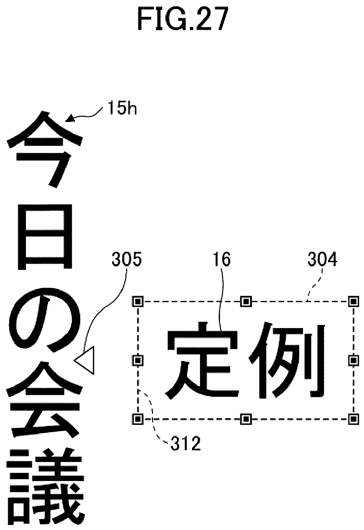

As illustrated in FIG. 27, the handwritten input display control part 23 may display an insertion symbol 305 indicating the inserting destination on the side of the decided data 15h. FIG. 27 is an example of the insertion symbol 305 indicating the inserting destination, displayed on the side of the decided data. In FIG. 27, the triangular insertion symbol 305 (an example of the display element or tag) is displayed between the Hiragana character " 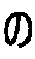 " and the Kanji character " 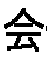 ". The insertion symbol 305 indicates the position of one or more characters with respect to the character string. When the distance between the selected data 16 and the decided data 15h becomes less than the threshold value, the handwritten input display control part 23 displays the insertion symbol 305 between two characters on the side of the decided data 15h, nearest to the center of the side 312 forming the circumscribed rectangle (insertion target frame 304) of the selected data 16. When the user drags and moves the selected data, the handwritten input display control part 23 changes the position of the insertion symbol 305 according to the center position of the side 312.

Accordingly, the user can grasp the position where the selected data is to be inserted based on the position of the insertion symbol 305, even if the arrow 303 is not displayed.

The shape of the insertion symbol 305 is not limited to the triangle, and may be an arrow, a circle, a rectangle, a point, or the like. The shape of the insertion symbol 305 may be a line separating two characters. Moreover, the handwritten input display control part 23 may change the color between the two characters, or change the color of the characters before and after at the inserting position. The arrow 303 and the insertion symbol 305 may be displayed simultaneously. In this case, the colors or shapes of the arrow 303 and the insertion symbol 305 are preferably designed to indicate a link therebetween. For example, the handwritten input display control part 23 may make the shapes of both the arrow 303 and the insertion symbol 305 the triangle, rectangle, or circle, or alternatively, make the shape of the arrow 303 convex and the shape of the insertion symbol 305 concave.

### <Operation Procedure>

The operation of the display device will be described using the above described configurations, with reference to FIG. 28 through FIG. 33. FIG. 28 through FIG. 33 are sequence diagrams illustrating an example of a process in which the display device 2 displays the character string candidate and the operation command candidate. The process illustrated in FIG. 28 starts when the display device 2 is started (when the application program is started). In FIG. 28 through FIG. 33, the functions illustrated in FIG. 6 are indicated by the reference numerals for the sake of convenience, due to space limitations.

First, in step S1 illustrated in FIG. 28, the handwritten input display control part 23 transmits a start of the handwritten data to the handwritten input storage part 25, and in response thereto, the handwritten input storage part 25 secures a handwritten data region (memory region for storing the handwritten data). The handwritten data region may be secured after the user causes the pen 2500 to make contact with the handwritten input part 21.

Next, in step S2, the user causes the pen 2500 to make contact with the handwritten input part 21, and the handwritten input part 21 detects and transmits the pen down to the handwritten input display control part 23.

In step S3, the handwritten input display control part 23 transmits a start of the stroke to the handwritten input storage part 25, and the handwritten input storage part 25 secures a stroke region.

In step S4, when the user moves the pen 2500 while the pen 2500 maintains contact with the handwritten input part 21, the handwritten input part 21 transmits the pen coordinates to the handwritten input display control part 23.

In step S5, the handwritten input display control part 23 transmits pen coordinate complement display data (data interpolating discrete pen coordinates) to the display part 22. The display part 22 displays a line by interpolating the pen coordinates using the pen coordinate complement display data.

In step S6, the handwritten input display control part 23 transmits the pen coordinates and a reception time thereof to the handwritten input storage part 25, and the handwritten input storage part 25 adds the pen coordinates to the stroke. While the user is moving the pen 2500, the handwritten input part 21 periodically repeats transmitting the pen coordinates to the handwritten input display control part 23, and thus, the processes of steps S4 through S6 are repeated until the pen up.

In step S7 illustrated in FIG. 29, when the user releases the pen 2500 from the handwritten input part 21, the handwritten input part 21 transmits the pen up to the handwritten input display control part 23.

In step S8, the handwritten input display control part 23 transmits an end of the stroke to the handwritten input storage part 25, and the handwritten input storage part 25 determines the pen coordinates of the stroke. The pen coordinates cannot be added to the stroke after the pen coordinates of the stroke are determined.

Next, in step S9, the handwritten input display control part 23 transmits an overlapping state acquisition of the handwritten data rectangular region and the stroke rectangular region to the handwritten input storage part 25, based on the handwritten data rectangular region 403. The handwritten input storage part 25 calculates the overlapping state, and transmits the calculated overlapping state to the handwritten input display control part 23.

Subsequent steps S10 through S15 are performed when the handwritten data rectangular region and the stroke rectangular region do not overlap each other.

In step S10, if the handwritten data rectangular region and the stroke rectangular region do not overlap each other, one handwritten data is determined, and thus, the handwritten input display control part 23 transmits a stored data clear to the handwriting recognition control part 26.

In steps S11 through S13, the handwriting recognition control part 26 transmits the stored data clear to each of the character string conversion control part 28, the predictive conversion control part 30, and the operation command recognition control part 32. In response to the stored data clear, the handwriting recognition control part 26, the character string conversion control part 28, the predictive conversion control part 30, and the operation command recognition control part 32 clear the data related to the character string candidates and the operation command candidates stored up to a point in time immediately before receiving the stored data clear. At the time of clearing the data, the last handwritten stroke is not added to the handwritten data.

In step S14, the handwritten input display control part 23 transmits the end of the handwritten data to the handwritten input storage part 25, and the handwritten input storage part 25 determines the handwritten data. The handwritten data is determined when one handwritten data is completed (no more strokes are added).

In step S15, the handwritten input display control part 23 transmits the start of the handwritten data to the handwritten input storage part 25. In order to prepare for the start of handwriting (pen down) of the next handwritten data, the handwritten input storage part 25 secures a new handwritten data region.

Next, in step S16 illustrated in FIG. 30, the handwritten input display control part 23 transmits a stroke addition with respect to the stroke ended in step S8 to the handwritten input storage part 25. When steps S10 through S15 are performed, the added stroke is the first stroke of the handwritten data, and the handwritten input storage part 25 adds the stroke data to the handwritten data that is being started to be handwritten. If steps S10 through S15 are not performed, the added stroke is already added to the handwritten data that is being handwritten.

Subsequently, in step S17, the handwritten input display control part 23 transmits the stroke addition to the handwriting recognition control part 26, and the handwriting recognition control part 26 adds stroke data to a stroke data storage region (region where the stroke data is temporarily stored) where the character string candidates are stored.

In step S19, the handwriting recognition control part 26 executes a handwriting recognition with respect to the stroke data storage region.

In step S20, the handwriting recognition control part 26 transmits the recognized handwritten character string candidates, which are the execution results of the handwriting recognition, to the handwriting recognition dictionary part 27. The handwriting recognition dictionary part 27 transmits the language character string candidates that are linguistically probable to the handwriting recognition control part 26.

In step S21, the handwriting recognition control part 26 transmits the recognized handwritten character string candidates and the received language character string candidates to the character string conversion control part 28.

In step S22, the character string conversion control part 28 transmits the recognized handwritten character string candidates and the language character string candidates to the character string conversion dictionary part 29. The character string conversion dictionary part 29 transmits the converted character string candidates to the character string conversion control part 28.

In step S23, the character string conversion control part 28 transmits the received converted character string candidates to the predictive conversion control part 30.

In step S24, the predictive conversion control part 30 transmits the received converted character string candidates to the predictive conversion dictionary part 31. The predictive conversion dictionary part 31 transmits the predicted character string candidates to the predictive conversion control part 30.

In step S25, the predictive conversion control part 30 transmits the received predicted character string candidates to the operation command recognition control part 32.

In step S26, the operation command recognition control part 32 transmits the received predicted character string candidates to the operation command definition part 33. The operation command definition part 33 transmits the operation command candidates to the operation command recognition control part 32. Accordingly, the operation command recognition control part 32 can acquire the operation command candidate corresponding to the operation command definition data including the character string (String) matching the predicted character string candidate.

Thereafter, the processes up to the transmission of the operation command candidates described in conjunction with steps S27 through S32 are performed similarly.

In step S27, the character string conversion control part 28 transmits the received converted character string candidates to the operation command recognition control part 32.

In step S28, the operation command recognition control part 32 transmits the received converted character string candidates to the operation command definition part 33. The operation command definition part 33 transmits the operation command candidates to the operation command recognition control part 32. Accordingly, the operation command recognition control part 32 can acquire the operation command candidate corresponding to the operation command definition data including the character string (String) matching the converted character string candidate.

In step S29, the handwriting recognition control part 26 transmits the recognized handwritten character string candidates and the language character string candidates to the predictive conversion control part 30.

In step S30, the predictive conversion control part 30 transmits the recognized handwritten character string candidates and the received language character string candidates to the predictive conversion dictionary part 31. The predictive conversion dictionary part 31 transmits the predicted character string candidates to the predictive conversion control part 30.

In step S31, the predictive conversion control part 30 transmits the received predicted character string candidates to the operation command recognition control part 32.

In step S32, the operation command recognition control part 32 transmits the received predicted character string candidates to the operation command definition part 33. The operation command definition part 33 transmits the operation command candidates to the operation command recognition control part 32. Accordingly, the operation command recognition control part 32 can acquire the operation command candidate corresponding to the operation command definition data including the character string (String) matching the predicted character string candidate.

In step S33, the handwriting recognition control part 26 transmits the recognized handwritten character string candidates and the received language character string candidates to the operation command recognition control part 32.

In step S34, the operation command recognition control part 32 transmits the recognized handwritten character string candidates and the received language character string candidates to the operation command definition part 33. The operation command definition part 33 transmits the operation command candidates to the operation command recognition control part 32. Accordingly, the operation command recognition control part 32 can acquire the operation command candidate corresponding to the operation command definition data including the character string (String) matching the language character string candidate.

Next, in step S35, the handwriting recognition control part 26 transmits the stroke addition to the operation command recognition control part 32.

In step S36, the operation command recognition control part 32 transmits the position information acquisition of the decided data to the handwritten input storage part 25. The handwritten input storage part 25 transmits the position information of the decided data to the operation command recognition control part 32.

In step S37, the operation command recognition control part 32 determines whether or not the position information of the stroke received from the handwriting recognition control part 26 by the stroke addition in step S35 is in a predetermined relationship with the position information of the decided data received from the handwritten input storage part 25, based on the striding line determination condition 406 and the enclosure line determination condition 407, in order to determine the selected data. The operation command recognition control part 32 stores the decided data that can be determined to be selected, as the selected data. In this case, because the selected data is identified, the operation command recognition control part 32 can acquire the operation command candidates of the input and output system from the operation command definition part 33.

Further, the handwriting recognition control part 26, the character string conversion control part 28, the predictive conversion control part 30, and the operation command recognition control part 32 store the data related to the recognized handwritten character string candidates, the language character string candidates, the converted character string candidates, the predicted character string candidates, the operation command candidates, and the selected data, so that the data can be acquired in steps S42 through S45 at subsequent stages which will be described later, respectively.

In step S18, the handwritten input display control part 23 transmits the start of the selectable candidate display timer to the candidate display timer control part 24, immediately after transmitting the stroke addition to the handwriting recognition control part 26 in step S17. The candidate display timer control part 24 starts the selectable candidate display timer in response to receiving the start of the selectable candidate display timer.

Subsequent steps S38 through S40 illustrated in FIG. 31 are performed if the pen down occurs before a predetermined time elapses (before the time out of the timer occurs).

In step S38, if the user causes the pen 2500 to contact the handwritten input part 21 before the time out of the timer occurs, the handwritten input part 21 transmits the pen down (the same event as in step S2) to the handwritten input display control part 23.

In step S39, the handwritten input display control part 23 transmits the start of the stroke (the same as in step S3) to the handwritten input storage part 25. The sequence after step S39 is the same as the sequence after step S3.

In step S40, the handwritten input display control part 23 transmits the selectable candidate display timer stop request to the candidate display timer control part 24. The candidate display timer control part 24 stops the selectable candidate display timer in response to the stop request, because the pen down is detected, thereby eliminating the need for timer.

Steps S41 through S77 are performed if no pen down occurs before a predetermined time elapses (before the time out of the timer occurs). Accordingly, the character string candidates and the operation command candidates illustrated in FIG. 13 are displayed.

In step S41, the candidate display timer control part 24 transmits the time out to the handwritten input display control part 23 if the user does not cause the pen 2500 to contact the handwritten input part 21 after the selectable candidate display timer is started.

In step S42, the handwritten input display control part 23 transmits the acquisition request of the handwriting recognition character string/language character string candidates to the handwriting recognition control part 26. In response to this acquisition request, the handwriting recognition control part 26 transmits the handwriting recognition character string/language character string candidates currently stored to the handwritten input display control part 23.

In step S43, the handwritten input display control part 23 transmits the acquisition request for the converted character string candidates to the character string conversion control part 28. In response to this acquisition request, the character string conversion control part 28 transmits the currently stored converted character string candidates to the handwritten input display control part 23.

In step S44, the handwritten input display control part 23 transmits the acquisition request for the predicted character candidates to the predictive conversion control part 30. In response to this acquisition request, the predictive conversion control part 30 transmits the predicted character string candidates currently stored to the handwritten input display control part 23.

In step S45, the handwritten input display control part 23 transmits the acquisition request for the operation command candidates to the operation command recognition control part 32. In response to this acquisition request, the operation command recognition control part 32 transmits the currently stored operation command candidates and selected data to the handwritten input display control part 23.

Next, in step S46, the handwritten input display control part 23 transmits the acquisition request for the estimated writing direction to the handwritten input storage part 25. In response to this acquisition request, the handwritten input storage part 25 determines the estimated writing direction from a stroke addition time, the horizontal distance, and the vertical distance of the handwritten data rectangular region, and transmits the estimated writing direction to the handwritten input display control part 23.

In step S47, the handwritten input display control part 23 creates the selectable candidate display data, such as those illustrated in FIG. 13, from the recognized handwritten character string candidates (" 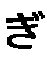 " in FIG. 13), the language character string candidates (not displayed in FIG. 13, but may be " 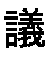 ", for example), the converted character string candidates (" 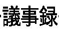 " and " 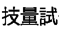 " in FIG. 13), the predicted character string candidates (" 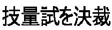 " and " 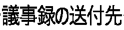 " in FIG. 13), the operation command candidates (" 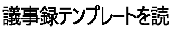 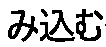 " and " 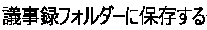 " in FIG. 13), each of the probabilities of selection, and the estimated writing direction. In addition, the handwritten input display control part 23 transmits the created selectable candidate display data, including the character string candidates and the operation command candidates, to the display part 22 to be displayed thereby.

In step S48, the handwritten input display control part 23 transmits the rectangular area display data (rectangular frame) of the handwritten data and the selected data (handwritten data rectangular area display 503 in FIG. 13) to be displayed thereby.

In step S49, the handwritten input display control part 23 transmits the start of the selectable candidate display deletion timer to the candidate display timer control part 24, in order to delete the selected candidate display data after a predetermined time elapses from the time when the selectable candidate display data are displayed. The candidate display timer control part 24 starts the selectable candidate display deletion timer in response to receiving the start of the selectable candidate display deletion timer.

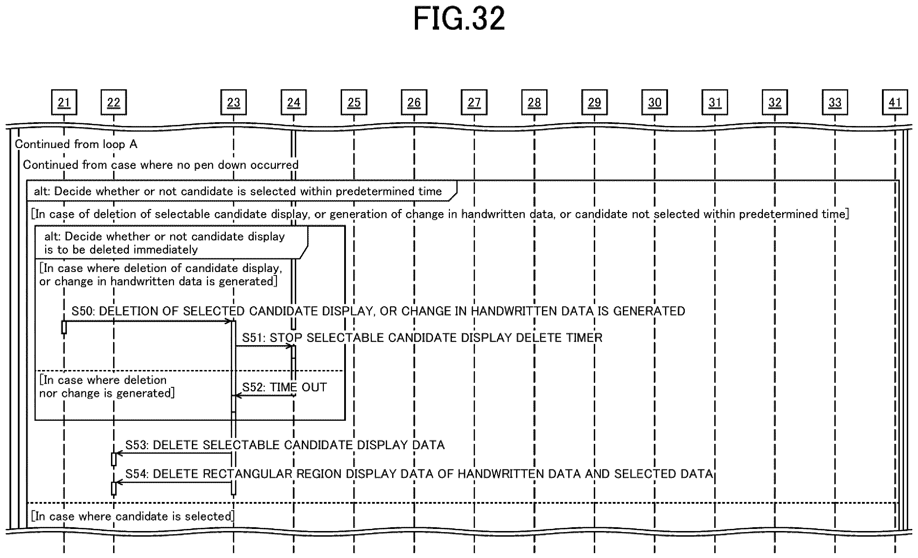

Steps S50 through S54 illustrated in FIG. 32 are performed when the user deletes the selectable candidate display displayed on the display part 22, or when the change of the handwritten data occurs (that is, the stroke of the handwritten data is added, deleted, moved, deformed, or segmented), or when the candidate is not selected before the time out, after the selectable candidate delete timer is started.

Further, steps S50 and S51 are performed when the candidate display is deleted or the change in the handwritten data occurs.

In step S50, the handwritten input part 21 transmits the occurrence of the selectable candidate display deletion or the change in the handwritten data to the handwritten input display control part 23.

In step S51, the handwritten input display control part 23 transmits the stop of the selectable candidate deletion timer. The candidate display timer control part 24 stops the selectable candidate deletion timer in response to receiving the stop of the selectable candidate deletion timer, because an operation is performed on the handwritten data within a predetermined time, and the selectable candidate deletion timer is no longer required.

In step S53, the handwritten input display control part 23 transmits the deletion request for the selectable candidate display data to the display part 22, to delete the selectable candidate display.

In step S54, the handwritten input display control part 23 transmits the deletion request for the rectangular area display data of the handwritten data and the selected data to the display part 22, to delete the rectangular area display. Accordingly, if the display of the operation command candidates is deleted under conditions other than the selection of the operation command candidate, the display of the handwritten data is maintained as is.

On the other hand, in step S54, if no deletion of the selectable candidate display nor the change in the handwritten data occurs after the selectable candidate deletion timer is started (if the user does not perform the pen operation), the candidate display timer control part 24 transmits the time out to the handwritten input display control part 23.

Similarly, after the time out of the selectable candidate display deletion timer, the handwritten input display control part 23 executes steps S53 and S54, because the display part 22 may delete the selectable candidate display data, and rectangular area display data of the handwritten data and the selected data, after the lapse of the predetermined time.

If the user selects the selectable candidate after the selectable candidate delete timer is started, steps S55 through S77 illustrated in FIG. 33 are performed.

In step S55, if the user selects the selectable candidate after the selectable candidate deletion timer is started, the handwritten input part 21 transmits the selection of the character string candidate or the operation command candidate to the handwritten input display control part 23.

In step S56, the handwritten input display control part 23 transmits the stop of the selectable candidate display deletion timer to the candidate display timer control part 24. The candidate display timer control part 24 stops the selectable candidate display deletion timer in response to receiving the stop of the selectable candidate display deletion timer.

Next, in step S57, the handwritten input display control part 23 transmits a stored data clear to the handwriting recognition control part 26.

In step S58, the handwriting recognition control part 26 transmits the stored data clear to the character string conversion control part 28.

In step S59, the handwriting recognition control part 26 transmits the stored data clear to the predictive conversion control part 30.

In step S60, the handwriting recognition control part 26 transmits the stored data clear to the operation command recognition control part 32.

The handwriting recognition control part 26, the character string conversion control part 28, the predictive conversion control part 30, and the operation command recognition control part 32 respectively clear the data related to the character string candidates and the operation command candidates stored up to a point in time immediately before receiving the stored data clear.

Next, in step S61, the handwritten input display control part 23 transmits the deletion of the selectable candidate display data to the display part 22, to delete the selectable candidate display.

In step S62, the handwritten input display control part 23 transmits the deletion of the rectangular area display data of the handwritten data and the selected data to the display part 22, to delete the rectangular area display.

In step S63, the handwritten input display control part 23 transmits the deletion of the handwritten data display data, and the deletion of the pen coordinate complement display data transmitted in step S5, to the display part 22, to delete the handwritten data display and the pen coordinate complement display. The handwritten data display and the pen coordinate complement display may be deleted, because the character string candidate or the operation command candidate is selected, thereby eliminating the need for the handwritten data, or the like.

In step S64, the handwritten input display control part 23 transmits the deletion of the handwritten data to the handwritten input storage part 25.

If the character string candidate is selected by the user, steps S65 through S67 are performed.

In step S65, when the character string candidate is selected, the handwritten input display control part 23 transmits the addition of the character string data to the handwritten input storage part 25.

Further, in step S66, the handwritten input display control part 23 transmits the acquisition for the character string data font to the handwritten input storage part 25. The handwritten input storage part 25 selects a defined font from an estimated character size of the handwritten data, and transmits the selected font to the handwritten input display control part 23.

Next, in step S67, the handwritten input display control part 23 transmits the character string data display data, which is to be displayed at the same position as the handwritten data, to the display part 22 using the defined font received from the handwritten input storage part 25, so as to display the character string data display data.

If the operation command candidate is selected, steps S68 through S71 are performed. Furthermore, steps S68 through S70 are performed if the selected data are present.

In step S68, when the operation command candidate for the selected data is selected (when the selected data are present), the handwritten input display control part 23 transmits the deletion of the selected data display data to the display part 22, and deletes the selected data display, in order for the handwritten input display control part 23 to delete the original selected data.

Next, in step S69, the handwritten input display control part 23 transmits the operation command execute for the selected data to the handwritten input storage part 25. The handwritten input storage part 25 transmits the display data (display data after editing or decorating) of the newly selected data to the handwritten input display control part 23.

Next, in step S70, the handwritten input display control part 23 transmits the selected data display data to the display part 22, so that the selected data after executing the operation command is redisplayed.

When no selected data are present (when the operation commands of the input and output system are selected), step S71 is performed.

In step S71, when the operation commands of the input and output system are selected, the handwritten input display control part 23 executes the operation command character string (Command) of the operation command definition data corresponding to the operation command selected by the user.

When the insertion process is performed, that is, when the user starts the drag and drop of the selected data, steps S72 through S76 are performed.

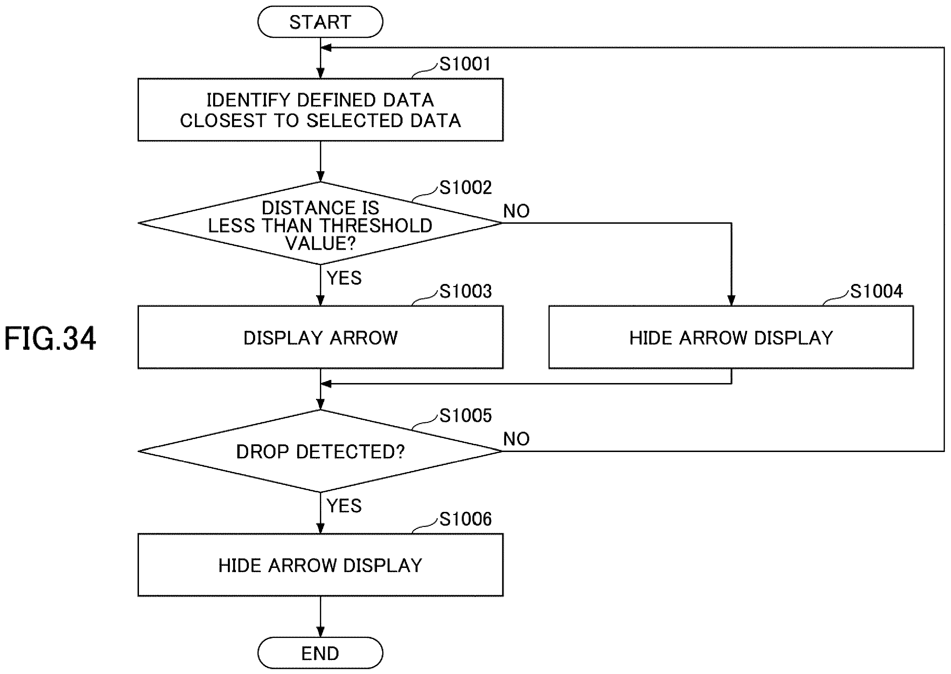

In step S72, the users start to drag the selected data 16. The handwritten input display control part 23 can detect that the coordinates of the pen tip of the pen 2500 are inside the circumscribing rectangle of the selected data 16, and determine that the dragging is being performed and not a stroke input. If the selected data 16 is selected by the enclosure line or bar, the operation guide 500 is displayed, and thus, when the selected data is selected, the handwritten input display control part 23 erases the operation guide 500. The handwritten input display control part 23 moves and displays the selected data 16 at the coordinates of the pen tip of the pen 2500. Further, the handwritten input display control part 23 displays the arrow 303 while the selected data 16 is being dragged, as will be described with reference to FIG. 34 in more detail.

In addition, the user determines the inserting destination while observing the displayed arrow 303, and drops the selected data 16 (performs a pen up). The handwritten input display control part 23 acquires the pen up from the handwritten input part 21.

In step S73, when the drop (dropping of the selected data 16) is detected, the handwritten input display control part 23 erases the arrow 303.

In step S74, the handwritten input display control part 23 transmits the coordinates of the pointing end of the arrow 303, the selected data, and the decided data at the time when the drop occurs, to the character string insertion control part 41. If no decided data other than the selected data 16 is present, or if the setting is such that the arrow 303 is to be displayed according to the distance between the decided data and the selected data 16, and the handwritten input display control part 23 does not display the arrow 303, the handwritten input display control part 23 determines that the process is not an insertion process, and does not transmit anything to the character string insertion control part 41. Hence, in this case, the process is simply a moving process with respect to the selected data 16.

In step S75, the character string insertion control part 41 identifies the two characters, nearest to the coordinates of the pointing end of the arrow 303, from the decided data, and inserts the selected data between the two characters if the distance between the coordinates of the pointing end of the arrow 303 and the decided data is less than the threshold value of the insertion determination condition 408. The character string insertion control part 41 transmits the character string, inserted with the selected data, to the handwritten input display control part 23.

In step S76, the handwritten input display control part 23 erases the decided data and the selected data, and displays the character string after the insertion on the display part 22.

In step S77, for the next handwritten data, the handwritten input display control part 23 transmits the start of the handwritten data to the handwritten input storage part 25. The handwritten input storage part 25 secures the handwritten data region. Thereafter, the processes of steps S2 through S77 are repeated.

### <Supplement to Sequence Diagrams>

The insertion process of this embodiment will be described with respect to the sequence diagrams described above. First, when the user handwrites the Hiragana characters " 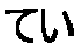 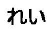 " in order to insert the Kanji characters " 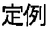 " the operation guide 500 illustrated in FIG. 13 is displayed in step S47. The user selects " 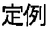 " of the operation guide 500 in step S55. Hence, the operation guide 500 once erased in steps S61 through S63.

Next, the user selects " 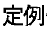 " by the enclosure line or bar. For this reason, the operation guide 500 is displayed in step S47. The operation guide 50 is not displayed when in the case of the long press. The processes of steps S72 through S76 are performed because the user starts dragging of the selected data 16 (" 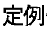 ")

### <Display of Arrow>

The process of the handwritten input display control part 23, which displays the arrow 303 indicating the inserting destination, will be described by referring to FIG. 34. FIG. 34 is a flow chart illustrating an example of the process of the handwritten input display control part 23 which displays the arrow 303 indicating the inserting destination. In this example, a case where the display and the hiding of the arrow 303 are controlled according to the positional relationship between the decided data and the selected data, will be described. The positional relationship refers to the distance, for example. The process of FIG. 34 starts when the dragging of the selected data starts.

First, in step S1001, the handwritten input display control part 23 identifies the decided data 15h nearest to the selected data 16.

In step S1002, the handwritten input display control part 23 determines whether or not the distance between the pointing end of the arrow 303 and the decided data 15h is less than the threshold value. Alternatively, the handwritten input display control part 23 may determine whether or not the distance is less than or equal to the threshold value. In steps S1001 and S1002, the decided data 15h being identified and determined is not limited to the nearest decided data, and may be all decided data having the distance less than the threshold value. The threshold value may be fixed, or may be determined according to the size of the selected data 16. The arrow 303 may preferably be displayed before the pointing end of the arrow 303 and the decided data 15h overlap.

When the decided data 15h having the distance less than the threshold value are present, and the decision result in step S1002 is Yes, the process advances to step S1003. In step S1003, the handwritten input display control part 23 displays the arrow 303 indicating the direction of the decided data 15h. The handwritten input display control part 23 displays the arrow 303 at the center of the side 312 nearest to the circumscribing rectangle of the decided data 13h, for example. The pointing end of the arrow 303 is displayed on the side of the decided data 13h, and the base end of the arrow 303 is displayed on the side of the selected data 16.

On the other hand, if the decision result in step S1002 is No, the process advances to step S1004. In step S1004, with respect to the decided data having the distance not less than the threshold value, the handwritten input display control part 23 hides the arrow 303 indicating the direction of the decided data, so that the arrow 303 is not displayed.

Then, in step S1005, the handwritten input display control part 23 determines whether or not the drop (dropping of the selected data 16) is detected. In other words, the handwritten input display control part 23 determines whether or not the pen coordinates are no longer transmitted from the handwritten input part 21.

The process returns to step S1001 if no drop is detected and the decision result in step S1005 is No, and the process advances to step S1006 if the drop is detected and the decision result in step S1005 is Yes. In step S1006, the handwritten input display control part 23 hides the arrow 303, so that the arrow 303 is not displayed. As a result, the character string insertion control part 41 starts the insertion of the selected data 16 into the decided data 13h.

### <Advantageous Features>

As described above, because the display device 2 according to this embodiment displays the arrow 303 indicating the position of one or more characters with respect to the character string, it is possible to clarify the relative positions of the character string and the one or more characters. Even if the number of characters of the insertion target is large, the user can easily insert the characters or the like at the desired inserting position.

### [Second Embodiment]

In this embodiment, the display device 2 displays the arrow 303 indicating the position of one or more characters in English (or alphabets) with respect to the character string in English. The configuration of the display device 2 in this embodiment is the same as that of the first embodiment, except that the conversion dictionary and the operation command definition data correspond to the English language. For this reason, the features of the display device 2 that are different from those of the first embodiment will be described, based on the conversion of the handwritten data into English (hereinafter, referred to as "English conversion") will be described.

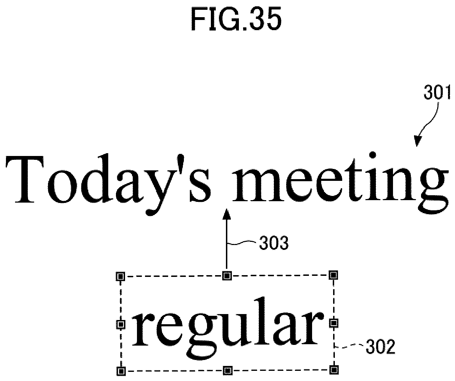

FIG. 35 is a diagram for explaining the method of inserting characters into the character string when performing the English conversion. In the description of FIG. 35, only the differences from FIG. 2 will mainly be described. The user inputs handwritten data "Todays' meeting" to the display device 2, and the display device 2 converts the handwritten data into the character string "Today's meeting" 301, to display the same. The user notices that a space is provided between "Today's" and "meeting" of the character string "Today's meeting" 301, and inputs handwritten data "regular" to the display device 2, and the display device 2 converts the handwritten data into the character string "regular" 302. When the user selects or drags the character string "regular" 302, the display device 2 displays the arrow 303 indicating the inserting destination. The base end of the arrow 303 faces the character string "regular" 302, and the pointing end of the arrow 303 faces and points to the inserting destination, thereby clarifying the inserting destination of the character string "regular" 302 with respect to the character string "Today's meeting" 301. Hence, the user can easily comprehend the inserting destination, that is, the desired inserting position of the character string "regular" 302. The user drags the character string "regular" 302 and drops the same at the desired inserting position indicated by the arrow 303, by aligning the pointing end of the arrow 303 to the desired inserting position.

Accordingly, even in the case of the English conversion, because the display device 2 according to this embodiment displays the arrow 303 indicating the position of one or more characters with respect to the character string, it is possible to clarify the relative positions of the character string and the one or more characters. Even if the number of characters of the insertion target is large, the user can easily insert the characters or the like at the desired inserting position.

The description of FIG. 3 through 6 given above with respect to the first embodiment also applies to the second embodiment.

### <Defined Control Data>

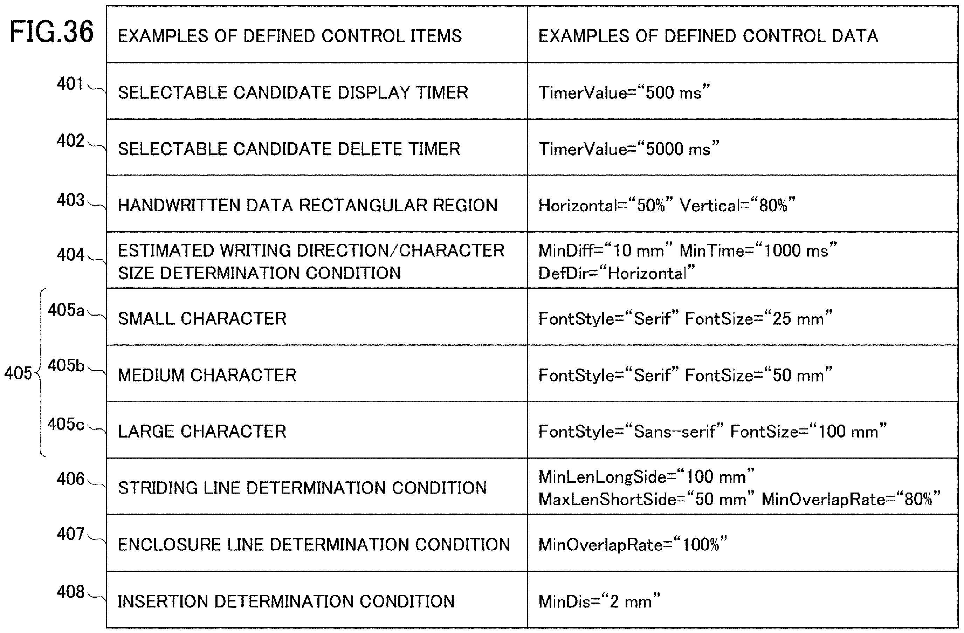

FIG. 36 is a diagram illustrating an example of the defined control data used for the English conversion. In the description of FIG. 36, the differences from FIG. 7 will mainly be described. The contents of each of the defined control data may be similar to those illustrated in FIG. 7, except that a font name for alphabets is made to correspond to "FontStyle". Accordingly, when the user makes the handwriting in English, the character string can be displayed using a font that is often used in English.

### <Example of Dictionary Data>

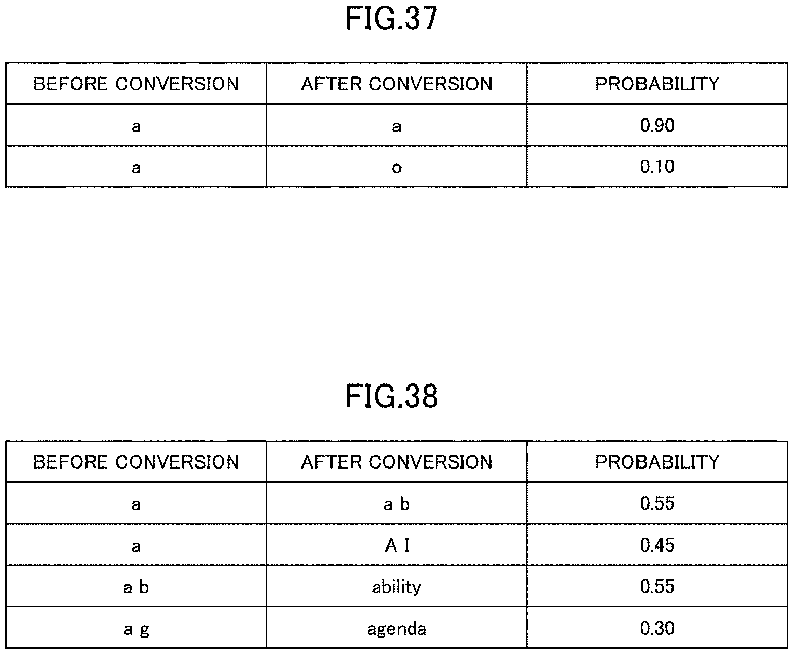

The dictionary data in the case of the English conversion will be described, with reference to FIG. 37 through FIG. 39. In the description of FIG. 37 through FIG. 39, the differences from FIG. 8 through FIG. 10 will mainly be described. FIG. 37 illustrates an example of the dictionary data of the handwriting recognition dictionary part 27 used for the English conversion. The dictionary data of the handwriting recognition dictionary part 27 illustrated in FIG. 37 indicates that the handwritten character "a (state of the stroke data)" has a 0.90 probability of being converted into the character "a", and a 0.10 probability of being converted into a character "o".

FIG. 38 illustrates an example of the dictionary data of the character string conversion dictionary part 29 used for the English conversion. In the dictionary data of the character string conversion dictionary part 29 illustrated in FIG. 38, the character "a" has a 0.55 probability of being converted into the character string "ab", and has a 0.45 probability of being converted into the character string "AI". Similar probabilities apply to other character strings before conversion.

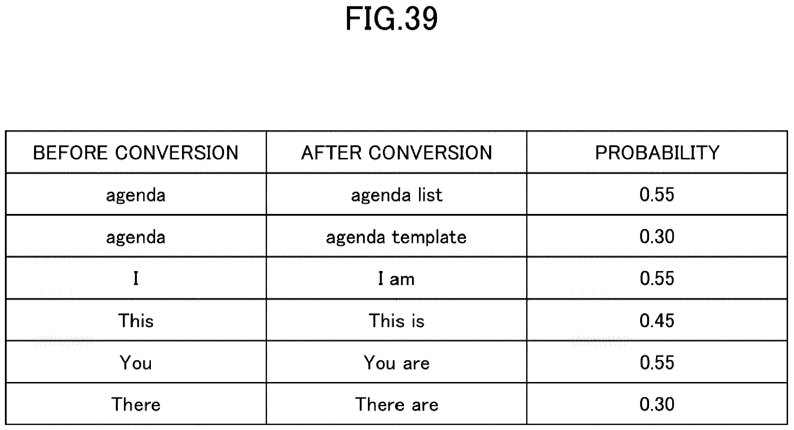

FIG. 39 illustrates an example of the dictionary data of the predictive conversion dictionary part 31 used for the English conversion. In the dictionary data of the predictive conversion dictionary part 31 illustrated in FIG. 39, the character string "agenda" has a 0.55 probability of being converted into the character string "agenda list", and has a 0.30 probability of being converted into the character string "agenda template". Similar probabilities apply to other character and character strings before conversion.

The dictionary data has no language dependency, and any character or character string may be registered before and after conversion.

### <Example of Operation Command Definition Data>

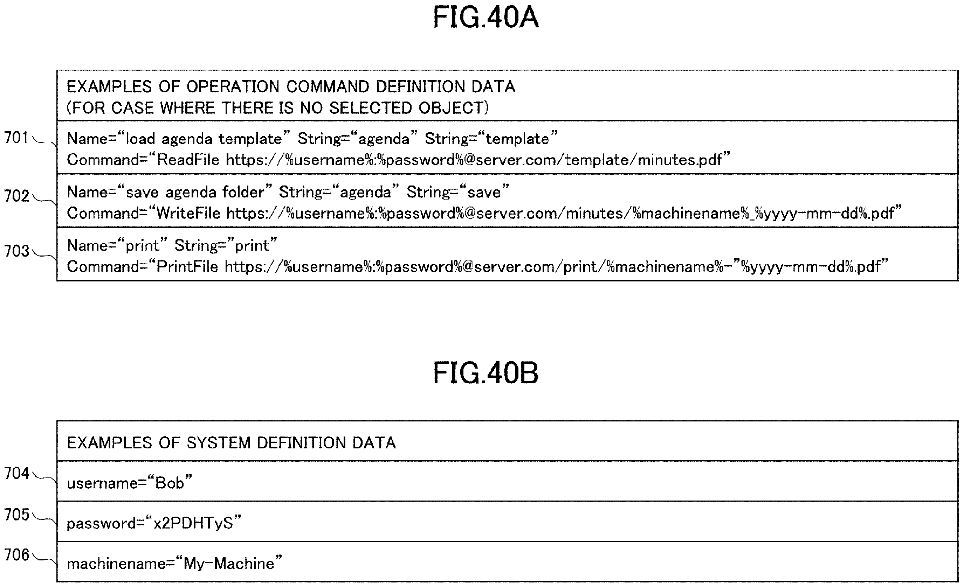

FIG. 40A illustrates an example of operation command definition data when no selected data is present when performing the English conversion. In the description of FIG. 40A, the differences from FIG. 11A will mainly be described. The contents of each of the operation commands are the same as in FIG. 11A, but English expressions are made to correspond to the operation command name (Name) and the character string (String). Accordingly, the user can handwrite the operation command in English, and select the operations command in English.

FIG. 40B illustrates an example of the system definition data. In the description of FIG. 40B, the differences from FIG. 11B will mainly be described. In FIG. 40B, "Bob" is made to correspond to "username".

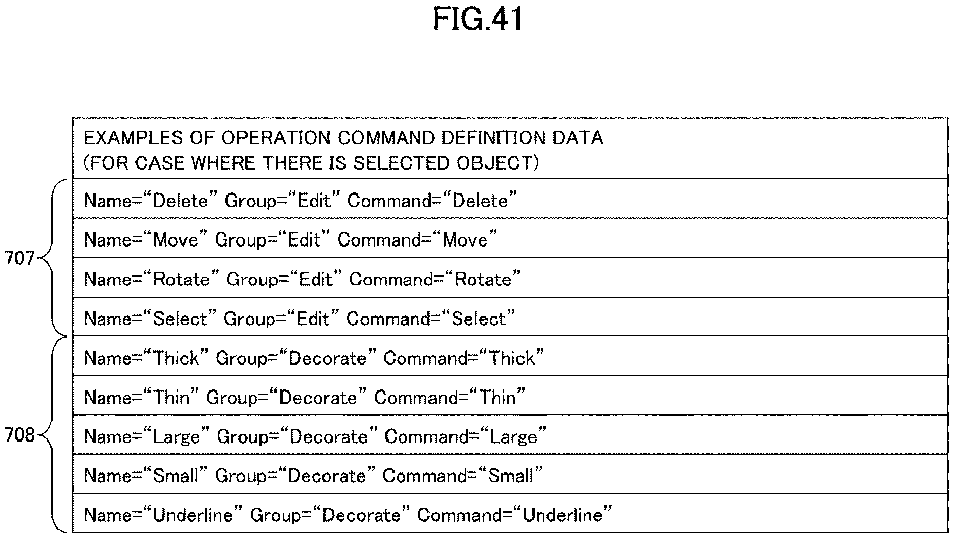

FIG. 41 through FIG. 44B, which will be described hereinafter, are similar to FIG. 12 through FIG. 15B described above in conjunction with the first embodiment, except that "Name" is identified by alphabets, for example.

FIG. 41 illustrates an example of the operation command definition data when the selected data are present when performing the English conversion. In the description of FIG. 41, the differences from FIG. 12 will mainly be described. The contents of each of the operation commands are the same as in FIG. 12, but English expressions are made to correspond to "Name". Accordingly, the user can select the operation command in English.

### <Display Example of Selectable Candidate>

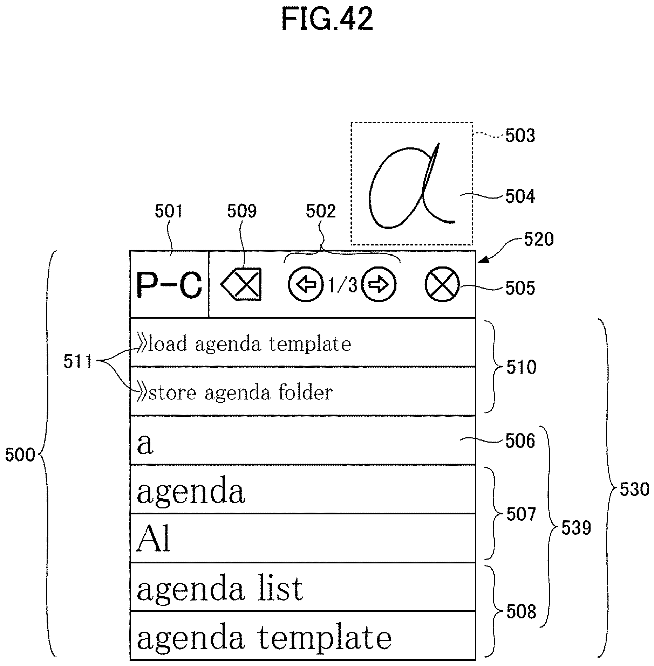

FIG. 42 illustrates an example of the operation guide 500, and the selectable candidate 530 displayed by the operation guide 500 when performing the English conversion. In the description of FIG. 42, the differences from FIG. 13 will mainly be described. In FIG. 42, the user handwrites a character "a" as the handwritten data 504, and based on this character "a", the operation command candidate 510, the handwriting recognition character string candidate 506, the converted character string candidate 507, and the character string/predictive conversion candidate 508 are displayed. Accordingly, the display in FIG. 42 may be similar to that in FIG. 13, except that the display is in the English language instead of the Japanese Language.

The operation command candidates 510 are the operation command definition data 701 and 702 having "agenda" for "String" in the operation command definition data illustrated in FIG. 40A, for example.

Hence, in the case of English conversion, the user can similarly the display the operation guide 500.

### <Example of Specifying Selected Data>

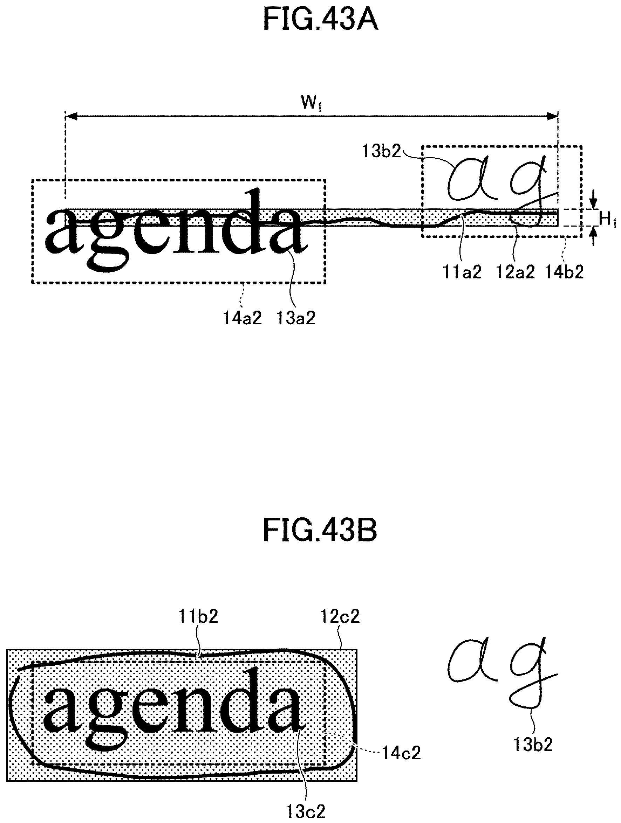

FIG. 43A and FIG. 43B are diagrams for explaining a specifying example of the selected data when performing the English conversion. In the description of FIG. 43A and FIG. 43B, the differences from FIG. 14A through FIG. 14D will mainly be described.

FIG. 43A illustrates an example in which two decided data 13a2 and 13b2 written horizontally are specified by the user using the striding line (handwritten data 11a2). In this example, the length H1 of the shorter side and the length W1 of the longer side of the handwritten data rectangular region 12a2 satisfy the striding line determination condition 406, and the overlap rate of the handwritten data rectangular region 12a2 with respect to the decided data 13a2 and 13b2 satisfies the striding line determination condition 406. For this reason, the decided data 13a2 and 13b2 of both "agenda" and "ag" are specified as the selected data.

FIG. 43B illustrates an example in which the decided data 13c2 written horizontally is specified by the user using the enclosure line (handwritten data 11b2). In this example, only the decided data 13c2 "agenda", for which the overlap rate of the decided data 13c2 with respect to the handwritten data rectangular region 12c2 satisfies the enclosure line determination condition 407, is specified as the selected data.

Accordingly, in the case of English conversion, the user can similarly select the decided data.

### <Display Example of Operating Command Candidates>

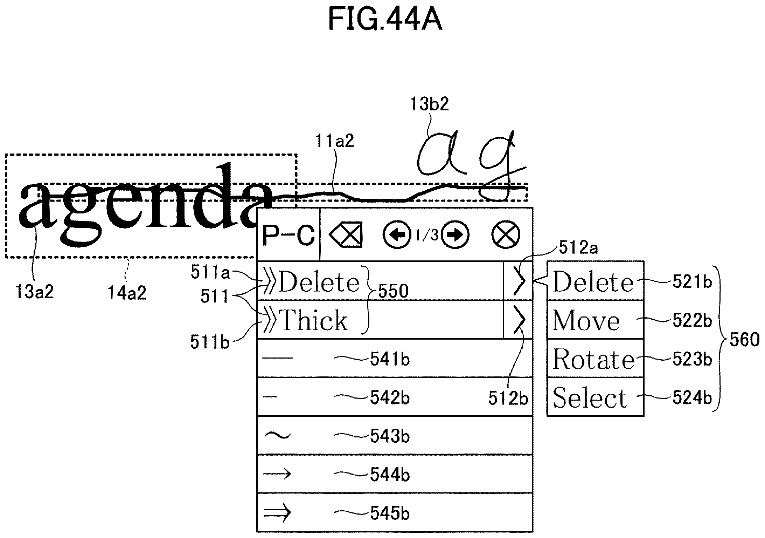

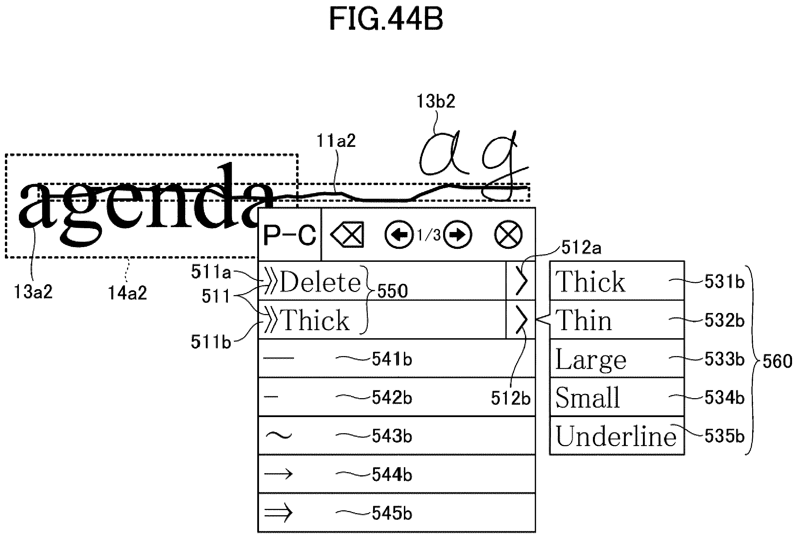

FIG. 44A and FIG. 44B are diagrams illustrating a display example of the operation command candidates based on the operation command definition data for the case where the handwritten data illustrated in FIG. 43A and FIG. 43B are present when performing the English conversion, respectively. In the description of FIG. 44A and FIG. 44B, the differences from FIG. 15A and FIG. 15B will mainly be described.

FIG. 44A illustrates the operation command candidate for the editing system, and FIG. 44B illustrates the operation command candidate for the decorating system. FIG. 44A illustrates an example in which the decided data is specified in the handwritten data 11a2 illustrated in FIG. 43A. As illustrated in FIG. 44A and FIG. 44B, the main menu 550 includes the operation command candidate displayed after the bullet character ">>" 511.

The sub menu 560 illustrated in FIG. 44A is displayed by pressing the end-of-line character ">" 512a of the first line in FIG. 44A. When the user presses any of the operation command names with the pen, the handwritten input display control part 23 executes the "Command" of the operation command definition data corresponding to the operation command name with respect to the selected data. In other words, "Delete" is executed by the handwritten input display control part 23 when a "Delete" button 521b is selected, "Move" is executed by the handwritten input display control part 23 when a "Move" button 522b is selected, "Rotate" is executed by the handwritten input display control part 23 when a "Rotate" button 523b is selected, and "Select" is executed by the handwritten input display control part 23 when a "Select" button 524b is selected.

When the user presses the "Delete" button 521b with the pen, the handwritten input display control part 23 deletes the decided data 13a2 and 13b2 "agenda" and "ag". When the user presses the "Move" button 522b with the pen, the handwritten input display control part 23 accepts the movement of the decided data 13a2 and 13b2 "agenda" and "ag". When the user presses the "Rotate" button 523b with the pen, the handwritten input display control part 23 rotates the decided data 13a2 and 13b2 "agenda" and "ag" by a predetermined angle. When the user presses the "Select" button 524b with the pen, the handwritten input display control part 23 accepts the selection of the decided data 13a2 and 13b2 "agenda" and "ag".

Character string candidates other than the operation command candidates, such as "_" 541b, "-," 542b, "-" 543b, "→" 544b, and "⇒" 545b, are the recognition results of the striding line (handwritten data 11a2). Hence, if the user intends to input the character string and not the operation command, the character string candidate can be selected.

In FIG. 44B, when the user presses the end-of-line character ">" 512b of the second line, the sub menu 560 is displayed on the right side thereof. Similar to FIG. 44A, FIG. 44B illustrates the example in which both the main menu 550 and the sub menu 560 are displayed. When a "Thick" button 531b is selected based on the operation command definition data illustrated in FIG. 41, the handwritten input display control part 23 executes "Thick" on the selected data to make the selected data thick. When a "Thin" button 532b is selected, the handwritten input display control part 23 executes "Thin" with respect to the selected data to make the selected data thin. When a "Large" button 533b is selected, the handwritten input display control part 23 executes "Large" with respect to the selected data to make the selected data large. When a "Small" button 534b is selected, the handwritten input display control part 23 executes "Small" with respect to the selected data to make the selected data small. When an "Underline" button 535b is selected, the handwritten input display control part 23 executes "Underline" with respect to the selected data to underline the selected data.

When the user presses the "Thick" button 531b with the pen, the handwritten input display control part 23 thickens the lines forming the decided data 13a2 and 13b2 "agenda" and "ag". When the user presses the "Thin" button 532b with the pen, the handwritten input display control part 23 narrows the lines forming "agenda" and "ag". When the user presses the "Large" button 533b with the pen, the handwritten input display control part 23 enlarges the characters in the decided data 13a2 and 13b2. When the user presses the "Small" button 534b with the pen, the handwritten input display control part 23 reduces the characters of the decided data 13a2 and 13b2. When the user presses the "Underline" button 535b with the pen, the handwritten input display control part 23 can add underlines to the characters of the decided data 13a2 and 13b2.

Accordingly, the user can cause the operation commands to be displayed when the handwritten data are present, even in the case of the English conversion.

### <Display Example of Decided Data>

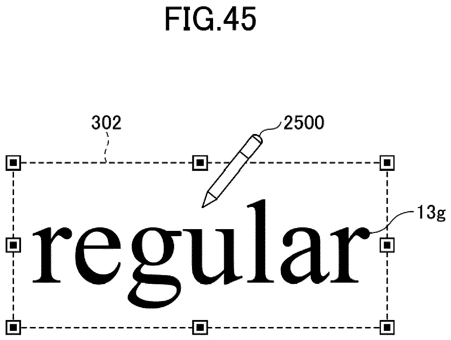

FIG. 45 illustrates an example of the decided data 13g selected by the long press of the pen 2500 in the case of the English conversion. In the description of FIG. 45, the differences from FIG. 17 will mainly be described. Because the display device 2 manages the coordinates of the character string in conversion units, the coordinates of the circumscribing rectangle 302 of the decided data 13g ("regular") are also known. Accordingly, in the case of the English conversion, the display device 2 can detect the decided data 13g in the same manner as when processing Japanese in the first embodiment.

### <Method of Determining Character Inserting Destination>

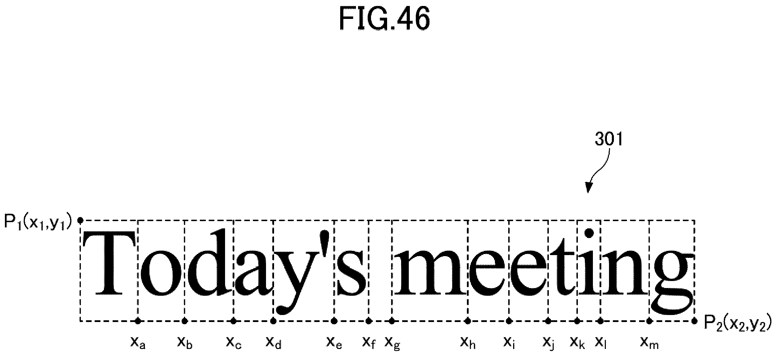

A method determining the character inserting destination will be described, with reference to FIG. 46. FIG. 46 is a diagram for explaining an example of the inserting destination of the characters when performing the English conversion. In the description of FIG. 46, the differences from FIG. 18 will mainly be described. FIG. 46 displays the character string "Today's meeting" as the decided data. The handwritten input storage part 25 stores the coordinates P1 of the upper left corner of the decided data, and the coordinates P2 of the lower right corner of the decided data. It is assumed that the font and the character size being used are known. If the font is known, the character size of each character is also known. For example, the handwritten input storage part 25 includes a table in which the vertical and horizontal sizes are registered in correspondence with the alphabets. Accordingly, the handwritten input display control part 23 can calculate the coordinates of each character (for example, the coordinates of the upper left corner and the lower right corner of one square for accommodating one character), using such registered information.

FIG. 46 illustrates the coordinates xa through xd (y-coordinate is y1 or y2) of the lower right corner of each character. The handwritten input display control part 23 can easily calculate the coordinates xa through xd. Accordingly, the handwritten input display control part 23 can compare the coordinates xa through xd with the coordinates of the pointing end of the arrow 303, and determine the nearest one of the coordinates xa through xd near the coordinates of the pointing end of the arrow 303, as being the inserting destination between two characters.

In the case of the English language, the handwritten input storage part 25 may manage the coordinates in units of words, instead of characters. In this case, the coordinates xf and xg, which are the coordinates between two words, may be compared with the coordinates of the pointing end of the arrow 303, and determine that the nearest coordinates x through m at the inserting destination between the two words.

### <Process Flow of Character Insertion>

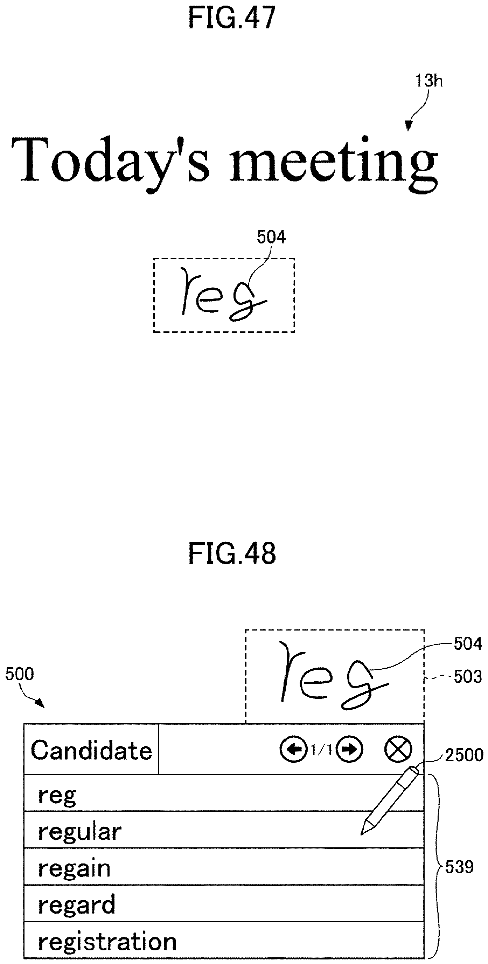

Next, a process flow in which the display device 2 accepts the insertion of the character when performing the English conversion will be described, with reference to FIG. 47 through FIG. 52. FIG. 47 illustrates an example of decided data 13h and the handwritten data 504. In the description of FIG. 47 through FIG. 52, the differences from FIG. 19 through FIG. 24 will mainly be described.

In FIG. 47, the decided data 13h, "Today's meeting", is displayed. In addition, the user handwrites a character string "reg", in order to insert a character string (or word) "regular".

FIG. 48 illustrates an example of the operation guide 500 displayed with respect to the character string "reg". The character string candidates 539 that are displayed in this example include "reg", "regular", "regain", "regard", and "registration". The user can select the character string "regular" by pressing the same with the pen 2500. The handwritten input display control part 23 accepts the selection of "regular".

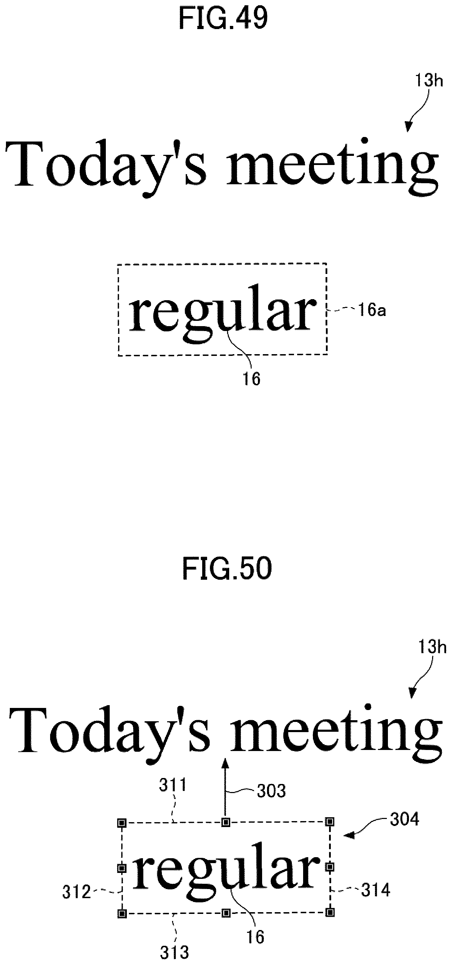

FIG. 49 illustrates a state where the selected character string "regular", which is accepted, is displayed. The character string "regular", which is the selected data 16 (also the decided data), is displayed at the position where the character string "reg" is handwritten by the user. The frame 16a indicated by a dotted line and surrounding the selected data 16 may be displayed for a predetermined time after the conversion, or may not be displayed at all.

FIG. 50 illustrates an example of the arrow 303 that is displayed when the user selects "regular" as the selected data 16. In other words, when the user selects "regular" by the enclosure line or bar, the operation guide 500 is once displayed. When the user starts to drag the selected data 16, the operation guide 500 is erased. The handwritten input display control part 23 starts the display of the arrow 303, or starts the display of the arrow 303 according to the distance from the decided data 13h.

The method and timing for determining the position where the handwritten input display control part 23 displays the arrow 303 may be the same as in the case of processing Japanese.

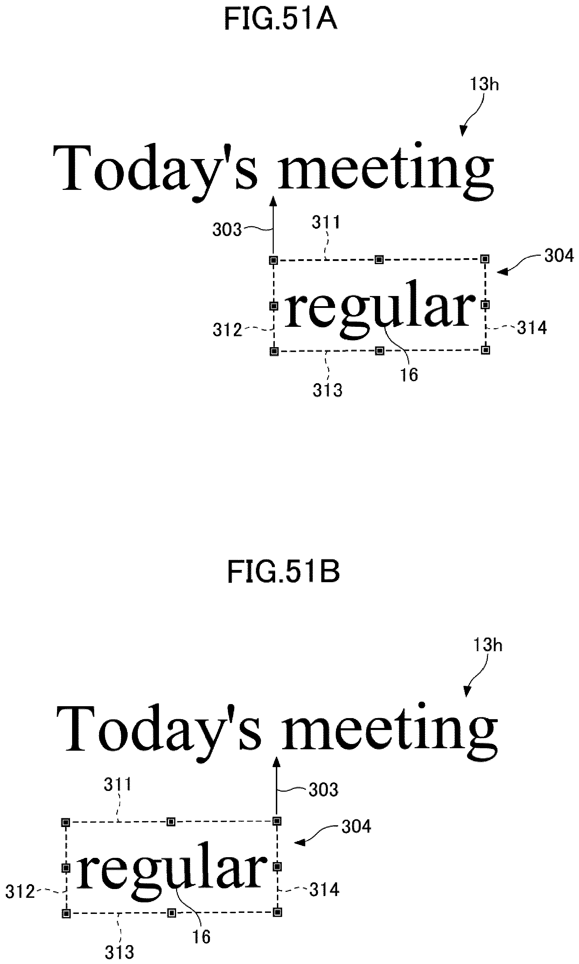

As illustrated in FIG. 51A and FIG. 51B, the position of arrow 303 is not limited to the center of the side surrounding "regular". FIG. 51A and FIG. 51B illustrate examples of the position of the arrow 303. In FIG. 51A, the arrow 303 is displayed on the left end of the side surrounding "regular", and in FIG. 51B, the arrow 303 is displayed on the right end of the side surrounding "regular". The arrow 303 may be displayed anywhere on the side.

When the distance between the decided data 13h and the coordinates of the pointing end of the arrow 303 is less than the threshold value of the insertion determination condition 408, the character string insertion control part 41 inserts the selected data 16 ("regular") between two characters of the decided data 13h, nearest to the coordinates of the pointing end of the arrow 303.

In FIG. 50, FIG. 51A, and FIG. 51B, because the position between the two characters nearest to the coordinates of the pointing end of the arrow 303, is the position between the characters "s" and "m", the character string insertion control part 41 inserts the character string "regular" between the two characters "s" and "m".

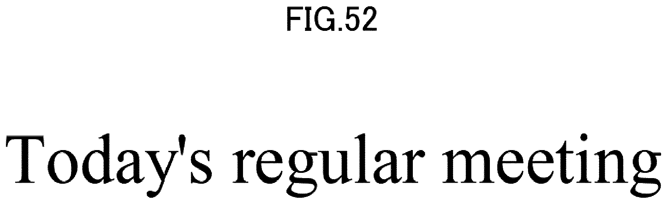

FIG. 52 illustrates a character string including "regular" inserted into the decided data. By inserting "regular", "Today's meeting" is changed to "Today's regular meeting" and displayed. At the time of the insertion, the character string insertion control part 41 acquires the first coordinates (P1 in FIG. 46) at the beginning of the original decided data, and deletes "Today's meeting" and "regular". The character string insertion control part 41 displays "Today's regular meeting" from the first coordinates at the beginning of the original decided data. The character string insertion control part 41 may additionally display "regular meeting" next to "Today's", without deleting "Today's".

### <Handwriting Direction of Decided Data and Handwriting Direction of Selected Data>

In FIG. 47 through FIG. 52, the handwriting direction of the decided data is horizontal, and the handwriting direction of the selected data "regular" is horizontal. Because the horizontal writing direction is generally used in the case of the English language, examples in which the decided data or the selected data are written vertically, will be omitted.

### <Other Display Examples of Inserting Destination>

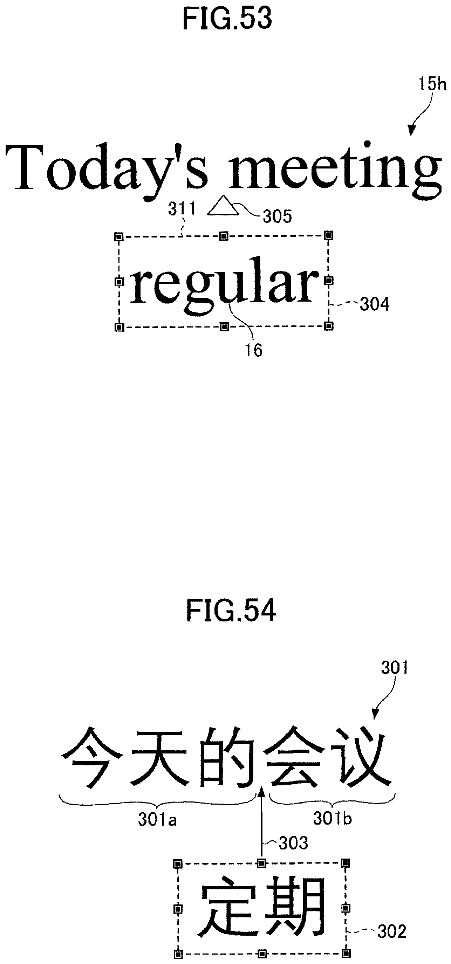

As illustrated in FIG. 53, the handwritten input display control part 23 may display an insertion symbol 305 indicating the inserting destination, on the side of the decided data 15h. In the description of FIG. 53, the differences from FIG. 27 will mainly be described. FIG. 53 illustrates an example of the insertion symbol 305 indicating the inserting destination, displayed on the side of the decided data. In FIG. 53, the triangular insertion symbol 305 (an example of the display element or tag) is displayed between the characters "s" and "m". The insertion symbol 305 indicates the position of one or more characters with respect to the character string. When the distance between the selected data 16 and the decided data 15h becomes less than the threshold value, the handwritten input display control part 23 displays the insertion symbol 305 between two characters on the side of the decided data 15h, nearest to the center of the side 312 forming the circumscribed rectangle (insertion target frame 304) of the selected data 16. When the user drags and moves the selected data 16, the handwritten input display control part 23 changes the position of the insertion symbol 305 according to the center position of the side 312.

Accordingly, even in the case of the English conversion, the user can grasp the position where the selected data is to be inserted based on the position of the insertion symbol 305, even if the arrow 303 is not displayed.

In the case of the English conversion, the operating procedure may be the same as in FIG. 28 through FIG. 33 and FIG. 34.

### <Notable Advantageous Features>

According to this embodiment, even in the case of the English conversion, because the display device 2 displays the arrow 303 indicating the position of one or more characters with respect to the character string, it is possible to clarify the relative positions of the character string and the one or more characters. Even if the number of characters of the insertion target is large, the user can easily insert the characters or the like at the desired inserting position.

### [Third Embodiment]

In this embodiment, the display device 2 displays the arrow 303 indicating the position of one or more characters in Chinese (or Chinese characters) with respect to the character string in Chinese. The configuration of the display device 2 in this embodiment is the same as that of the first embodiment, except that the conversion dictionary and the operation command definition data correspond to the Chinese language. For this reason, the features of the display device 2 that are different from those of the first embodiment will be described, based on the conversion of the handwritten data into Chinese (hereinafter, referred to as "Chinese conversion") will be described.

FIG. 54 is a diagram for explaining the method of inserting characters into the character string when performing the Chinese conversion. In the description of FIG. 54, only the differences from FIG. 2 will mainly be described. The user inputs handwritten data to the display device 2, and the display device 2 converts the handwritten data into the Chinese character string 301, to display the same. The Chinese character string 301 means "today's meeting" in English. The user notices that a word " 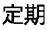 ", and meaning "regular", is missing between a Chinese character string meaning "today's", and a Chinese character string meaning "meeting", and handwrites " 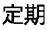 " in Chinese, and causes the display device 2 to convert the handwritten characters into the Chinese characters " 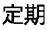 " 302. When the user selects or begins to drag the Chinese characters " 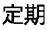 " 302, the display device 2 displays the arrow 303 indicating the inserting destination (or inserting position). The arrow 303 has the base end facing the Chinese characters " 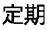 " 302, and the pointing end pointing toward the character string to which the Chinese characters " 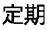 " 302 are to be inserted, to clarify the position of the Chinese characters " 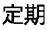 " 302 with respect to the Chinese character string 301. In addition, the arrow 303 enables the user to easily comprehend the inserting position. The user drags the Chinese characters " 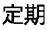 " 302, and drops the pointing end of the arrow 303 to a position aligned to a desired inserting position.

Accordingly, even in the case of the Chinese conversion, because the display device 2 according to this embodiment displays the arrow 303 indicating the position of one or more characters with respect to the character string, it is possible to clarify the relative positions of the character string and the one or more characters. Even if the number of characters of the insertion target is large, the user can easily insert the characters or the like at the desired inserting position.

The description of FIG. 3 through 6 given above with respect to the first embodiment also applies to the third embodiment.

### <Defined Control Data>

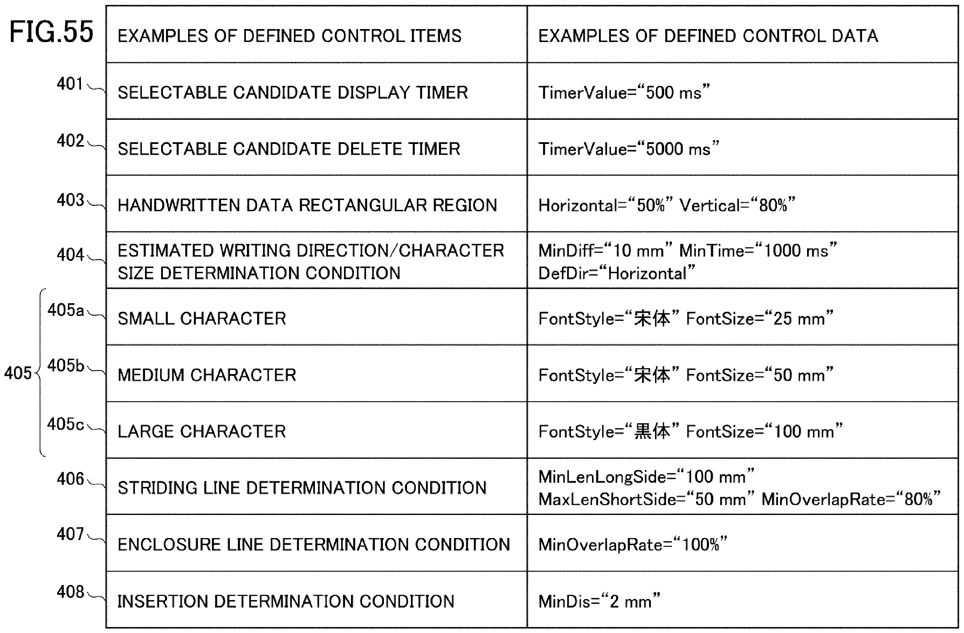

FIG. 55 is a diagram illustrating an example of the defined control data used for the Chinese conversion. In the description of FIG. 55, the differences from FIG. 7 will mainly be described. The contents of each of the defined control data may be similar to those illustrated in FIG. 7, except that a font name (for example, " 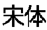 " (corresponding to "SimHei") and " 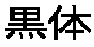 " (corresponding to "DFKai-SB")) for Chinese characters is made to correspond to "FontStyle". Accordingly, when the user makes the handwriting in Chinese, the character string can be displayed using a font that is often used in Chinese.

### <Example of Dictionary Data>

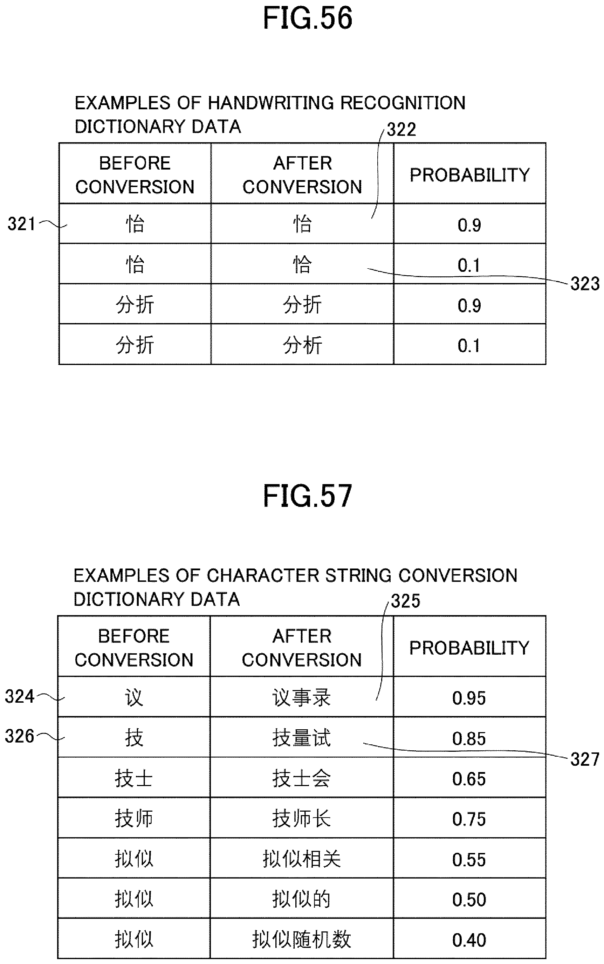

The dictionary data in the case of the Chinese conversion will be described, with reference to FIG. 56 through FIG. 58. In the description of FIG. 56 through FIG. 58, the differences from FIG. 8 through FIG. 10 will mainly be described. FIG. 56 illustrates an example of the dictionary data of the handwriting recognition dictionary part 27 used for the Chinese conversion. The Chinese language does not use characters corresponding to Hiragana characters used in the Japanese language, for example, and thus, in the case of the Chinese conversion, the handwriting recognition dictionary part 27 is a dictionary for performing character recognition. The dictionary data of the handwriting recognition dictionary part 27 illustrated in FIG. 56 indicates that the handwritten Chinese character 321 (state of the stroke data) has a 0.90 probability of being converted into the Chinese character 322, and a 0.10 probability of being converted into the Chinese character 323.

FIG. 57 illustrates an example of the dictionary data of the character string conversion dictionary part 29 used for the Chinese conversion. In the dictionary data of the character string conversion dictionary part 29 illustrated in FIG. 57, a Chinese character 324 has a 0.95 probability of being converted into a Chinese character string 325, and a Chinese character 326 has a 0.85 probability of being converted into a Chinese character string 327. Similar probabilities apply to other character strings before conversion.

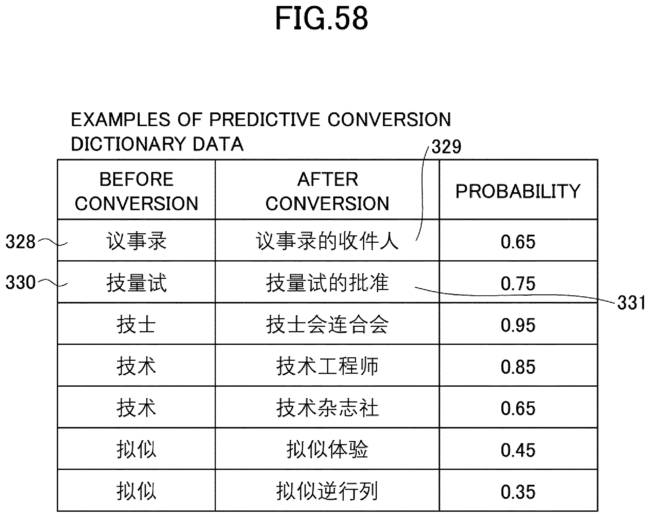

FIG. 58 illustrates an example of the dictionary data of the predictive conversion dictionary part 31 used for the Chinese conversion. In the dictionary data of the predictive conversion dictionary part 31 illustrated in FIG. 58, a Chinese character string 328 has a 0.65 probability of being converted into a Chinese character string 329, and a Chinese character string 330 has a 0.75 probability of being converted into a Chinese character string 331. Similar probabilities apply to other character and character strings before conversion.

The dictionary data has no language dependency, and any character or character string may be registered before and after conversion.

### <Example of Operation Command Definition Data>

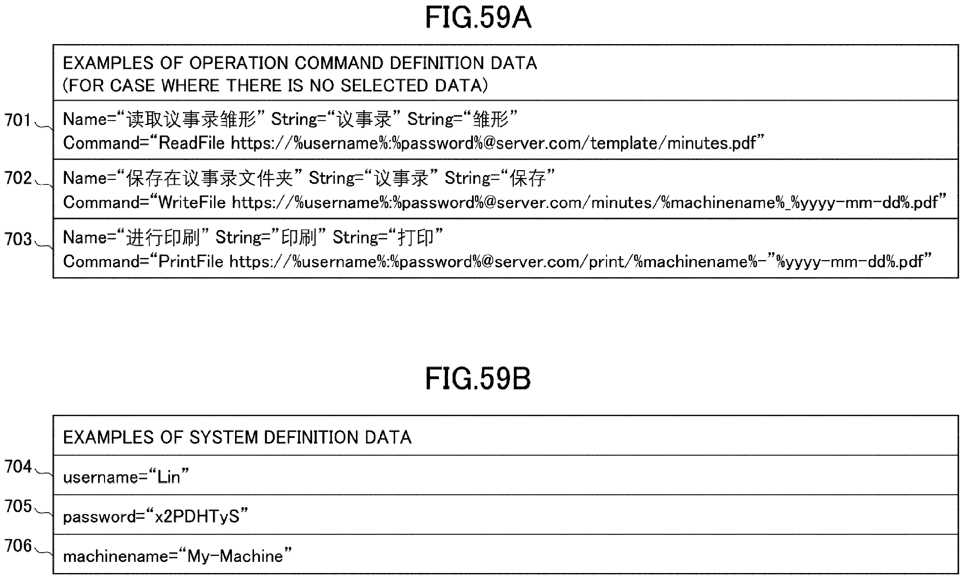

FIG. 59A illustrates an example of operation command definition data when no selected data is present when performing the Chinese conversion. In the description of FIG. 59A, the differences from FIG. 11A will mainly be described. The contents of each of the operation commands are the same as in FIG. 11A, but Chinese expressions are made to correspond to the operation command name (Name) and the character string (String). Accordingly, the user can handwrite the operation command in Chinese, and select the operations command in Chinese.

FIG. 59B illustrates an example of the system definition data. In the description of FIG. 59B, the differences from FIG. 11B will mainly be described. In FIG. 59B, "Lin" is made to correspond to "username".

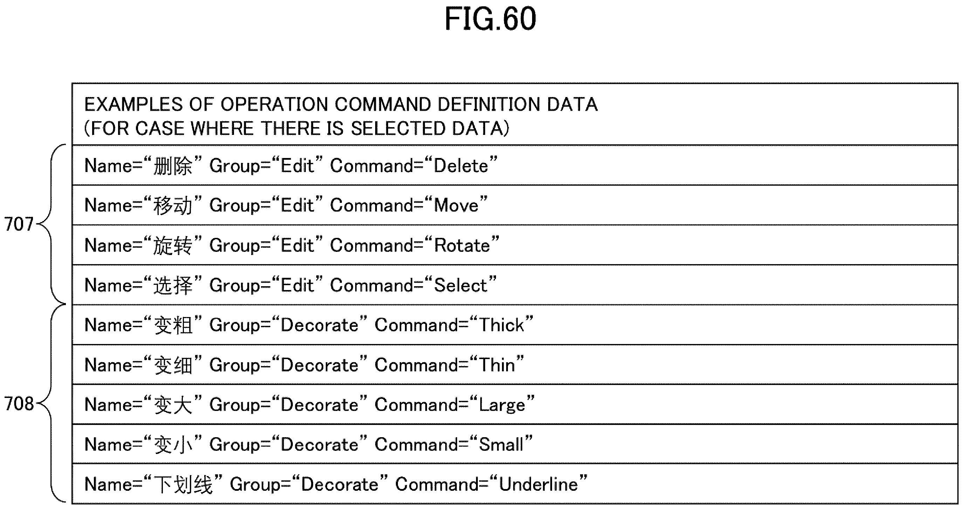

FIG. 60 through FIG. 63B, which will be described hereinafter, are similar to FIG. 12 through FIG. 15B described above in conjunction with the first embodiment, except that "Name" is identified by alphabets, for example.

FIG. 60 illustrates an example of the operation command definition data when the selected data are present when performing the Chinese conversion. In the description of FIG. 60, the differences from FIG. 12 will mainly be described. The contents of each of the operation commands are the same as in FIG. 12, but English expressions are made to correspond to "Name". Accordingly, the user can select the operation command in English.

### <Display Example of Selectable Candidate>

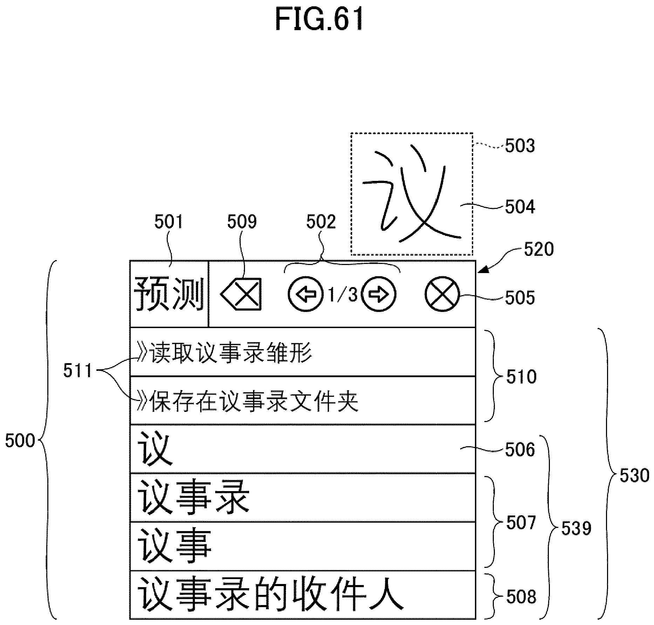

FIG. 61 illustrates an example of the operation guide 500, and the selectable candidate 530 displayed by the operation guide 500 when performing the Chinese conversion. In the description of FIG. 61, the differences from FIG. 13 will mainly be described. In FIG. 61, the user handwrites a Chinese character as the handwritten data 504, and based on this Chinese character, the operation command candidate 510, the handwriting recognition character string candidate 506, the converted character string candidate 507, and the character string/predictive conversion candidate 508 are displayed. Accordingly, the display in FIG. 61 may be similar to that in FIG. 13, except that the display is in the Chinese language instead of the Japanese Language.

The operation command candidates 510 are the operation command definition data 701 and 702 having the handwriting recognition character string candidate 506, correctly converted from the handwritten data 504, for "String" in the operation command definition data illustrated in FIG. 59A, for example.

Hence, in the case of Chinese conversion, the user can similarly the display the operation guide 500.

### <Example of Specifying Selected Data>

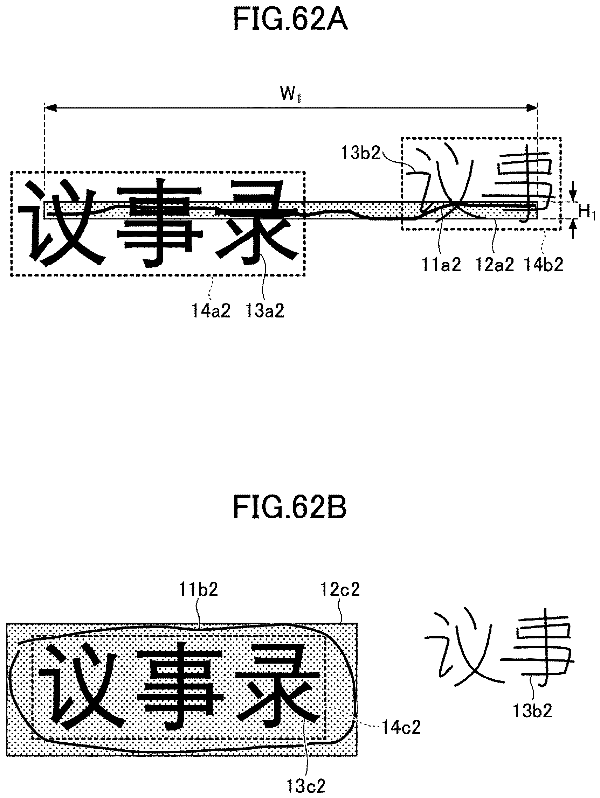

FIG. 62A and FIG. 62B are diagrams for explaining a specifying example of the selected data when performing the Chinese conversion. In the description of FIG. 62A and FIG. 62B, the differences from FIG. 14A through FIG. 14D will mainly be described.

FIG. 62A illustrates an example in which two decided data 13a2 and 13b2 written horizontally are specified by the user using the striding line (handwritten data 11a2). In this example, the length H1 of the shorter side and the length W1 of the longer side of the handwritten data rectangular region 12a2 satisfy the striding line determination condition 406, and the overlap rate of the handwritten data rectangular region 12a2 with respect to the decided data 13a2 and 13b2 satisfies the striding line determination condition 406. For this reason, both the decided data 13a2 and 13b2 are specified as the selected data.

FIG. 62B illustrates an example in which the decided data 13c2 written horizontally is specified by the user using the enclosure line (handwritten data 11b2). In this example, only the decided data 13c2, for which the overlap rate of the decided data 13c2 with respect to the handwritten data rectangular region 12c2 satisfies the enclosure line determination condition 407, is specified as the selected data.

Accordingly, in the case of Chinese conversion, the user can similarly select the decided data.

### <Display Example of Operating Command Candidates>

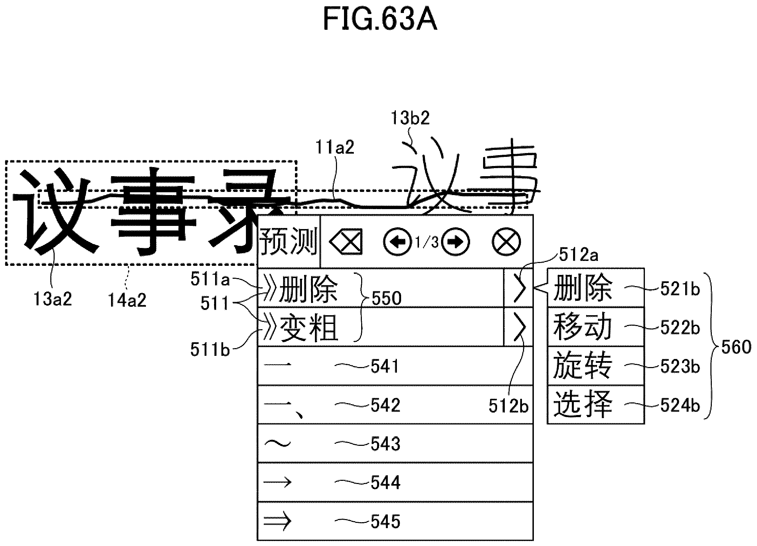

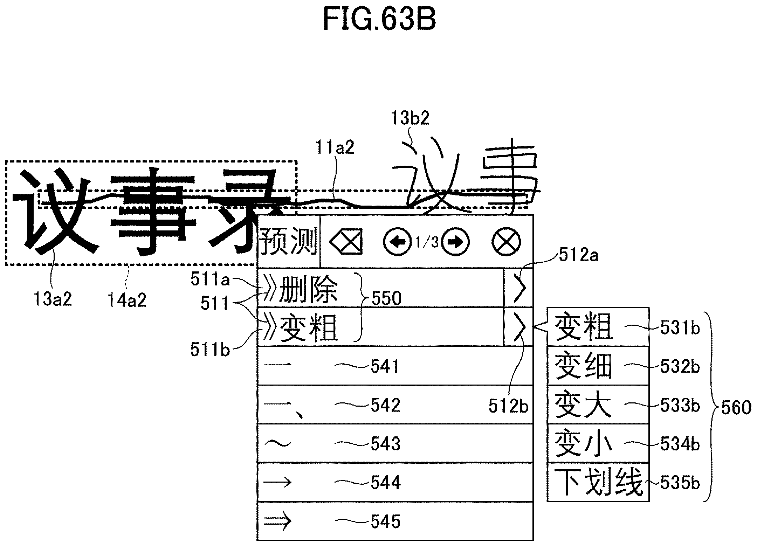

FIG. 63A and FIG. 63B are diagrams illustrating a display example of the operation command candidates based on the operation command definition data for the case where the handwritten data illustrated in FIG. 62A and FIG. 62B are present when performing the Chinese conversion, respectively. In the description of FIG. 63A and FIG. 63B, the differences from FIG. 15A and FIG. 15B will mainly be described.

FIG. 63A illustrates the operation command candidate for the editing system, and FIG. 63B illustrates the operation command candidate for the decorating system. FIG. 63A illustrates an example in which the decided data is specified in the handwritten data 11a2 illustrated in FIG. 62A. As illustrated in FIG. 63A and FIG. 63B, the main menu 550 includes the operation command candidate displayed after the bullet character ">>" 511.

The sub menu 560 illustrated in FIG. 63A is displayed by pressing the end-of-line character ">" 512a of the first line in FIG. 63A. When the user presses any of the operation command names with the pen, the handwritten input display control part 23 executes the "Command" of the operation command definition data corresponding to the operation command name with respect to the selected data. In other words, "Delete" is executed by the handwritten input display control part 23 when the "Delete" button 521b is selected, "Move" is executed by the handwritten input display control part 23 when the "Move" button 522b is selected, "Rotate" is executed by the handwritten input display control part 23 when the "Rotate" button 523b is selected, and "Select" is executed by the handwritten input display control part 23 when the "Select" button 524b is selected.

When the user presses the "Delete" button 521b with the pen, the handwritten input display control part 23 deletes the decided data 13a2 and 13b2 "agenda" and "ag". When the user presses the "Move" button 522b with the pen, the handwritten input display control part 23 accepts the movement of the decided data 13a2 and 13b2. When the user presses the "Rotate" button 523b with the pen, the handwritten input display control part 23 rotates the decided data 13a2 and 13b2 by a predetermined angle. When the user presses the "Select" button 524b with the pen, the handwritten input display control part 23 accepts the selection of the decided data 13a2 and 13b2.

Character string candidates other than the operation command candidates, such as "_" 541b, "-," 542b, "-" 543b, "→" 544b, and "⇒" 545b, are the recognition results of the striding line (handwritten data 11a2). Hence, if the user intends to input the character string and not the operation command, the character string candidate can be selected.

In FIG. 63B, when the user presses the end-of-line character ">" 512b of the second line, the sub menu 560 is displayed on the right side thereof. Similar to FIG. 63A, FIG. 63B illustrates the example in which both the main menu 550 and the sub menu 560 are displayed. When the "Thick" button 531b is selected based on the operation command definition data illustrated in FIG. 60, the handwritten input display control part 23 executes "Thick" on the selected data to make the selected data thick. When the "Thin" button 532b is selected, the handwritten input display control part 23 executes "Thin" with respect to the selected data to make the selected data thin. When the "Large" button 533b is selected, the handwritten input display control part 23 executes "Large" with respect to the selected data to make the selected data large. When the "Small" button 534b is selected, the handwritten input display control part 23 executes "Small" with respect to the selected data to make the selected data small. When the "Underline" button 535b is selected, the handwritten input display control part 23 executes "Underline" with respect to the selected data to underline the selected data.

When the user presses the "Thick" button 531b with the pen, the handwritten input display control part 23 thickens the lines forming the decided data 13a2 and 13b2. When the user presses the "Thin" button 532b with the pen, the handwritten input display control part 23 narrows the lines forming the decided data 13a2 and 13b2. When the user presses the "Large" button 533b with the pen, the handwritten input display control part 23 enlarges the characters of the decided data 13a2 and 13b2. When the user presses the "Small" button 534b with the pen, the handwritten input display control part 23 reduces the characters of the decided data 13a2 and 13b2. When the user presses the "Underline" button 535b with the pen, the handwritten input display control part 23 can add underlines to the characters of the decided data 13a2 and 13b2.

Accordingly, the user can cause the operation commands to be displayed when the handwritten data are present, even in the case of the Chinese conversion.

### <Display Example of Decided Data>

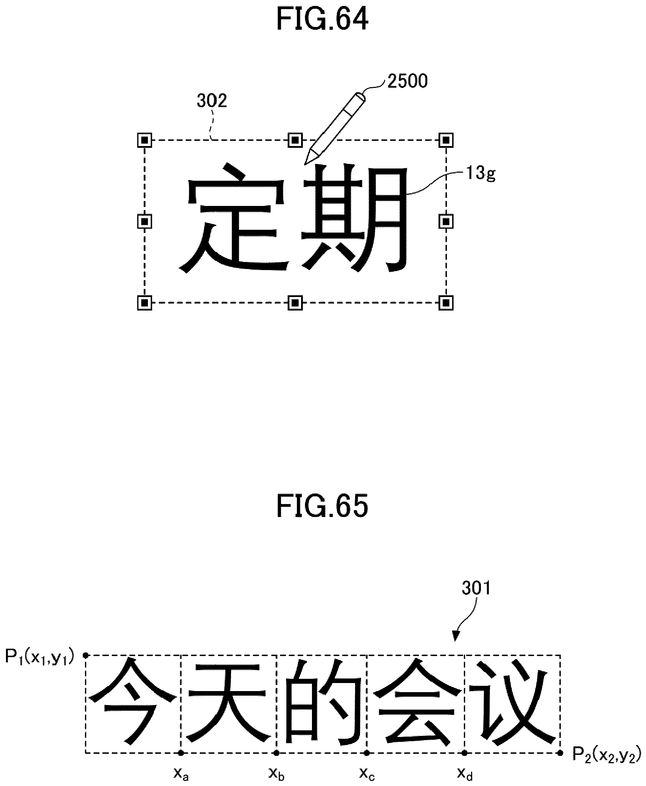

FIG. 64 illustrates an example of the decided data 13g selected by the long press of the pen 2500 in the case of the Chinese conversion. In the description of FIG. 64, the differences from FIG. 17 will mainly be described. Because the display device 2 manages the coordinates of the character string in conversion units, the coordinates of the circumscribing rectangle 302 of the decided data 13g (" 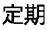 ") are also known. Accordingly, in the case of the Chinese conversion, the display device 2 can detect the decided data 13g in the same manner as when processing Japanese in the first embodiment.

### <Method of Determining Character Inserting Destination>

A method determining the character inserting destination will be described, with reference to FIG. 65. FIG. 65 is a diagram for explaining an example of the inserting destination of the characters when performing the Chinese conversion. In the description of FIG. 65, the differences from FIG. 18 will mainly be described. FIG. 65 displays the Chinese character string 301 as the decided data. The handwritten input storage part 25 stores the coordinates P1 of the upper left corner of the decided data, and the coordinates P2 of the lower right corner of the decided data. It is assumed that the font and the character size being used are known. If the font is known, the character size of each character is also known. For example, the handwritten input storage part 25 includes a table in which the vertical and horizontal sizes are registered in correspondence with the Chinese characters. Accordingly, the handwritten input display control part 23 can calculate the coordinates of each Chinese character (for example, the coordinates of the upper left corner and the lower right corner of one square for accommodating one Chinese character), using such registered information.

FIG. 65 illustrates the coordinates xa through xd (y-coordinate is y1 or y2) of the lower right corner of each Chinese character. The handwritten input display control part 23 can easily calculate the coordinates xa through xd. Accordingly, the handwritten input display control part 23 can compare the coordinates xa through xd with the coordinates of the pointing end of the arrow 303, and determine the nearest one of the coordinates xa through xd near the coordinates of the pointing end of the arrow 303, as being the inserting destination between two Chinese characters.

### <Process Flow of Character Insertion>

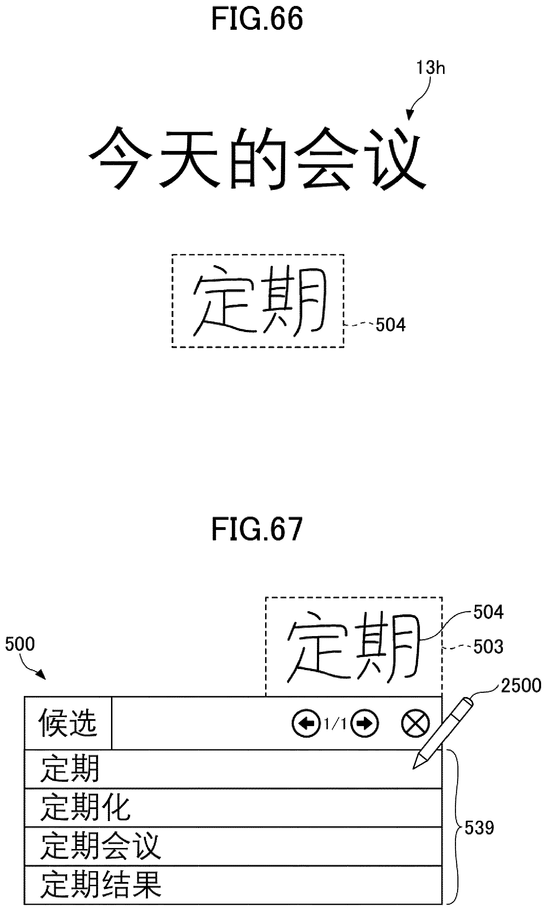

Next, a process flow in which the display device 2 accepts the insertion of the character when performing the Chinese conversion will be described, with reference to FIG. 66 through FIG. 71. FIG. 66 illustrates an example of decided data 13h and the handwritten data 504. In the description of FIG. 66 through FIG. 71, the differences from FIG. 19 through FIG. 24 will mainly be described.

In FIG. 66, the decided data 13h in Chinese, is displayed. In addition, the user handwrites the Chinese character string " 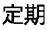 " in order to insert this Chinese character string (or word).

FIG. 67 illustrates an example of the operation guide 500 displayed with respect to the Chinese character string " 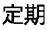 ". The character string candidates 539 that are displayed in this example include four candidates. The user can select the Chinese character string " 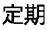 " by pressing the same with the pen 2500. The handwritten input display control part 23 accepts the selection of the Chinese character string " 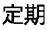 ".

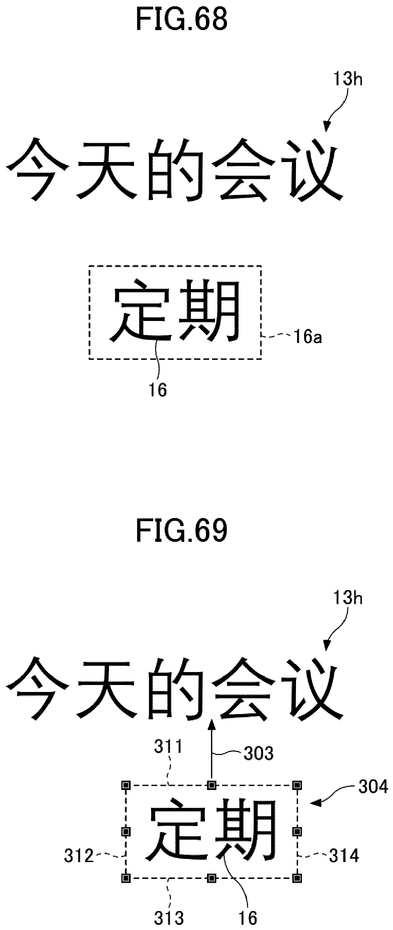

FIG. 68 illustrates a state where the selected Chinese character string " 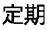 ", which is accepted, is displayed. The Chinese character string " 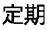 ", which is the selected data 16 (also the decided data), is displayed at the position where the Chinese character string " 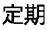 " " is handwritten by the user. The frame 16a indicated by a dotted line and surrounding the selected data 16 may be displayed for a predetermined time after the conversion, or may not be displayed at all.

FIG. 69 illustrates an example of the arrow 303 that is displayed when the user selects " 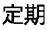 " as the selected data 16. In other words, when the user selects " 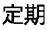 " by the enclosure line or bar, the operation guide 500 is once displayed. When the user starts to drag the selected data 16, the operation guide 500 is erased. The handwritten input display control part 23 starts the display of the arrow 303, or starts the display of the arrow 303 according to the distance from the decided data 13h.

The method and timing for determining the position where the handwritten input display control part 23 displays the arrow 303 may be the same as in the case of processing Japanese.

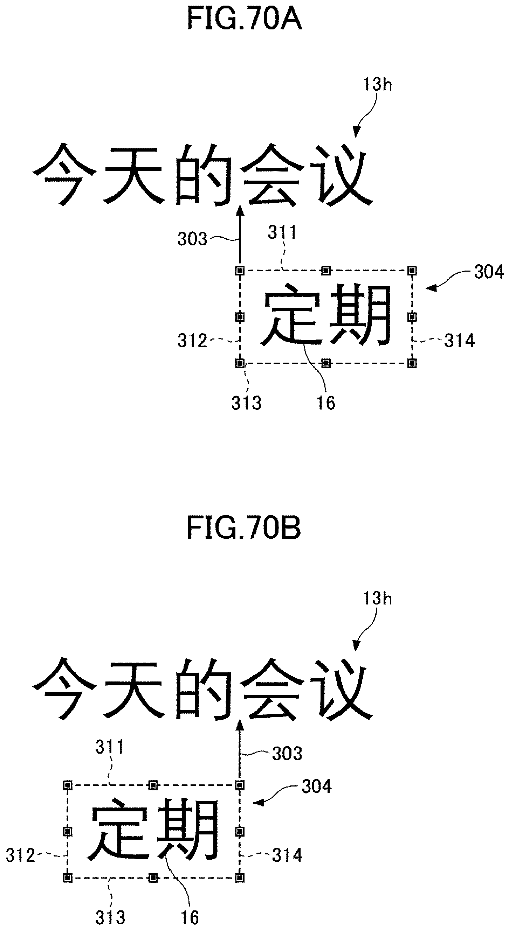

As illustrated in FIG. 70A and FIG. 70B, the position of arrow 303 is not limited to the center of the side surrounding " 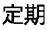 ". FIG. 70A and FIG. 70B illustrate examples of the position of the arrow 303. In FIG. 70A, the arrow 303 is displayed on the left end of the side surrounding " 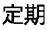 ", and in FIG. 70B, the arrow 303 is displayed on the right end of the side surrounding " 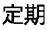 ". The arrow 303 may be displayed anywhere on the side.

When the distance between the decided data 13h and the coordinates of the pointing end of the arrow 303 is less than the threshold value of the insertion determination condition 408, the character string insertion control part 41 inserts the selected data 16 " 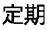 " between two Chinese characters of the decided data 13h, nearest to the coordinates of the pointing end of the arrow 303.

In FIG. 69, FIG. 70A, and FIG. 70B, because the position between the two Chinese characters nearest to the coordinates of the pointing end of the arrow 303, is the position between the Chinese characters " 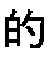 " and " 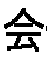 ", the character string insertion control part 41 inserts the character string " 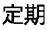 " between the two Chinese characters " 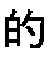 " and " 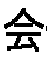 ".

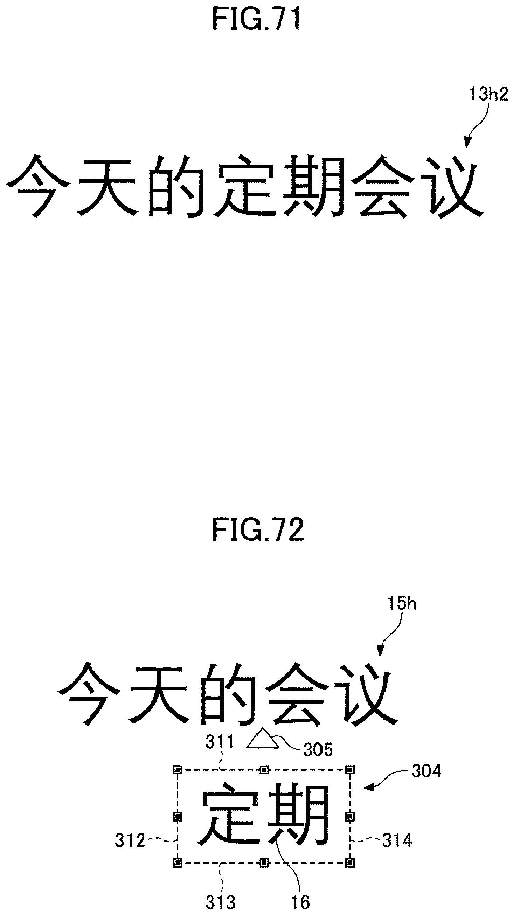

FIG. 71 illustrates a character string including " 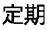 " inserted into the decided data. By inserting " 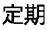 ", the original Chinese character string meaning "Today's meeting" is changed to a Chinese character string meaning "Today's regular meeting", and displayed. At the time of the insertion, the character string insertion control part 41 acquires the first coordinates (PI in FIG. 65) at the beginning of the original decided data, and deletes the decided data 13h and the selected data 16. The character string insertion control part 41 displays a decided data 13h2 meaning "Today's regular meeting", from the first coordinates at the beginning of the original decided data. The character string insertion control part 41 may additionally display " 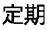 " (meaning "regular") and subsequent Chinese characters next to " 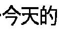 " (meaning "Today's"), without deleting " 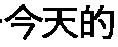 ".

### <Handwriting Direction of Decided Data and Handwriting Direction of Selected Data>

In FIG. 66 through FIG. 71, the handwriting direction of the decided data is horizontal, and the handwriting direction of the selected data (" 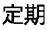 ") is horizontal. The horizontal writing direction is generally used in the case of the Chinese language, examples in which the decided data or the selected data are written vertically, will be omitted. However, the handwriting direction of the decided data 15h may be horizontal, and the handwriting direction of the selected data 16 (" 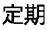 ") may be vertical. Alternatively, the handwriting direction of the decided data 15h may be vertical, and the handwriting direction of the selected data 16 (" 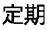 ") may be vertical. Further, the handwriting direction of the decided data 15h may be vertical, and the handwriting direction of the selected data 16 (" 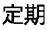 ") may be horizontal.

### <Other Display Examples of Inserting Destination>

As illustrated in FIG. 72, the handwritten input display control part 23 may display the insertion symbol 305 indicating the inserting destination, on the side of the decided data 15h. In the description of FIG. 72, the differences from FIG. 27 will mainly be described. FIG. 72 illustrates an example of the insertion symbol 305 indicating the inserting destination, displayed on the side of the decided data. In FIG. 72, the triangular insertion symbol 305 (an example of the display element or tag) is displayed between the Chinese characters " 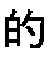 " and " 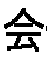 ". The insertion symbol 305 indicates the position of one or more characters with respect to the character string. When the distance between the selected data 16 and the decided data 15h becomes less than the threshold value, the handwritten input display control part 23 displays the insertion symbol 305 between two characters on the side of the decided data 15h, nearest to the center of the side 312 forming the circumscribed rectangle (insertion target frame 304) of the selected data 16. When the user drags and moves the selected data 16, the handwritten input display control part 23 changes the position of the insertion symbol 305 according to the center position of the side 312.

Accordingly, even in the case of the Chinese conversion, the user can grasp the position where the selected data is to be inserted based on the position of the insertion symbol 305, even if the arrow 303 is not displayed.

In the case of the Chinese conversion, the operating procedure may be the same as in FIG. 28 through FIG. 33 and FIG. 34.

### <Notable Advantageous Features>

According to this embodiment, even in the case of the Chinese conversion, because the display device 2 displays the arrow 303 indicating the position of one or more characters with respect to the character string, it is possible to clarify the relative positions of the character string and the one or more characters. Even if the number of characters of the insertion target is large, the user can easily insert the characters or the like at the desired inserting position.

### [Fourth Embodiment]

Other configurations of the display device 2 will be described for the embodiments described in the following.

### <First Example of Display Device Configuration>

In the embodiments described above, it is assumed that the display device 2 includes a large touchscreen panel. However, the display device 2 is not limited to the touchscreen panel.

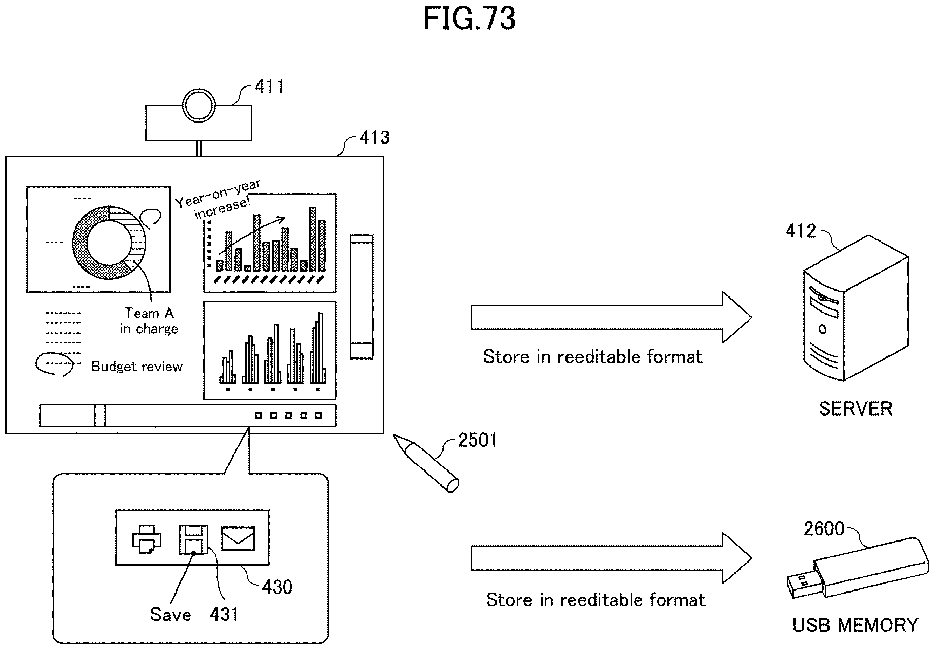

FIG. 73 illustrates another configuration example of the display device 2. In FIG. 73, a projector 411 is provided above a conventional whiteboard 413. This projector 411 corresponds to the display device 2. The conventional whiteboard 413 is not a flat panel display integral with the touchscreen panel, but is a whiteboard on which the user writes directly with a marker pen. The whiteboard may be a blackboard, and simply needs to have a sufficiently large flat surface that enables images to be projected thereon.

The projector 411 includes an ultra short focus optical system, so that low-distortion images can be projected onto the whiteboard 413 from a distance of approximately 10 cm. The images may be transmitted from a PC or the like having a wireless or wired connection to the projector 411. Alternatively, the images may be stored in the projector 411.

The user handwrites on the whiteboard 413 using a dedicated electronic pen 2501. The electronic pen 2501 has a light emitting part at a tip portion, for example, and the light emitting part turns on when the user presses the pen tip against the whiteboard 413 for handwriting. The wavelength of light emitted from the light emitting part is near-infrared or infrared, and is invisible to the user's eyes. The projector 411 includes a camera that captures the light emitting part and analyzes the captured image to determine the direction of the electronic pen 2501. The electronic pen 2501 emits a sound wave together with the light, and the projector 411 calculates a distance from the electronic pen 2501 according to the arrival time of the sound wave. The projector 411 can identify the position of the electronic pen 2501 from the determined direction and the calculated distance. A stroke is drawn (projected) at the position of the electronic pen 2501.

Because the projector 411 projects a menu 430, when the user presses a button with the electronic pen 2501, the projector 411 identifies pressed button from the position of the electronic pen 2501 and an on-signal of a switch. For example, when a store button 431 is pressed, a stroke (a set of coordinates)handwritten by the user is stored in the projector 411. The projector 411 stores handwritten information in a predetermined server 412, a USB memory 2600, or the like. The handwritten information may be stored in units of pages. The coordinates are stored instead of the image data, to facilitate reediting thereof by the user. In this embodiment, however, the display of the menu 430 is not essential, because the operation commands can be called and accessed by the handwriting.

### [Fifth Embodiment]

### <Second Example of Display Device Configuration>

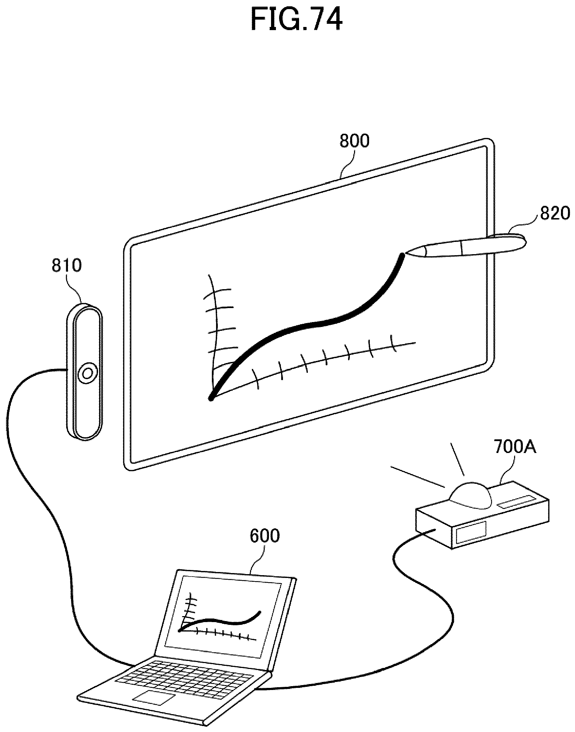

FIG. 74 is a diagram illustrating another configuration example of the display device 2. In the example illustrated in FIG. 74, the display device 2 includes a terminal device 600, an image projector device 700A, and a pen operation detecting device 810.

The terminal device 600 is wire-connected to the image projector device 700A and the pen operation detecting device 810. The image projector device 700A projects the image data input from the terminal device 600 onto a screen 800.

The pen operation detecting device 810 communicates with an electronic pen 820, and detects the operation (or motion) of the electronic pen 820 in a vicinity of the screen 800. More particularly, the electronic pen 820 detects coordinate information indicating a point on the screen 800 indicated (or pointed)) by the electronic pen 820, and transmits the coordinate information to the terminal device 600.

The terminal device 600 generates image data of a stroke image input by the electronic pen 820, based on the coordinate information received from the pen operation detecting device 810. The terminal device 600 control the image projector device 700A to draw the stroke image on the screen 800.

In addition, the terminal device 600 generates superimposed image data representing a superimposed image composed of a background image projected by the image projector device 700A and the stroke image input by the electronic pen 820.

### [Sixth Embodiment]

### <Third Example of Display Device Configuration>

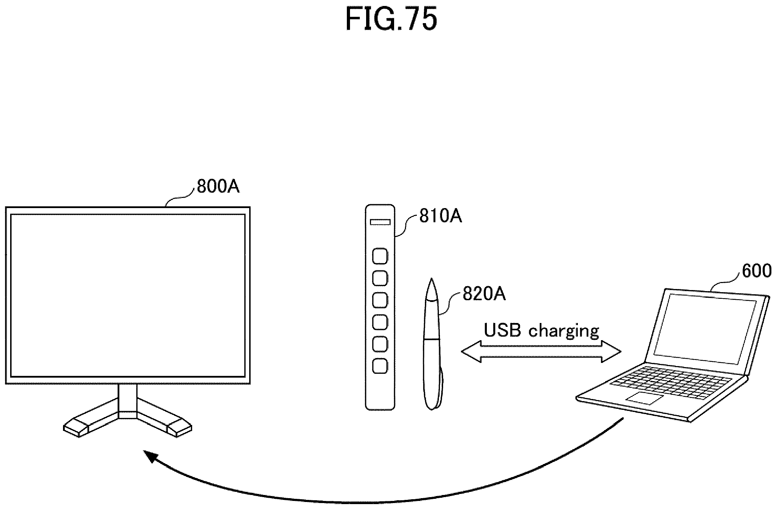

FIG. 75 is a diagram illustrating another configuration example of the display device 2. In the example illustrated in FIG. 75, the display device 2 includes a terminal device 600, a display 800A, and a pen operation detecting device 810A.

The pen operation detecting device 810A is arranged near the display 800A, and detects coordinate information indicating a point on the display 800A indicated (or pointed) by an electronic pen 820A, and transmits the coordinate information to the terminal device 600. In the example illustrated in FIG. 75, the electronic pen 820A may be charged by the terminal device 600 via a USB connector.

The terminal device 600 generates image data of a stroke image input by the electronic pen 820A, and displays the image data on the display 800A based on the coordinate information received from the pen operation detecting device 810A.

### [Seventh Embodiment]

### <Fourth Example of Display Device Configuration>

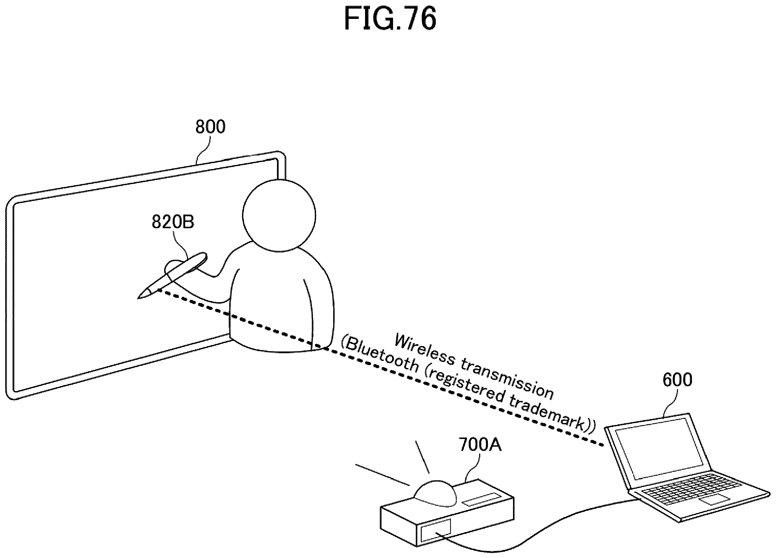

FIG. 76 is a diagram illustrating another configuration example of the display device 2. In the example illustrated in FIG. 76, the display device 2 includes a terminal device 600 and an image projector device 700A.

The terminal device 600 performs a wireless communication with an electronic pen 820B, via Bluetooth (registered trademark) or the like, and receives coordinate information of a point on the screen 800 indicated (or pointed) by the electronic pen 820B. The coordinate information may be obtained by detecting fine position information formed on the screen 800 by the electronic pen 820B. Alternatively, the coordinate information may be received from the screen 800.

The terminal device 600 generates the image data of the stroke image input by the electronic pen 820B, based on the received coordinate information, and controls the image projector device 700A to project the stroke image.

The terminal device 600 generates superimposed image data representing a superimposed image composed of a background image projected by the image projector device 700A and the stroke image input by the electronic pen 820B.

As described above, each of the above described embodiments can be applied to various system configurations.

### <Other Applications>

While preferred embodiments of the present invention are described above with reference to examples, various variations, modifications, and substitutions may be made thereto without departing from the spirit and scope of the present disclosure.

The display device 2 stores the decided data as character codes, and stores the handwritten data as coordinate point data. In addition, the decided data and the handwritten data may be stored in various types of storage media, or stored in a storage device connected to a network, and reused later by downloading the stored data from the display device 2. The display device 2 which reuses the stored data may be any display device, or a general-purpose information processing apparatus. Accordingly, the user can continue the meeting or the like by reproducing the handwritten contents on a different display device 2.

For example, the display method of the embodiments is suitably applicable to an information processing apparatus having a touchscreen panel. Devices having the same function as the display device are also referred to as electronic chalkboards, electronic whiteboards, electronic information boards, interactive boards, or the like. The information processing apparatus having the touchscreen panel may be an output device such as a projector (PJ), a digital signage, or the like, a Head Up Display (HUD) device, an industrial machine, an imaging device, a sound collector, a medical device, a network home appliance, a lap-top Personal Computer (PC), a cellular phone, a smartphone, a tablet terminal, a game device, a Personal Digital Assistant (PDA), a digital camera, a wearable PC, a desktop PC, or the like, for example.

In the embodiments, the coordinates of the pen tip are detected by the method of detecting the coordinates of the pen tip by the touchscreen panel. However, the display device 2 may detect the coordinates of the pen tip using ultrasonic waves. In addition, the pen may emit ultrasonic waves together with light, and the display device 2 may calculate the distance from the pen according to the arrival time of the ultrasonic waves. The display device 2 can locate the position of the pen from the detected direction and the calculated distance. The projector can draws (projects) the pen's trajectory as a stroke.

In the embodiments, the operation command candidates for the editing system and the decorating system are displayed when the selected data are present, and the operation command candidates for the input and output system are displayed when the selected data is not present. However, the display device 2 may simultaneously display the operation command candidates for the editing system, the decorating system, and the input and output system.

Further, the configuration example such as that of FIG. 6 is divided according to the main function, in order to facilitate understanding of the processes of the display device 2. The present disclosure is not limited by the method of dividing the processes in units or by names. The processes of the display device 2 can further be divided into smaller processing units depending on the processing contents, for example. Alternatively, one processing unit may be split to include more processes.

According to the embodiments, a part of the processes performed by the display device 2 may be performed by a server which is connected to the display device 2 via a network.

According to each of the embodiments described above, it is possible to provide a display device capable of displaying a display element or tag which indicates the position of one or more characters with respect to a character string.

Although the embodiments and the examples are numbered with, for example, "first," "second," "third," etc., the ordinal numbers do not imply priorities of the embodiments and the examples.

Numerous additional modifications and variations are possible in light of the above teachings. It is therefore to be understood that, within the scope of the appended claims, the disclosure of this patent specification may be practiced otherwise than as specifically described herein.

As can be appreciated by those skilled in the computer arts, this invention may be implemented as convenient using a conventional general-purpose digital computer programmed according to the teachings of the present specification. Appropriate software coding can readily be prepared by skilled programmers based on the teachings of the present disclosure, as will be apparent to those skilled in the software arts. The present invention may also be implemented by the preparation of ASICs or by interconnecting an appropriate network of conventional component circuits, as will be readily apparent to those skilled in the relevant art.

Each of the functions of the described embodiments may be implemented by one or more processing circuits. A processing circuit may encompass a programmed processor. A processing circuit may also encompass devices such as an application specific integrated circuit (ASIC) and conventional circuit components arranged to perform the recited functions.

The processing circuitry is implemented as at least a portion of a microprocessor. The processing circuitry may be implemented using one or more circuits, one or more microprocessors, microcontrollers, ASICs, dedicated hardware, DSPs, microcomputers, central processing units, FPGAs, programmable logic devices, state machines, super computers, or any combination thereof. Also, the processing circuitry may encompass one or more software modules executable within one or more processing circuits. The processing circuitry may further encompass a memory configured to store instructions and/or code that causes the processing circuitry to execute functions.

If embodied in software, each block may represent a module, segment, or portion of code that comprises program instructions to implement the specified logical function(s). The program instructions may be embodied in the form of source code that comprises human-readable statements written in a programming language or machine code that comprises numerical instructions recognizable by a suitable execution system such as a processor in a computer system or other system. The machine code may be converted from the source code, or the like. If embodied in hardware, each block may represent a circuit or a number of interconnected circuits to implement the specified logical function(s).

## Claims

1. A display device (1) for displaying a first character string, comprising:
a display (22) configured to display one or more characters converted from handwritten data; and
a handwritten input display control part (23) configured to display a display element or tag (303, 305) indicating a position of the one or more characters with respect to the first character string.

2. The display device (2) as claimed in claim 1, further comprising:
a handwritten input part (21) configured to accept moving of the one or more characters,
wherein the handwritten input display control part (23) displays the display element or tag (303, 305) according to a positional relationship between the one or more characters and the first character string, caused by the moving of the one or more characters accepted by the handwritten input part.

3. The display device (2) as claimed in claim 2, wherein the positional relationship between the one or more characters and the first character string indicates a distance between the one or more characters and the first character string.

4. The display device (2) as claimed in claim 2, wherein the handwritten input display control part (23) displays the display element or tag (303, 305) when a distance between the one or more characters and the first character string becomes less than a threshold value, or becomes less than or equal to the threshold value.

5. The display device (2) as claimed in claim 2, wherein the handwritten input display control part (23) displays the display element or tag (303, 305) when the handwritten input part (21) starts to move the one or more characters.

6. The display device (2) as claimed in any one of claims 2 to 4, wherein the handwritten input display control part (23) hides the display element or tag (303, 305) when the handwritten input part (21) releases the one or more characters.

7. The display device (2) as claimed in claim 6, wherein
the handwritten input part (21) performs a drag operation to move the one or more characters in a state where the one or more characters are selected, and
the one or more characters are released in response to dropping the one or more characters being dragged.

8. The display device (2) as claimed in any one of claims 1 to 7, wherein the handwritten input display control part (23) displays a frame surrounding the one or more characters, together with the display element or tag (303, 305).

9. The display device (2) as claimed in any one of claims 1 to 8, wherein the display element or tag (303, 305) has an arrow shape (303) with a base end facing the one or more characters, and a pointing end pointing toward the first character string.

10. The display device (2) as claimed in any one of claims 1 to 8, wherein the display element or tag (303, 305) is an insertion symbol (305) displayed between two characters included in the first character string.

11. The display device (2) as claimed in any one of claims 1 to 10, further comprising:
a character string insertion control part (41) configured to insert the one or more characters to a position between two characters where a distance between the first character string and the display element or tag (303, 305) becomes nearest, to generate a second character string,
wherein the handwritten input display control part (23) displays the second character string generated by the character string insertion control part.

12. The display device (2) as claimed in claim 11, wherein
the handwritten input display control part (23) displays the second character string horizontally when the one or more characters are written vertically and the first character string is written horizontally, and
the handwritten input display control part (23) displays the second character string vertically when the one or more characters are written horizontally and the first character string is written vertically.

13. A display method to be implemented by a display device (2) which displays a character string, comprising:
displaying, on a display (22), one or more characters converted from handwritten data; and
displaying, on the display (22), a display element or tag (303, 305) indicating a position of the one or more characters with respect to the character string.

14. A program which, when executed by a computer (201), causes the computer to perform a process comprising:
displaying, on a display (22), one or more characters converted from handwritten data; and
displaying, on the display (22), a display element or tag (303, 305) indicating a position of the one or more characters with respect to the character string.
